(19) Europäisches Patentamt / European Patent Office / Office européen des brevets

(11) **EP 4 509 327 B1**

(12) **EUROPÄISCHE PATENTSCHRIFT**

(45) Veröffentlichungstag und Bekanntmachung des Hinweises auf die Patenterteilung:
**10.09.2025 Patentblatt 2025/37**

(21) Anmeldenummer: **24202952.8**

(22) Anmeldetag: **30.05.2022**

(51) Internationale Patentklassifikation (IPC):
**B42D 25/328** (2014.01)   **B42D 25/324** (2014.01)
**B42D 25/342** (2014.01)   **B42D 25/351** (2014.01)
**B42D 25/373** (2014.01)   **B42D 25/425** (2014.01)

(52) Gemeinsame Patentklassifikation (CPC):
**B42D 25/328; B42D 25/324; B42D 25/342;**
**B42D 25/351; B42D 25/373; B42D 25/425;**
G09F 19/14; G09F 2003/0202; G09F 2003/0276

(54) **FUNKTIONSELEMENT, EIN VERFAHREN ZUR HERSTELLUNG EINES FUNKTIONSELEMENTS UND EIN PRODUKT**

FUNCTIONAL ELEMENT, A METHOD FOR PRODUCING A FUNCTIONAL ELEMENT AND A PRODUCT

ÉLÉMENT FONCTIONNEL, PROCÉDÉ DE FABRICATION D'UN ÉLÉMENT FONCTIONNEL ET PRODUIT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.05.2021 DE 102021114002**
**07.09.2021 DE 102021123069**

(43) Veröffentlichungstag der Anmeldung:
**19.02.2025 Patentblatt 2025/08**

(62) Dokumentnummer(n) der früheren Anmeldung(en) nach Art. 76 EPÜ:
**22732454.8 / 4 347 271**

(73) Patentinhaber: **OVD Kinegram AG**
**6300 Zug (CH)**

(72) Erfinder:
• **FRASCHINA, Corrado**
  **6300 Zug (CH)**
• **MADER, Sebastian**
  **6300 Zug (CH)**
• **WALTER, Harald**
  **6300 Zug (CH)**
• **OBERBOSSEL, Gina**
  **6300 Zug (CH)**

(74) Vertreter: **Zinsinger, Norbert**
**Louis Pöhlau Lohrentz**
**Patentanwälte Partnerschaft mbB**
**P.O.Box 30 55**
**90014 Nürnberg (DE)**

(56) Entgegenhaltungen:
WO-A1-2014/072358   WO-A1-2019/077419
DE-A1- 102007 061 979   US-B2- 8 144 399

**Beschreibung**

Die Erfindung betrifft ein Funktionselement, insbesondere ein Sicherheitselement, ein Dekorelement, eine Produktoberfläche, oder einen Farbstandard, ein Verfahren zur Herstellung eines Funktionselements, insbesondere eines Sicherheitselements, eines Dekorelements, eines Farbstandards, oder insbesondere zur Modifizierung einer Produktoberfläche und ein Produkt, insbesondere ein Sicherheitsdokument oder eine dekorierte Oberfläche.

Produkthersteller stehen vor der Herausforderung durch eine ansprechende Gestaltung ihrer Produkte oder deren Oberflächen die Aufmerksamkeit potentieller Zielgruppen durch Funktionselemente, beispielsweise umfassend eine optische Funktionalität, auf ihre Produkte zu lenken. Ein optisch ansprechendes Auftreten erhöht den Wiedererkennungswert, grenzt von der Konkurrenz ab und verbessert die Fälschungs- und Imitationswahrscheinlichkeit. Eine weitere Herausforderung ist es, Produkte mit einer funktionellen Oberfläche, beispielsweise mit einer Sensorfunktion und/oder mit einer direkt strukturierten Oberfläche, auszustatten, zu modifizieren und/oder zu dekorieren.

Bekannte Funktionselemente weisen beispielsweise Hologramme oder ein computergeneriertes Beugungsgitter auf. Derartige Funktionselemente generieren üblicherweise einen optisch variablen Effekt durch die gezielte Beugung des einfallenden Lichts in die erste und/oder in eine oder mehrere der höheren Beugungsordnungen. In direkter Reflexion erscheinen sie üblicherweise jedoch lediglich als mehr oder weniger spiegelnde Fläche. Andere bekannte Funktionselemente wirken als Interferenzfilter und sind aus einer Anordnung von mehreren leitfähigen und/oder dielektrischen Schichten gebildet, wobei die dielektrischen Schichten unterschiedliche Brechungsindizes aufweisen. Durch die Interferenzfilter generiert diese Art von Funktionselement Farbeffekte in direkter Reflexion.

Weiter ist es bekannt Funktionselemente bereitzustellen, die durch die Kombination eines Farbdrucks mit einem metallischen Spiegel und/oder bekannten bevorzugt metallisierten Reliefstrukturen optische Effekte erzeugen. Problematisch ist dabei jedoch die stets vorhandene und optisch erkennbare Registertoleranz zwischen dem Farbdruck und der darunter liegenden Reliefstruktur und/oder den Begrenzungen der Spiegelfläche. Diese Registertoleranz schränkt daher die Designmöglichkeiten und/oder die Fälschungssicherheit ein. Ferner weist, wenn unterhalb des Farbdrucks eine Spiegelfläche liegt, ein solches Funktionselement keinen Farbkippeffekt auf. Zusätzlich zu ihrer optischen Gestaltung können Funktionselemente auch einen Sicherheitsaspekt erfüllen und sollen beispielsweise die Wiedererkennung und Echtheit eines Produktes gewährleisten. Jedoch stellen Imitationen und Fälschungen von oben genannten Funktionselementen, insbesondere von Sicherheitselementen oder Dekorelementen, eine zunehmende Herausforderung für deren Hersteller dar und können unter anderem zu Sicherheitsrisiken oder zu beachtlichen finanziellen Schäden in der Industrie führen. Des Weiteren hat es sich gezeigt, dass auch die Qualität und das Auftreten von Imitationen und Fälschungen von bekannten Funktionselementen, beispielsweise mittels Dot-Matrix und Kinemax-Origination-Maschinen, zunehmen.

WO 2014/072358 A1 beschreibt einen Mehrschichtkörper sowie ein Verfahren zur Herstellung eines Sicherheitselements. DE 10 2007 061979 A1 beschreibt ein Sicherheitselement für Sicherheitspapiere, Wertdokumente und dergleichen, mit einem einfallende elektromagnetische Strahlung selektiv beeinflussenden Merkmalsbereich. WO 2019/077419 A1 beschreibt eine optische Schaltvorrichtung. US 8 144 399 B2 beschreibt ein Bilddarstellungssystem das mikrostrukturierte Symbolelemente verwendet.

Benötigt werden daher neuartige Funktionselemente mit optischen Effekten auf Basis von Strukturen, welche ohne Hilfsmittel optisch überprüfbar und/oder erkennbar sind (1st Line Features) und sich im Erscheinungsbild klar von den optischen Effekten auf Basis der Herstellungsmöglichkeiten der oben genannten Origination-Maschinen unterscheiden und nicht durch diese reproduziert werden können und die Aufmerksamkeit der Zielgruppe durch neuartige optische Effekte auf sich lenken.

Der Erfindung liegt daher die Aufgabenstellung zugrunde, ein verbessertes Funktionselement sowie ein Verfahren zur Herstellung eines verbesserten Funktionselements oder insbesondere zur Modifizierung einer Produktoberfläche und ein Produkt umfassend das verbesserte Funktionselement anzugeben, welches sich durch neuartige funktionale Strukturen auszeichnet.

Die Aufgabe wird mit einem Funktionselement, insbesondere einem Sicherheitselement, einem Dekorelement, einer Produktoberfläche, oder einem Farbstandard, nach Anspruch 1 gelöst.

Die Aufgabe wird weiter mit einem Verfahren zur Herstellung eines Funktionselements, insbesondere eines Sicherheitselements, eines Dekorelements oder eines Farbstandards, oder insbesondere zur Modifizierung einer Produktoberfläche durch ein Funktionselement, nach Anspruch 15 gelöst.

Weiter wird die Aufgabe durch ein Produkt, insbesondere ein Sicherheitsdokument oder eine dekorierte Oberfläche, nach Anspruch 17 gelöst.

Unter Funktionselement ist vorzugweise ein Element zu verstehen, dass vorzugsweise eine Funktion bereitstellt, wobei diese Funktion beispielsweise Sicherheit, Dekoration und/oder optische Funktionalität sein kann. Das Funktionselement kann beispielsweise in einem Produkt angeordnet werden, so dass das Produkt von der Funktionalität des Elements profitieren kann.

So kann das Funktionselement beispielsweise als Folie, insbesondere als eine Laminierfolie oder Labelfolie oder eine Transferfolie, gestaltet sein. Weiter ist es auch möglich, dass das Funktionselement auf einem Produkt angeordnet ist, welches als Folie, insbesondere Mehrschichtfolie, gestaltet ist, wobei das Funktionselement eine oder mehrere Schichten des Produkts ausbildet.

Die Profilform, die Gitterperiode Λ und/oder die Relieftiefe t der zumindest einen ersten Reliefstruktur wird insbesondere so gewählt, dass in zumindest einem ersten Einfalls- und/oder Ausfallswinkel ein farbiger, insbesondere ein goldener oder kupferner, erster Farbeindruck in dem zumindest einen Teilbereich des zumindest einen ersten Bereich, in welchem die Metallschicht angeordnet ist, in direkter Reflexion entsteht. Hierbei wird das zumindest in einem ersten Einfallswinkel einfallende und von der zumindest einen, die Reliefstruktur aufweisenden, Metallschicht direkt reflektierte bzw. durch die zumindest eine Metallschicht direkt transmittierte Lichts verändert, insbesondere durch Plasmonen-Resonanz der zumindest einen Metallschicht verändert.

Die Relieftiefe t wird durch die Beabstandung der Maxima der Erhebung der zumindest einen ersten Reliefstruktur von der Grundfläche in einer senkrechten auf der Grundfläche stehenden Richtung bestimmt. Die Gitterperiode Λ entspricht der Beabstandung in x-Richtung oder y-Richtung zwischen den Maxima zweier Erhebungen bzw. Minima zweier Vertiefungen, wobei diese nur von einer Vertiefung bzw. Erhebung getrennt sind.

Unter Bereich wird hierbei insbesondere jeweils eine definierte Fläche einer Schicht oder Folie oder Ebene oder Lage verstanden, die bei Betrachtung senkrecht zu einer von einer Schicht, insbesondere von der zumindest einen Reliefstruktur, ausgebildeten Ebene eingenommen wird. So weist beispielsweise das Funktionselement die Reliefstruktur zumindest in einem ersten Bereich auf, kann aber auch weitere Bereiche aufweisen. Die Bereiche können weiter in Teilbereiche und/oder Zonen und/oder Zonenbereiche unterteilt sein. Als x-Richtung und y-Richtung sind die Raumrichtungen bezeichnet, welche die Ebene des Bereichs aufspannen.

Schichten können oberhalb und/oder unterhalb anderer Schichten angeordnet sein, wobei unter den Bezeichnungen unterhalb und/oder oberhalb hierbei insbesondere die Anordnung von Schichten in Bezug auf eine andere Schicht bei Betrachtung durch einen Betrachter aus einer Betrachtungsrichtung verstanden wird. So ist es zweckmäßig, wenn die Bezeichnungen unterhalb und/oder oberhalb ein Bezugssystem darstellen. Vorzugsweise ist die Betrachtungsrichtung so gewählt, dass eine Schicht senkrecht auf eine von einer Schicht aufgespannten Ebene betrachtet wird. Abweichungen hiervon werden zweckmäßig mit einem Winkel in Grad zur Normalen angegeben.

Plasmonen werden die quantisierten Schwankungen der Ladungsträgerdichte in Halbleitern und Metallen genannt, wobei sie quantenmechanisch als Quasiteilchen behandelt werden. Ferner ist der Begriff Plasmon eine gebräuchliche Abkürzung für Plasmaschwingungsquanten. Die Plasmonen-Resonanz in den erfindungsgemäßen Funktionselementen fällt unter die Kategorie Plasmon-Polariton.

Unter Farbe oder Farbigkeit oder Einzelfarbe oder Einzelfarbigkeit wird ein Farbort in einem Farbraum verstanden. Der Farbraum kann insbesondere der CIELAB-Farbraum sein. Der Farbraum kann auch der RGB-Farbraum (R = Rot; G = Grün; B = Blau) oder der CMYK-Farbraum (C = Cyan; M = Magenta; Y = Gelb; K = Schwarz) oder Farbräume wie RAL, HKS oder der Pantone®-Farbraum sein.

Unter einer unterschiedlichen oder einer sich unterscheidenden Farbigkeit wird ein Farbabstand dE zweier Farborte in einem Farbraum verstanden. Der Farbraum kann insbesondere der CIELAB-Farbraum sein. Eine ausreichend gut für das menschliche Auge wahrnehmbare unterschiedliche Farbigkeit weist einen Farbabstand dE im CIELAB-Farbraum von mindestens 2, bevorzugt von mindestens 3, besonders bevorzugt von mindestens 5, weiter bevorzugt. von mindestens 10, auf.

Der Farbort, insbesondere im CIELAB-Farbraum, wird üblicherweise mit einem Farbmessgerät, beispielsweise mit einem Spektralphotometer "Datacolor 650", bestimmt.

Der Wert von dE (oder auch Delta E oder ΔE) zwischen den Farborten $(L^*,a^*,b^*)_p$ und $(L^*,a^*,b^*)_v$ wird als euklidischer Abstand berechnet:

$$dE_{p,v} = \sqrt{(L_p^* - L_v^*)^2 + (a_p^* - a_v^*)^2 + (b_p^* - b_v^*)^2}$$

Dabei steht der Helligkeitswert L* senkrecht auf der Farbebene (a*,b*). Die a-Koordinate gibt die Farbart und Farbintensität zwischen Grün und Rot an und die b-Koordinate die Farbart und die Farbintensität zwischen Blau und Gelb. Je größer positive a- und b- Werte und je kleiner negative a- und b-Werte, umso intensiver der Farbton. Falls a=0 und b=0, liegt ein unbunter Farbton auf der Helligkeitsachse vor. Üblicherweise kann L* Werte zwischen 0 und 100 annehmen und a und b können zwischen -128 und +127 variieren. Die Werte für dE, L*,a* und b* sind einheitenlos.

Durch die Erfindung wird es ermöglicht, Funktionselemente mit einem optischen Erscheinungsbild bereitzustellen, welches sich deutlich von den bisher bekannten silbrig glänzenden und/oder regenbogenfarbigen Hologramm-Effekten abhebt. Das optische Erscheinungsbild des erfindungsgemäßen Funktionselements zeichnet sich vielmehr durch einen definierten und weitgehend einfarbigen goldenen oder kupfernen ersten Farbeindruck aus, welcher unter normalen Betrachtungsbedingen in direkter Reflexion und oder Transmission zu sehen ist. Bevorzugt ist hierbei die insbesondere metallisierte Reliefstruktur in eine transparente polymere Schicht mit einem Brechungsindex bevorzugt im Bereich von ca. 1,4 bis 1,6, insbesondere von 1,4 bis 1,6, eingebettet und/oder wird von einer solchen polymeren Schicht überdeckt.

Der erste Farbeindruck ist in direkter Reflexion über einen relativ breiten Kippwinkelbereich von insbesondere mindestens 0° bis 30° zur Normalen der durch das Funktionselement aufgespannten Ebene stabil.

Erst bei einem größeren Winkel, beispielsweise bei einem Kippwinkel im Bereich von 30° bis 60°, wird in direkter Reflexion - also $\alpha_{in} = \alpha_{ex}$ ($\alpha_{in}$ ist der Winkel des einfallenden Lichts und $\alpha_{ex}$ der Winkel des reflektierten Lichts) - ein zweiter Farbeindruck, z. B. in Magenta oder in Hellgrün, sichtbar. Die direkte Reflexion wird auch als Nullte Beugungsordnung bezeichnet.

Neben der Farbstabilität beim Verkippen um eine gedachte Kippachse wird der erste Farbeindruck durch das menschliche Auge auch als stabil, also als invariabel beim Drehen des Funktionselements um eine gedachte Drehachse wahrgenommen, welche senkrecht auf der von der zumindest einen Metallschicht aufgespannten Ebene steht. Diese Farbstabilität beim Drehen des Funktionselements liegt nicht nur bei senkrechter Betrachtung - also bei $\alpha_{in} = \alpha_{ex} = 0°$ - vor, sondern auch bei gekippter Betrachtung des Funktionselements, insbesondere im Kippwinkelbereich 0° bis 30° zur Normalen der durch das Funktionselement aufgespannten Ebene. Mit anderen Worten ist der durch das menschliche Auge wahrgenommene erste Farbeindruck unabhängig bzw. nahezu unabhängig von der Orientierung der Gitterstruktur.

Durch diese Stabilität des ersten Farbeindrucks gegenüber Verkippen über einen größeren Winkelbereich unterscheidet er sich deutlich von den sogenannten Regenbogenfarbeffekten erster oder höherer Ordnung von Diffraktionsgittern, welche oftmals bereits schon beim Verkippen um 10° eine Vielzahl von Regenbogenfarben generieren. Ferner erscheinen die Regenbogenfarbeffekte von Diffraktionsgittern nicht in direkter Reflexion, sondern lediglich unter anderen mit der Beugungsgleichung berechenbaren Winkeln.

Erst bei Kippwinkelbereichen von 60° oder mehr, kommt es zu einem Aufleuchten eines dritten Farbeindrucks, welcher der ersten Beugungsordnung entspricht. Dieser dritte aufleuchtende Farbeindruck ist bei einer Betrachtungsrichtung beispielsweise senkrecht auf das Funktionselement für einen Betrachter nicht sichtbar und wird auch "Latent-Effekt" bezeichnet.

Im Unterschied zu herkömmlichen Farbeindrücken, basierend auf Absorption von Licht bestimmter Wellenlängen in organischen Farbstoffen oder Farbpigmenten, entsteht der in diesem Dokument beschriebene Farbeindruck bevorzugt durch Absorption von Licht bestimmter Wellenlängen in einer Metallschicht. Eine Metallschicht ist insbesondere resistenter gegen Lichtinduzierte Veränderungen als organische Verbindungen. Dies ergibt den Vorteil, dass das von organischen Farbstoffen oder Farbpigmenten her bekannte Ausbleichen infolge von Bestrahlung mit sichtbarem Licht oder auch Licht mit UV-Strahlungsanteil bei dem erfindungsgemäßen Farbeindruck nicht auftritt. Der Farbeindruck ist insbesondere lichtecht. Zusammen mit der Farbstabilität über einen relativ breiten Kippwinkelbereich sowie beim Drehen des Funktionselementes eignet sich der gold- oder kupferfarbene Farbeindruck somit insbesondere als lichtechte Referenzfarbe in einem Design oder auch als lichtechter Farbstandard.

Weiter wird durch die Erfindung auch die Produktion kostengünstiger Funktionselemente im Vergleich zu bekannten Funktionselemente mit Interferenzfiltern, beispielsweise Fabry-Perot-Filtern, ermöglicht.

Vorteilhafterweise können die bei dem erfindungsgemäßen Funktionselement auftretenden Farbeffekte auch nicht mittels üblicher holographischer Techniken nachgeahmt werden und auch nicht mittels Dot-Matrix und Kinemax-Origination-Maschinen kopiert werden, sodass auch hierdurch eine zusätzliche Erhöhung der Fälschungssicherheit bewirkt wird.

Da die Farben bzw. die Farbeindrücke der Erfindung durch eine insbesondere metallisierte Struktur selbst entstehen, werden Funktionselemente ermöglicht, deren gold- oder kupferfarbene Bereiche in Designs, beispielsweise mit silbernen Bereichen klassischer Funktionselemente wie Diffraktionsgittern, ohne jegliche Registertoleranz, also im perfekten Register zueinander, integriert werden.

Durch solch eine Kombination lassen sich prägnante und schwer zu imitierende Funktionselemente mit mehreren Farbeindrücken in zueinander benachbarten Flächenbereichen wie beispielsweise schwarz, rot, silbern, golden und kupferfarben erzeugen, wobei die entsprechenden Flächenbereiche und damit deren Farbeindrücke im perfekten Register zueinander vorliegen. Fälscher, welche eine Imitation eines solchen Funktionselements, beispielsweise Sicherheitselements, insbesondere umfassend eine Kombination verschiedener Bereiche durch Aufdrucken einer oder mehreren zusätzlichen Farbe anstreben, können jedoch das genannte perfekte Register nicht erreichen. Weiter würde der optisch variable Farbkippeffekt vom ersten Farbeindruck zu dem zweiten Farbeindruck, das heißt der Wechsel der optischen Effekte innerhalb des jeweiligen Flächenbereichs durch Änderung des Kippwinkels sowie der Latent-Effekt bei einem weiteren Ändern des Kippwinkels fehlen und somit auch einem ungeschulten Auge ermöglichen, ein entsprechendes Funktionselement, beispielsweise Sicherheitselement, als Fälschung zu identifizieren.

Unter registriert oder Register bzw. passergenau bzw. registergenau oder Passergenauigkeit oder Registergenauigkeit ist eine Lagegenauigkeit zweier oder mehrerer Schichten relativ zueinander zu verstehen. Dabei soll sich die Registergenauigkeit innerhalb einer vorgegebenen Toleranz bewegen und dabei möglichst gering sein. Gleichzeitig ist die Registergenauigkeit von mehreren Elementen und/oder Schichten zueinander ein wichtiges Merkmal, um die Prozesssicherheit und/oder die Produktqualität und/oder die Fälschungssicherheit zu erhöhen. Die lagegenaue Positionierung kann dabei insbesondere mittels sensorisch, vorzugsweise optisch detektierbarer Passermarken oder Registermarken erfolgen. Diese Passermarken oder Registermarken können dabei entweder spezielle separate Elemente oder Bereiche oder Schichten darstellen oder selbst Teil der zu positionierenden Elemente oder Bereiche oder Schichten sein.

Weitere vorteilhafte Ausgestaltungen der Erfindung sind in den abhängigen Ansprüchen bezeichnet.

Gemäß einem bevorzugten Ausführungsbeispiel der Erfindung ist die Profilform der zumindest einen ersten Reliefstruktur in x-Richtung und/oder y-Richtung asymmetrisch ausgestaltet. Mit anderen Worten ist die Profilform der zumindest einen ersten Reliefstruktur in x-Richtung und/oder y-Richtung insbesondere nicht symmetrisch ausgestaltet. Weiter ist es vorteilhaft, wenn die Profilform insbesondere über die Relieftiefe t hinweg kontinuierlich oder stufenweise variiert. Dies bietet den Vorteil, dass die Profilform der zumindest einen ersten bevorzugt metallisierten Reliefstruktur für den menschlichen Betrachter einen deutlich sichtbareren und klareren Farbeindruck bei typischer Betrachtung als beispielsweise symmetrische Profilformen erzeugt. Vorteilhafterweise wird das anregende elektrische Feld durch die asymmetrische Profilform stärker beispielsweise an den schmalen Spitzen der Reliefstruktur lokalisiert. Dies kann zu einer ausgeprägteren Resonanz und Absorption führen. Des Weiteren unterscheidet sich die Anregung der Plasmonen auf beiden Seiten der asymmetrischen Profilformen, so dass einfallendes Licht einen unterschiedlichen Effekt generiert, je nach dem, auf welche der Oberflächen das Licht eingestrahlt wird.

Symmetrische Profilformen sind beispielsweise sinusförmig oder rechteckförmig oder binär. Mit anderen Worten weisen symmetrische Profilformen eine Spiegelsymmetrie auf, wenn die Grundfläche als Spiegelebene herangezogen wird. Hierbei bleibt die Profilform bei dieser Spiegelung gleich, die Reliefstruktur wird lediglich um eine halbe Gitterperiode $\Lambda$ verschoben. Erfindungsgemäß weisen asymmetrische Profilformen keine Spiegelsymmetrie in der von der Grundfläche aufgespannten Ebene auf.

Weiter ist es auch möglich, dass die periodische Variation der zumindest einen ersten Reliefstruktur zumindest bereichsweise mit einer zufälligen und/oder pseudo-zufälligen Variation überlagert ist.

Des Weiteren ist auch möglich, die periodische Variation der zumindest einen ersten Reliefstruktur zumindest bereichsweise auf eine Mikrostruktur, insbesondere auf eine Fresnel-Linse und/oder eine Fresnel-Freiformfläche und/oder auf Mikrospiegel und/oder auf Blazegitter, insbesondere mit einer Gitterperiode von mehr als 5 $\mu$m, und/oder auf Computer-Generierte Hologramm (CGH)-Strukturen, zu überlagern.

Hierdurch ist es möglich, neben den optischen Effekten der zumindest einen ersten Reliefstruktur, wie stabiler Farbeindruck, Farbkippeffekt und "Latent-Effekt", gleichzeitig den optischen Effekt der Mikrostruktur selbst zu realisieren oder die optischen Effekte beider Strukturen zu kombinieren. So werden beispielsweise Bereiche, welche durch die Mikrostruktur, beispielsweise Fresnel-Freiformflächen, ein virtuell aus der Oberfläche herausragender oder hinter die Oberfläche zurückspringender optischer Wölbungseffekt nicht achromatisch wahrgenommen, sondern als ein goldfarbener oder kupferfarbener derartiger optischer Wölbungseffekt.

Bei Überlagerung einer Blazegitter-Struktur, insbesondere mit einer Gitterperiode von mehr als 5 $\mu$m, das heißt mit schräg gestellten makroskopischen Flächen, mit der ersten Reliefstruktur kommt es zu einer entsprechenden Verkippung der ersten Reliefstruktur um den Winkel der schräg gestellten makroskopischen Fläche gegenüber einer Grundfläche, wodurch diese so kombinierte Reliefstruktur einen Farbeindruck mit einem größeren Betrachtungswinkelbereich erzeugt. Bei Überlagerung der ersten Reliefstruktur mit einer Fresnel-Linsen-Struktur oder mit Fresnel-Freiformflächen mit variierendem Winkel der Flanken kann bei einer Überlagerung mit der ersten Reliefstruktur auch ein Farbgradient der kombinieren Reliefstruktur realisiert werden.

Es ist bevorzugt, dass für die Werte der Gitterperiode $\Lambda$ der zumindest einen ersten Reliefstruktur in x-Richtung und/oder y-Richtung $\Lambda < 300$ nm, bevorzugt $\Lambda \leq 280$ nm, bevorzugt $\Lambda \leq 260$ nm, gilt. Hierbei entspricht $<$, $>$, $\leq$ und/oder $\geq$ den in der mathematischen Notation üblichen Zeichen. Gitter mit einer derart kleinen Gitterperiode $\Lambda$ werden auch als Subwellenlängengitter bezeichnet. Weiter bevorzugt sind die Werte der Gitterperiode $\Lambda$ der zumindest einen ersten Reliefstruktur in x-Richtung und/oder y-Richtung ausgewählt aus einem Bereich von 150 nm bis 260 nm, bevorzugt von 180 nm bis 250 nm.

Weiter ist es von Vorteil, dass für die Werte der Relieftiefe t der zumindest einen ersten Reliefstruktur in x-Richtung und/oder y-Richtung $t < 0,7 \Lambda$, bevorzugt $t \leq 0,6 \Lambda$, gilt. Der Zahlenwert vor der Gitterperiode $\Lambda$ ist als Faktor zu verstehen, mit dem die Gitterperiode $\Lambda$ multipliziert wird. Werden noch tiefere Gitter gewählt, so führt dies zu einer stärkeren Absorption, welche wiederum in einem vergleichsweise dunkleren Farbeindruck resultiert.

Auch ist es vorteilhaft, dass für die Werte der Relieftiefe t der zumindest einen ersten Reliefstruktur in x-Richtung und/oder y-Richtung $t > 0,2 \Lambda$, bevorzugt $t \geq 0,3 \Lambda$, gilt. Fällt die Relieftiefe niedriger aus, so hat dies den Effekt, dass die Anregung der Plasmonen schwächer ist, wobei dann die entstandene Farbsättigung lediglich schwach ausgeprägt ausfällt und somit nur ein vergleichsweise heller Farbeindruck, insbesondere ein pastellartiger Farbeindruck, erzielt wird.

Weiter ist es möglich, dass die bevorzugt asymmetrische Profilform der zumindest einen ersten Reliefstruktur so gewählt ist, dass die Breite der Erhebungen und Vertiefungen der zumindest einen ersten Reliefstruktur bezogen auf einen Abstand von t/2 von der Grundfläche mindestens 60 % der Gitterperiode, bevorzugt mindestens 70 % der Gitterperiode und/oder höchstens 40 % der Gitterperiode, bevorzugt höchstens 30 % der Gitterperiode, beträgt. Der Abstand von t/2 von der Grundfläche wird auch als Halbwertsbreite bezeichnet. Es wird somit der Abstand benachbarter Flanken der zumindest einen ersten Reliefstruktur bei einer Relieftiefe von t/2 bestimmt. Durch eine derartige Ausgestaltung werden besonders starke und definierte Farbeindrücke für einen potentiellen menschlichen Betrachter erzielt.

Insbesondere ist es möglich, dass die Flankensteilheit der zumindest einen ersten Reliefstruktur, bezogen auf einen Abstand von t/2 von der Grundfläche einen Wert im Bereich von 60° bis 90°, bevorzugt von 70° und 85°, aufweist.

Unter Flankensteilheit der zumindest einen ersten Reliefstruktur wird hierbei der mit der Grundfläche eingeschlossene Winkel einer in einem Abstand von t/2 von der Grundfläche der ersten Reliefstruktur angelegten Tangente an den Flanken der ersten Reliefstruktur, das heißt angelegt auf halber Höhe der ersten Reliefstruktur, verstanden. Der Abstand von der Grundfläche wird hierbei in einer senkrecht auf der Grundfläche stehenden Richtung bestimmt.

Durch die vorgenannten Werte der Flankensteilheit wird der Vorteil erreicht, dass die Stärke des von der zumindest einen ersten bevorzugt metallisierten Reliefstruktur, insbesondere in direkter Reflexion oder direkter Transmission, generierte Farbeindruck weiter verbessert wird.

Vorzugsweise wird die Flankensteilheit der zumindest einen ersten Reliefstruktur bezogen auf jeden Abstand zwischen 25 % der Relieftiefe und 75 % der Relieftiefe ausgehend von der Grundfläche so gewählt, dass dieser einen Wert ausgewählt aus einem Bereich von 40° bis 90°, bevorzugt von 50° bis 85°, aufweist.

Hierdurch wird die Stärke des Farbeindrucks, welcher durch die zumindest eine erste, insbesondere metallisierte, Reliefstruktur generiert wird, weiter verbessert.

Weiter ist es vorteilhaft, einen Wert für die Flankensteilheit der zumindest einen ersten Reliefstruktur zu wählen, bezogen auf jeden Abstand zwischen 0 % und 25 % der Relieftiefe und/oder zwischen 75 % und 100 % der Relieftiefe ausgehend jeweils von der Grundfläche, der einen Wert aufweist ausgewählt aus einem Bereich von 0° bis 50°, bevorzugt von 0° bis 40°.

Auch hierdurch lässt sich die Stärke des von der zumindest einen bevorzugt metallisierten Reliefstruktur generierte Farbeindruck weiter verbessern.

Die zumindest eine erste Reliefstruktur ist bevorzugt als ein 2D-Gitter, bevorzugt als ein Kreuzgitter und/oder als ein hexagonales Gitter oder als komplexeres 2D-Gitter, ausgebildet. Unter komplexeren 2D-Gittern werden beispielsweise 2D-Gitter mit einer bevorzugt geringfügigen stochastischen Variation der Gitterperiode verstanden. Weiter werden darunter auch 2D-Gitter mit einer periodischen Anordnung über einer Länge von mindestens vier Mal der lokal vorliegenden Gitterperiode und gleichzeitig einer zufälligen Anordnung über Längen von mehr als 100 $\mu$m verstanden. 2D-Gitter weisen in x-Richtung und y-Richtung eine Abfolge von Erhebungen und Vertiefungen auf. Bei einem Kreuzgitter oder einem hexagonalen Gitter wird die Gitterperiode $\Lambda$ der Abfolge von Erhebungen und Vertiefungen bezüglich beider Richtungen vorzugsweise in dem vorstehend angegebenen Bereich gewählt. Hierbei ist die Gitterperiode in x-Richtung und y-Richtung insbesondere gleich. Die Gitterperiode kann aber auch in beiden Raumrichtungen unterschiedlich sein.

Untersuchungen haben weiter gezeigt, dass die Ausbildung der zumindest einen ersten Reliefstruktur als Liniengitter, also einem 1D-Gitter, ungeeignet ist. Dies, da bei diesen Gittern lediglich schwache oder gar keine der angestrebten Farbeindrücke generiert werden. Liniengitter weisen nur in eine Richtung eine periodische Abfolge von Erhebungen und Vertiefungen auf. Vielmehr sind Liniengitter aus geraden oder auch gekrümmten, insbesondere schlangenförmigen, Linien aufgebaut. Vorteilhafterweise wird somit durch die Notwendigkeit von 2D-Gittern die Fälschungssicherheit weiter erhöht, da die Fertigung von Kreuzgittern und/oder hexagonalen Gittern, eine größere Anzahl von aufeinander abgestimmten Prozessschritte benötigt und dadurch eine höhere Hürde für Fälscher darstellt.

Gemäß einer bevorzugten Ausführungsform des erfindungsgemäßen Funktionselements sind die Gitterperiode $\Lambda$ und/oder die Profilform und/oder die Relieftiefe t der ersten bevorzugt metallisierten Reliefstruktur derart ausgestaltet, dass der zumindest eine erste Bereich für einen Einfallswinkel bzw. Betrachtungswinkel von 0° bis 30° eine um mindestens 10 % niedrigere direkte Reflexion des eingestrahlten Lichts in mindestens 75 % des Wellenlängenbereichs von 400 nm bis 500 nm im Vergleich zur direkten Reflexion in mindestens 75 % des Wellenlängenbereichs von 525 nm bis 700 nm aufweist.

Bevorzugt ist es, wenn die Gitterperiode $\Lambda$ und/oder die Profilform und/oder Relieftiefe t der ersten bevorzugt metallisierten Reliefstruktur derart ausgestaltet, dass der zumindest eine erste Bereich eine um mindestens 15 % niedrigere Reflexion des eingestrahlten Lichts in mindestens 70 % des Wellenlängenbereichs von 400 nm bis 500 nm im Vergleich zur Reflexion in mindestens 70 % des Wellenlängenbereichs von 525 nm bis 700 nm aufweist, weiter bevorzugt, dass der zumindest eine erste Bereich eine um mindestens 15 % niedrigere Reflexion des eingestrahlten Lichts in mindestens 90 % des Wellenlängenbereichs von 400 nm bis 500 nm im Vergleich zur Reflexion in mindestens 90 % des Wellenlängenbereichs von 525 nm bis 700 nm aufweist und ferner noch weiter bevorzugt, dass der zumindest eine erste Bereich eine um mindestens 20 % niedrigere Reflexion des eingestrahlten Lichts in mindestens 90 % des Wellenlängenbereichs von 400 nm bis 500 nm im Vergleich zur Reflexion in mindestens 90 % des Wellenlängenbereichs von 525 nm bis 700 nm aufweist.

Zusätzlich zu den bevorzugten Ausgestaltungen der Gitterperiode $\Lambda$ und/oder der Profilform und/oder Relieftiefe t der ersten bevorzugt metallisierten Reliefstruktur, ist es bevorzugt, dass der zumindest eine erste Bereich eine direkte Reflexion des eingestrahlten Lichts in mindestens 90 % des Wellenlängenbereichs von 525 nm bis 700 nm größer als 30 %, bevorzugt größer als 40 %, weiter bevorzugt größer als 50 %, aufweist, damit der erste Farbeindruck nicht als zu dunkel erscheint.

Der Wellenlängenbereich von 400 nm bis 500 nm entspricht insbesondere dem Wellenlängenbereich des violetten und blauen Lichts und der Wellenlängenbereich von 525 nm bis 700 nm entspricht insbesondere dem Wellenlängenbereich des grünen, gelben, orangenen und roten Lichts. Durch obig genannte Ausgestaltung des zumindest einen ersten Bereichs, insbesondere hinsichtlich der Gitterperiode $\Lambda$ und/oder der Profilform und/oder Relieftiefe t, ergibt sich somit, dass der Anteil an blauen und/oder cyanfarbenen reflektierten Licht geringer ist als die Anteile des restlichen reflektierten Lichts des für das menschliche Auge sichtbaren Wellenlängenbereichs, bevorzugt von 400 nm bis 700 nm. Dadurch erscheint für einen Betrachter der erste Farbeindruck in direkter Reflexion mit einem goldenen oder kupfernen Farbton.

Bei den vorstehend angegebenen Werten für die direkte Reflexion handelt es sich insbesondere um gemessene Werte aus Reflexionsspektren in einem Wellenlängenbereich von 400 nm bis 700 nm.

Insbesondere werden die Reflexionsspektren bei senkrechter Beleuchtung und Betrachtung bevorzugt mit dem Spektrometer AvaSpec-2048 der Firma Avantes ermittelt. Die Beleuchtung erfolgt mit der Weißlichtquelle LS-1 mit einer Farbtemperatur von 3100 °K von Ocean Optics über optische Fasern. Bei der Reflexionsmessung wird insbesondere senkrecht ein genau definierter gerichteter Lichtstrahl auf eine Oberfläche gerichtet und das senkrecht zurück reflektierte Licht von einer optischen Faser detektiert. Diese Faser führt das Licht zu dem Spektrometer, welches misst, wieviel Licht von welcher Wellenlänge reflektiert wird. Die Reflexion wird durch Standards vorteilhafterweise auf 100 % kalibriert. Die Dunkelreferenz wird hierbei gegen eine matt-schwarze Oberfläche gemessen und der Weißabgleich des Spektrometers wird gegen einen Aluminiumspiegel durchgeführt. 100 % Reflexion entsprechen somit der Reflexion des Aluminiumspiegels und 0 % der Reflexion der matt-schwarzen Oberfläche. Die gemessene Reflexion beträgt daher bevorzugt einen Wert aus einem Bereich von 0 % bis 100 %.

Bevorzugt ist die zumindest eine Metallschicht aus Aluminium und/oder Silber und/oder Palladium und/oder Platin und/oder Legierungen davon. Insbesondere ist die Metallschicht aus Aluminium oder einer Legierung mit einem Aluminiumgewichtsanteil von mehr als 70 %, bevorzugt von mehr als 90 %, ausgebildet.

Vorzugsweise wird die zumindest eine Metallschicht aus dem Vakuum in dem zumindest einen ersten Teilbereich des zumindest einen ersten Bereich aufgedampft und/oder aufgesputtert. Alternativ dazu kann die zumindest eine Metallschicht auch zunächst vollflächig aufgebracht werden und anschließend in den Bereichen, welche kein Metall aufweisen sollen, wieder entfernt werden. Dies kann durch bekannte Strukturierungsverfahren bzw. Demetallisierungsverfahren erfolgen wie zum Beispiel Ätzverfahren und/oder Waschverfahren und/oder Belichtungsverfahren. Insbesondere kann die zumindest eine Metallschicht so in Bereichen entfernt werden, dass die verbleibenden Metallbereiche im perfekten Register zu Bereichen in denen strukturbasierte Effekte generiert werden vorliegen.

Es ist auch möglich, in die Oberfläche von Metallschichten und/oder von Metallfolien und/oder von Metallkörpern die erfindungsgemäßen Strukturen zu prägen und/oder die erfindungsgemäßen Strukturen mittels Laser (beispielsweise mittels Femtosekunden-Laser) in Oberflächen zu schreiben.

Gemäß einem bevorzugten Ausführungsbeispiel der Erfindung wird die Schichtdicke der zumindest einen Metallschicht so gewählt, dass diese eine optische Dichte (OD) ausgewählt aus einem Bereich von 0,9 bis 3,0, bevorzugt von 1,1 bis 2,5, weiter bevorzugt von 1,6 bis 1,9, aufweist. Insbesondere für eine Betrachtung des Funktionselements in Transmission ist es vorteilhaft, wenn die zumindest eine Metallschicht eine optische Dichte (OD) ausgewählt aus einem Bereich von 1,6 bis 1,9 aufweist.

Hierdurch wird erreicht, dass ausreichend Lichtintensität insbesondere für die Betrachtung des Funktionselements in Transmission durch den Bereich mit der erfindungsgemäßen Struktur tritt. Gleichzeitig erscheinen Bereiche, insbesondere welche keine erfindungsgemäße Struktur oder erfindungsgemäßen Strukturen aufweisen, die deutlich weniger Licht durch eine Metallschicht tretend lassen, ausreichend dunkel, um einen für das menschliche Auge gut wahrnehmbaren Kontrast zu erzeugen.

Weiter wird es hierdurch möglich, ein Funktionselement mit einer Reliefstruktur bereitzustellen, welche in direkter Reflexion eine ausgezeichnete Farbsättigung aufweist. Weiter ist es damit möglich ein Funktionselement bereitzustellen, welches in Auflichtbetrachtung einen ersten optisch variablen Effekt zeigt, und bei Durchlichtbetrachtung einen vierten optischen Effekt zeigt. Im Weiteren ergibt sich bei Durchlichtbetrachtung in Betrachtungsrichtung der große Vorteil, dass ein entsprechender optischer Effekt sichtbar wird, der durch bestehende Technologie nur sehr schwer zu imitieren oder fälschen ist.

Der Parameter optische Dichte (OD) bezieht sich hierbei auf die Transmission (T), also auf die Durchlässigkeit elektromagnetischer Wellen, insbesondere im Wellenlängenbereich von 400 nm bis 700 nm, einer Metallschicht bezogen auf eine unstrukturierte und damit glatte Metallfläche. Der funktionale Zusammenhang zwischen Transmission (T) in Prozent (%) und optischer Dichte (OD) formuliert sich dabei wie folgt: $OD = lg(100/T\ [\%])$. Somit ist die optische Dichte einheitenlos.

Nach vorstehender Gleichung ergeben hohe Transmissionswerte niedrige Werte optischer Dichte und umgekehrt. Der theoretisch größtmögliche Transmissionswert von 100 % bezogen auf die Metallschicht führt somit zu einer optischen Dichte von 0. Dies entspricht einer nicht vorhandenen Metallschicht mit der Dicke von Null. Beispielsweise sinkt die Transmission mit der Zunahme der Schichtdicke der Metallschicht und die optische Dichte steigt an.

Der Grund für die erhöhte Transmission im zumindest einen ersten Bereich der zumindest einen ersten Reliefstruktur liegt wohl an einer erhöhten Plasmonenanregung durch das einfallende Licht, welche durch die Reliefstruktur ermöglicht wird. Damit ist es möglich, ein erfindungsgemäßes Funktionselement bereitzustellen, welches in Auflichtbetrachtung und bei Durchlichtbetrachtung zumindest je einen optisch variablen Effekt zeigt. Es ist weiter möglich, dass bei entsprechender Gestaltung der optische Effekt in Auflichtbetrachtung von dem optischen Effekt in Durchlichtbetrachtung unterschiedlich ist. Weiter ist es bei entsprechender Gestaltung möglich, dass in Auflichtbetrachtung der erfasste optische Effekt betrachtet von einer Seite des Funktionselements unterschiedlich ist zu dem optischen Effekt betrachtet von einer anderen Seite. Mit anderen Worten kann bei jeweiliger Betrachtung von der Vorderseite oder von der Rückseite in Reflexion von einem Beobachter jeweils ein optischer, bevorzugt unterschiedlicher, Effekt erfasst werden.

Es ergibt sich somit der große Vorteil, dass bei direkter Transmission betrachtet in einem senkrechten Winkel auf die von einer Schicht aufgespannten Ebene ein entsprechender optischer Effekt sichtbar sein kann und so ein Funktionselement bereitgestellt wird, welches durch bestehende Technologie nur sehr schwer nachahmbar ist. Weiter sind vergleichbare Effekte beim Einsatz von transmissiven Beugungsstrukturen erster oder höherer Ordnung nicht möglich.

Das erfindungsgemäße Funktionselement ist vorzugsweise als Transferfolie oder als Laminierfolie oder als Sicherheitsfaden ausgebildet und weist bereits eine hohe Vielzahl an Gestaltungsmöglichen auf. Ferner kann das Funktionselement, insbesondere der zumindest eine erste Bereich, vorzugsweise noch ein oder mehrere weitere Schichten ausgewählt aus der Gruppe aufweisen: Replizierschicht, dielektrische Schicht, Schicht aus einem Farbstoff, Schicht aus einem Lumineszenzstoff, lasierende Farbschicht, Maskenschicht, Polymerschicht, Metallschicht, Schutzlackschicht, Kleberschicht, Ablöseschicht, Primerschicht, Barriereschicht, poröse Schicht, Kontrastschicht, Versiegelungsschicht, Haftvermittlerschicht, Trägerschicht, Dekorschicht.

Die vorgenannten Schichten können jeweils einzeln oder auch in beliebiger Kombination miteinander in dem Funktionselement, insbesondere in dem zumindest einen Bereich, oberhalb und/oder unterhalb der zumindest einen ersten Reliefstruktur angeordnet sein. Die Schichten können dabei vollflächig oder auch nur partiell, d. h. bereichsweise, aufgebracht sein. Beispielsweise können eine oder mehrere der Schichten musterförmig angeordnet sein. Mehrere musterförmige Schichten können auch zueinander im Register angeordnet sein. Hierbei erhöht sich die Designvielfalt des Funktionselements vorteilhafterweise noch weiter.

Vorzugsweisende ist das Funktionselement so ausgestaltet, dass eventuell oberhalb und/oder unterhalb der zumindest einen Metallschicht angeordnete ein oder mehrere Schichten des Funktionselements und/oder unterhalb der zumindest einen Metallschicht eventuell vorgesehene ein oder mehrere Schichten des Funktionselements transparent oder semitransparent ausgebildet sind, insbesondere eine Transmission, insbesondere im Wellenlängenbereich von 400 nm bis 700 nm, von mindestens 10 %, bevorzugt von mindestens 25 %, weiter bevorzugt von mindestens 75 %, noch weiter bevorzugt von mindestens 90 %, in zumindest in einem Teilbereich des zumindest einen ersten Bereichs aufweisen.

Hierdurch wird sichergestellt, dass der von der zumindest einen Metallschicht und der zumindest einen ersten Reliefstruktur generierte optische Effekt in Auflichtbetrachtung von der Oberseite, in Auflichtbetrachtung von der Unterseite und/oder in Durchlichtbetrachtung sichtbar ist. Der Farbeindruck des optischen Effekts bei Betrachtung von der Oberseite und von der Unterseite jeweils in Auflichtbetrachtung kann gleich sein. Der Farbeindruck des optischen Effekts kann auch unterschiedlich sein, beispielsweise aufgrund der Profilform der ersten Reliefstruktur und/oder aufgrund von unterschiedlichen Brechungsindizes des jeweiligen Materials oberhalb bzw. unterhalb der zumindest einen Metallschicht. Ein unterschiedlicher Farbeindruck von beispielsweise Goldfarben von der Oberseite betrachtet und rötlich von der Unterseite betrachtet kann für verschiedenartige Funktionselemente wie z. B. für eine Rettungsfolie ohne Verwendung von Farbstoffen oder für Strahlungs- und/oder Wärmemanagement z. B. bei Satelliten oder ähnlichem zum Einsatz kommen.

Das erfindungsgemäße Funktionselement weist beispielsweise eine Trägerfolie, vorzugsweise eine transparente Kunststofffolie bevorzugt aus PET, PC, PE, BOPP mit einer Dicke zwischen 10 $\mu$m und 500 $\mu$m, eine transparente Replizierschicht, bevorzugt aus einem thermoplastischen oder UV-härtbaren Replizierlack, eine Kleberschicht, bevorzugt eine Kaltkleberschicht, eine Heißkleberschicht oder eine UV-härtbare Kleberschicht und eine Polymerschicht, bevorzugt aus bekannten Lacksystemen mit einem Brechungsindex im Bereich von 1,45 bis 1,55, auf.

Weiter weist das erfindungsgemäße Funktionselement vorzugsweise keine zusätzlichen dünnen Schichten aus hochbrechenden Materialien auf, welche insbesondere oberhalb und/oder unterhalb der zumindest einen Metallschicht angeordnet sind. Schichten aus hochbrechenden Materialien können beispielsweise aus ZnS oder $TiO_2$ gebildet sein. Es kann sich aber auch um eine hochbrechende Replizierlackschicht handeln, beispielsweise eine polymere Lackschicht, welche insbesondere mit hochbrechenden Nanopartikeln gefüllt ist. Dies führt einerseits zu einem vereinfachten Herstellungsverfahren da der Verfahrensschritt des Anordnens, beispielsweise Aufdampfen, der hochbrechenden Materialien eingespart wird. Auch kann auf diese speziellen und hochpreisigen Materialien verzichtet werden. So kann folglich ein erfindungsgemäßes Funktionselement besonders kostengünstig in bekannte Produktaufbauten integriert werden und somit kostengünstig gefertigt werden.

In einer speziellen Ausgestaltungsform kann das Funktionselement, insbesondere von der einem Betrachter zugewandten Seite aus gesehen, auf der Metallschicht eine zumindest partiell vorliegende dünne hochbrechende Schicht, beispielsweise aus ZnS, aufweisen. Diese zumindest partielle hochbrechende Schicht verändert den Farbeindruck abhängig von der Schichtdicke beispielsweise von gold- oder kupferfarben zu rot, da die Plasmonenresonanz verändert wird. Die hochbrechende Schicht kann in Form von Motiven wie Buchstaben, Zahlen, Symbol, Muster, einer geometrischen Figur etc. vorliegen, wodurch diese Motive unterschiedlich gefärbt erscheinen im Vergleich zu den gold- oder kupferfarbenen Bereichen ohne die hochbrechende Schicht. Die Dicke der hochbrechenden Schicht ist bevorzugt ausgewählt aus einem Bereich von 5 nm bis 150 nm, weiter bevorzugt von 10 nm bis 50 nm.

Weiter ist es vorteilhaft, wenn oberhalb und/oder unterhalb der zumindest einen Metallschicht eine dielektrische Schicht, beispielsweise aus niedrigbrechendem Material wie $MgF_2$ oder aus einer niedrigbrechenden Polymerschicht, angeordnet ist. Vorzugsweise wird die dielektrische Schicht aufgedruckt oder aufgedampft, derart, dass sie vollflächig oder bereichsweise auf der Oberfläche der zumindest einen Metallschicht angeordnet ist. Eine dielektrische und insbesondere niedrigbrechende Schicht weist insbesondere einen Brechungsindex von höchstens 1,45 auf. Die Dicke der dielektrischen und insbesondere niedrigbrechenden Schicht ist bevorzugt ausgewählt aus dem Bereich von 5 nm bis 2000 nm und weiter bevorzugt von 10 nm bis 500 nm.

Wird die bevorzugt metallisierte Reliefstruktur mit einem Farbfilter in bekannter Weise überlagert, beispielsweise durch Auflegen eines separaten Farbfilters, welcher einen Abstand von mehr als 1 μm aufweist, ist für einen Betrachter eine Farbmischung aus der Überlagerung des optischen Effekts, insbesondere des Farbeindrucks der bevorzugt metallisierten Reliefstruktur und der Farbfilterfunktion zu erkennen. Der optische Effekt der bevorzugt metallisierten Reliefstruktur wird so praktisch durch den Farbfilter im Farbton des Farbfilters eingefärbt.

Gemäß einem bevorzugten Ausführungsbeispiel der Erfindung weist das Funktionselement in den ersten Bereichen oder in dem zumindest einen ersten Bereich mindestens einen Farbstoff und/oder einen Lumineszenzstoff auf, welcher insbesondere in einer Schicht angeordnet ist. Der Farbstoff und/oder Lumineszenzstoff ist bevorzugt weniger als 1 μm, weiter bevorzugt weniger als 750 nm, noch weiter bevorzugt weniger als 500 nm, ferner noch weiter weniger als 300 nm weit von einer der Oberflächen der zumindest einen Metallschicht entfernt angeordnet. Vorzugsweise ist der Farbstoff und/oder Lumineszenzstoff in der dielektrischen Schicht oder einer polymeren Schicht angeordnet.

Der Farbstoff und/oder der Lumineszenzstoff kann beispielsweise mittels Druckprozess oder aus dem Vakuum, z. B. mittels thermischem Bedampfen, aufgebracht werden.

Vorteilhafterweise bewirkt eine derart nahe Anordnung des Farbstoffs und/oder des Lumineszenzstoffs an der Oberfläche der zumindest einen Metallschicht mit der ersten Reliefstruktur eine stark erhöhte Absorption und/oder Fluoreszenz. Der Verstärkungsmechanismus wird plasmonenverstärkte Absorption sowie plasmonengekoppelte Emission bezeichnet. Dies unterscheidet die erste Reliefstruktur wesentlich insbesondere von Spiegelflächen oder "normalen" diffraktiven Strukturen, bei denen dieser Verstärkungseffekt nicht auftritt.

Der Farbstoff und/oder der Lumineszenzstoff kann vollflächig oder bereichsweise, beispielsweise in Form von für das menschliche Auge erkennbaren Motiven wie Buchstaben, Zahlen, Symbolen, Mustern, einer geometrischen Figur etc., aufgebracht werden oder angeordnet sein. Bevorzugt ist der Farbstoff und/oder der Lumineszenzstoff lediglich bereichsweise auf der zumindest einen Metallschicht angeordnet. Weiter ist der Farbstoff und/oder der Lumineszenzstoff lediglich dort vorgesehen, wo die zumindest eine Metallschicht an die zumindest eine erste Reliefstruktur angrenzt und den oben beschriebenen Effekt generiert.

Mit dem Begriff Lumineszenzstoff wird insbesondere ein fluoreszierender oder phosphoreszierender Stoff bezeichnet. Typische Fluoreszenzstoffe werden durch UV-Strahlungen im Bereich von 395 nm und/oder 365 nm und/oder 313 nm und/oder 254 nm angeregt. Es sind Fluoreszenzstoffe bekannt, bei denen eine Anregung nur in einem Wellenlängenbereich oder auch in mehreren Wellenlängenbereichen unter Emission gleicher oder ähnlicher oder unterschiedlicher Farben in Abhängigkeit von der eingestrahlten Wellenlänge im sichtbaren Bereich emittieren.

Der Farbstoff und/oder der Lumineszenzstoff kann mit einem Druckverfahren oder aus dem Vakuum aufgebracht werden.

Beispiele für aus dem Vakuum aufgebrachten Farbstoffen sind Patinal Schwarz A bzw. Braun A von Merck sowie Licht im sichtbaren Spektralbereich, bevorzugt im Wellenlängenbereich von 400 nm bis 700 nm, absorbierende Metalle wie Gold, Kupfer oder Chrom. Wenn derartige Metalle als Farbstoffschicht zum Einsatz kommen liegt zwischen der Metallschicht und der Farbstoffschicht bevorzugt eine sehr dünne dielektrische Schicht, beispielsweise die wenige Nanometer dünne natürliche Oxidschicht einer bedampften Aluminiumschicht. Beispielsweise beträgt die Dicke dieser dielektrischen Schicht zwischen 2 nm und 10 nm. Dies stellt sicher, dass insbesondere die Absorptionseigenschaften der Farbstoffschicht aus einem stark absorbierenden Metall nicht durch die elektrische Verbindung zur Metallschicht ungünstig verändert wird.

Beim Einsatz von Druckverfahren kommen bevorzugt andere Farbstoffe und/oder Lumineszenzstoffe zum Einsatz als bei dem Aufbringen aus dem Vakuum. Vorzugsweise handelt es sich bei dem Farbstoff und/oder dem Lumineszenzstoff um einen löslichen Farbstoff bzw. Lumineszenzstoff oder um unlösliche Nanopartikel oder Pigmente. Vorzugsweise werden als Farbstoff Farbstoffe folgender Stoffgruppen eingesetzt: Metallkomplexfarbstoffe, insbesondere mit $Cr^{3+}$ oder $Co^{2+}$ als Zentralatom. Vorzugsweise werden Lumineszenzstoffe ausgewählt einzeln oder in Kombination aus folgenden Stoffgruppen eingesetzt: Cumarine, Rhodamine, Cyanine.

Der Farbstoff und/oder der Lumineszenzstoff kann ein auf äußere Einflüsse reagierendes variables Absorptionsverhalten aufweisen. Dieses variable Absorptionsverhalten kann reversibel oder auch irreversibel sein und bewirkt bevorzugt einen Farbwechsel.

Ein erfindungsgemäßes Funktionselement kann eine Sensorschicht aufweisen. Unter Sensorschicht ist insbesondere eine bevorzugt polymere Schicht zu verstehen, die den Farbstoff und/oder den Lumineszenzstoff aufweist, der ein auf äußere Einflüsse variable reagierendes Absorptionsverhalten aufweist.

Beispiele für auf äußere Einflüsse reagierende variable Farbstoffe und/oder Lumineszenzstoffe sind chromogene Materialien, welche ihre Farbe oder ihre Transparenz je nach Temperatur (thermochrome Materialien), Lichteinfall (photochrome Materialien), elektrische Spannung und/oder Strom sowie bei Druck verändern.

Bei thermochromen Farbstoffen und/oder Lumineszenzstoffen löst insbesondere eine vorbestimmte Temperaturänderung den Farbwechsel aus und bei photochromen Farbstoffen insbesondere eine vorbestimmte Strahlungsintensität.

Ein erfindungsgemäßes Funktionselement kann als Sensorelement, insbesondere umfassend eine bevorzugt polymere Sensorschicht, ausgestaltet sein. Insbesondere kann ein erfindungsgemäßes Funktionselement, welches bevorzugt einen thermochromen Farbstoff und/oder Lumineszenzstoff aufweist, beispielsweise in der Lebensmittelindustrie in einem Zeit & Temperatur-Sensor (auch time/temperature-Indicator (TTI) genannt) verwendet werden. Ein solcher Sensor kann beispielsweise eine Unterbrechung in der Kühlkette anzeigen. Thermochrome Farbstoffe sind für gewöhnlich Stoffe, welche einen strukturellen Phasenübergang aufweisen, der mit einem Farbumschlag einhergeht. Ein Beispiel für einen thermochromen Farbstoff besteht aus einer Mischung aus Anthocyanidindyecyanidin chlorid, Dodecyl Gallate und Hexadecanoic Säure wie in J. Mater. Chem. C, 2013, 1, 2811-2816 beschrieben.

Ein Beispiel für einen photochromen Farbstoff ist Bakteriorhodopsin. Ein Funktionselement, welches einen photochromen Farbstoff, insbesondere Bakteriorhodopsin, aufweist, kann als Sicherheitselement verwendet werden, welches bei Bestrahlung mit einer ausreichend hohen Intensität die Farbe wechselt. Alternativ kann so ein Funktionselement ein Lichtintensitätssensorelement in einem Lichtintensitätssensor sein.

Ein weiteres Beispiel für auf äußere Einflüsse reagierende variable Farbstoffe und/oder Lumineszenzstoffe sind, sind pH-sensitive Farbstoffe und/oder Lumineszenzstoffe, welche in wässriger Lösung verschiedene Farben in Abhängigkeit vom pH-Wert zeigen.

Geeignet sind beispielsweise Methylorange, Bromthymolblau oder Phenolphthalein. Sie zeigen in wässriger Lösung verschiedene Farben in Abhängigkeit vom pH-Wert. Phenolphthalein beispielsweise ist transparent für pH-Werte kleiner als 8 und wird magentafarben ab pH-Werten von 9. Bei einem sehr hohen pH-Wert nahe 14 wird es wieder farblos. Bei einem ganz niedrigen pH-Wert kleiner als Null färbt sich der Indikator rotorange.

Eine Sensorschicht umfassend einen Farbstoff und/oder einen Lumineszenzstoff der pH-sensitiv ist kann beispielsweise als pH-Sensor verwendet werden.

Ein weiteres Beispiel für auf äußere Einflüsse reagierende variable Farbstoffe und/oder Lumineszenzstoffe sind Stoffe, die mit Substanzen, beispielsweise gasförmige oder flüssige Substanzen, reagieren, wobei das Reaktionsprodukt zu dem Farbstoff und/oder dem Lumineszenzstoff einen unterschiedlichen komplexen Brechungsindex, Absorptionskoeffizienten und/oder Farbeindruck aufweist. Beispielsweise reagiert Perylen mit gasförmigem $NO_2$, so dass dieses bei ausreichender Konzentration durch einen Farbwechsel nachweisbar ist.

Der Pigmentierungsgrad und/oder der Volumenanteil des Farbstoffs und/oder des Lumineszenzstoffs kann in der den Farbstoff und/oder den Lumineszenzstoff enthaltenden Schicht bis zu 100 % betragen, insbesondere wenn der Farbstoff aus dem Vakuum aufgebracht wird. Bevorzugt beträgt der Pigmentierungsgrad und/oder der Volumenanteil des Farbstoffs und/oder des Lumineszenzstoffs mehr als 50 %, weiter bevorzugt mehr als 75 %, und noch weiter bevorzugt mehr als 90 %. Bei derart hohen Pigmentierungsgraden und/oder Volumenanteilen des Farbstoffs und/oder des Lumineszenzstoffs kann die Farbstoffschicht extrem dünn ausgestaltet werden, wodurch der Farbstoff und/oder der Lumineszenzstoff maximal nahe an der Metallschicht vorliegt.

Vorzugsweise beträgt der Pigmentierungsgrad und/oder der Volumenanteil des Farbstoffs und/oder des Lumineszenzstoffs der den Farbstoff und/oder Lumineszenzstoff enthaltenden, insbesondere im Druckverfahren aufgebrachten, Schicht weniger als 15 %, bevorzugt weniger als 10 %, weiter bevorzugt weniger als 5 %, insbesondere wenn Farbstoffe und/oder Lumineszenzstoffe zum Einsatz kommen, welche ohne eine stabilisierende Matrix, z. B. aus Polymer, keine ausreichende Haftung zu der Metallschicht aufweisen und/oder mit der Metallschicht eine chemische Reaktion bewirken würden.

Auch Mischungen von unterschiedlichen Pigmenten oder Farbstoffen oder Lumineszenzstoffen können zum Einsatz kommen.

Die den Farbstoff und/oder den Lumineszenzstoff enthaltende Schicht ist vorzugsweise transparent und/oder weist eine Transmission, insbesondere im Wellenlängenbereich von 400 nm bis 700 nm, von mindestens 10 %, bevorzugt von mindestens 25 %, weiter bevorzugt von mindestens 75 %, noch weiter bevorzugt von mindestens 90 %, auf. Hiermit wird insbesondere gewährleistet, dass wenn der Farbstoff auch in Teilbereichen aufgebracht ist, in denen keine erfindungsgemäße Reliefstruktur und/oder keine Metallschicht angeordnet ist, keine wesentliche Färbung einer darunter liegenden Schicht erkennbar ist.

Durch das Anordnen eines Farbstoffs und/oder des Lumineszenzstoffs kann der generierte erste Farbeindruck insbesondere in direkter Reflexion gezielt verändert werden. Beispielsweise ist es möglich, dass der Farbstoff und/oder der Lumineszenzstoff ein Absorptionsmaximum bei einer Wellenlänge von 550 nm aufweist, wobei die Absorption eine Gaußverteilung mit einer Breite ausgewählt aus einem Bereich von 25 nm bis 100 nm, bevorzugt von 40 nm bis 60 nm, aufweist. Da dies zu einem tiefen Einbruch der Reflexion bei 550 nm führen würde, resultiert das Anordnen eines derartigen Farbstoffs und/oder Lumineszenzstoffs in einem rötlichen ersten Farbeindruck. Beispielsweise besitzen Goldnanopartikel mit einem Durchmesser von ca. 20 nm ein Absorptionsmaximum bei ca. 520 nm.

Der Farbstoff und/oder der Lumineszenzstoff kann vollflächig oder auch nur partiell in einzelnen Flächenbereichen vorgesehen sein. Durch ein flächenbereichsweises partielles Aufbringen wird erreicht, dass der erste Farbeindruck nur in den Flächenbereichen mit Farbstoff und/oder mit Lumineszenzstoff zu beobachten ist und benachbart dazu, wo kein Farbstoff und/oder kein Lumineszenzstoff aufgebracht ist, der erste Farbeindruck nicht vorhanden ist. Dadurch lassen sich Designs erzeugen, die einen Kontrast des ersten Farbeindrucks zu anderen optischen Effekten erzeugen. Beim Einsatz von beispielsweise photochromen Farbstoffen und/oder Lumineszenzstoffen kann so neben Teilbereichen, welche den Farbwechsel bei beispielsweise Bestrahlung aufweisen, auch farbstabile Teilbereiche mit dem ersten Farbeindruck als Referenzfarbe realisiert werden. Vorzugsweise ist in dem Teilbereich, der einen chromogenen Farbstoff und/oder Lumineszenzstoff aufweist, der erste Farbeindruck vor dem Farbwechsel im Wesentlichen gleich oder unterschiedlich zu dem Farbeindruck eines Teilbereichs der keinen chromogenen Farbstoff aufweist. Weiter ist der erste Farbeindruck des Teilbereichs, der einen chromogenen Farbstoff und/oder Lumineszenzstoff aufweist, zu dem Farbeindruck des Teilbereichs, der keinen Farbstoff und/oder Lumineszenzstoff aufweist nach dem Farbwechsel bevorzugt unterschiedlich.

Weiter ist es möglich, dass zumindest bereichsweise oder vollflächig auf dem zumindest einen ersten Bereich und/oder weiteren Bereichen zumindest eine lasierende Farbschicht vollflächig oder partiell angeordnet ist. Diese lasierende Farbschicht kann direkt an die Metallschicht angrenzen oder durch eine dielektrische Zwischenschicht von der Metallschicht beabstandet sein. Die zumindest eine lasierende Farbschicht wirkt hierbei als Farbfilter und erzeugt für einen Betrachter einen erfassbaren Farbeindruck in der entsprechenden Färbung des Farbfilters. Zusätzlich zu der Farbfilterwirkung kann die lasierende Farbschicht bei entsprechend geringem Abstand von der Metallschicht von bevorzugt weniger als 1 µm, weiter bevorzugt weniger als 750 nm, noch weiter bevorzugt weniger als 500 nm, ferner noch weiter weniger als 300 nm, auch wie oben beschrieben den ersten Farbeindruck durch stark erhöhte Absorption und/oder Fluoreszenz mittels plasmonenverstärkter Absorption sowie plasmonengekoppelter Emission verändern.

Der für einen Betrachter erfassbare Farbeindruck der ersten Reliefstruktur und/oder der weiteren Reliefstrukturen und/oder der Spiegelflächen unterhalb der lasierenden Farbschicht kann als Kombination der optischen Effekte der entsprechenden Reliefstrukturen und/oder Spiegelflächen mit der Einfärbung durch die lasierende Farbschicht bestimmt sein. Insbesondere ist die zumindest eine lasierende Farbschicht transparent und/oder weist eine Transmission, insbesondere im Wellenlängenbereich von 400 nm bis 700 nm, von mindestens 10 %, bevorzugt von mindestens 25 %, weiter bevorzugt von mindestens 75 %, noch weiter bevorzugt von mindestens 90 %, auf.

Zwei oder mehrere lasierende Farbschichten können nebeneinander vorliegen. Alternativ können auch zwei oder mehrere lasierende Farbschichten zumindest bereichsweise überlappend vorliegen. In den Überlappungsbereichen der zwei oder mehreren lasierenden Farbschichten bildet sich eine Mischfarbe aus den Farben der zwei oder mehreren Farbschichten und insbesondere den darunterliegenden zumindest einen ersten Bereich aus.

Bevorzugt beträgt die Dicke der zumindest einen lasierenden Farbschicht weniger als 10 µm, bevorzugt weniger als 5 µm, weiter bevorzugt weniger als 2 µm. Insbesondere beträgt der Pigmentierungsgrad und/oder der Volumenanteil des Farbstoffs und/oder Lumineszenzstoffs der lasierenden Farbschicht weniger als 15 %, bevorzugt weniger als 10 %, weiter bevorzugt weniger als 5 %. Vorzugsweise handelt es sich bei den Farbstoffen der lasierenden Farbschicht um lösliche Farbstoffe.

In einer Ausgestaltungsform kann die zumindest eine lasierende Farbschicht in einem Abstand von einer der Oberflächen der zumindest einen Metallschicht von weniger als 500 nm, bevorzugt weniger als 200 nm, noch weiter bevorzugt in direktem Kontakt mit einer der Oberflächen zumindest einen Metallschicht angeordnet sein.

Weiter ist es auch möglich, dass der zumindest eine erste Bereich einen Teilbereich aufweist, der musterförmig ausgebildet ist und insbesondere einen diesen Teilbereich umgebenen Teilbereich aufweist. Weiter kann in dem umgebenden Teilbereich zumindest eine Schicht, insbesondere eine Maskenschicht, angeordnet sein, welche opak ausgebildet ist, sodass der von der zumindest einen Metallschicht und der zumindest einen ersten Reliefstruktur generierte optische Effekt lediglich in dem Teilbereich des zumindest einen ersten Bereichs sichtbar ist, der nicht von der opaken Schicht bedeckt ist. Hierdurch können interessante optische Effekte durch die Formgebung der Teilbereiche erzielt werden.

Vorzugsweise ist die Profilform und/oder die Relieftiefe und/oder Gitterperiode der zumindest ersten Reliefstruktur weiter so gewählt, dass bei einem vom ersten Einfallswinkel unterschiedlichen zweiten Einfallswinkel die farbige Erscheinung des im zumindest einen ersten Bereichs direkt reflektierten bzw. durch die zumindest eine Metallschicht direkt transmittierten Lichts unterschiedlich verändert wird.

Insbesondere zeigt sich bei einem ersten Einfallswinkel ein erster Farbeindruck in direkter Reflexion und bei einem zweiten Einfallswinkel ein zweiter Farbeindruck in direkter Reflexion, wobei, insbesondere ausgehend von der Normalen senkrecht auf der Grundebene der Reliefstruktur, der erste Einfallswinkel ausgewählt ist aus einem Bereich von 0° bis 30° und insbesondere wobei der zweite Einfallswinkel um einen Wert, ausgewählt aus einem Bereich von 10° bis 45°, größer ist als der erste Einfallswinkel. Beispielsweise beträgt der zweite Einfallswinkel einen Wert ausgewählt aus einem Bereich von 30° bis 60°. Hiermit wird ein definierter Farbwechsel beim Verkippen bzw. ein Farbkippeffekt ermöglicht. Damit zeigen sich unter dem ersten bzw. dem zweiten Einfallswinkel bei Auflichtbetrachtung und/oder bei Durchlichtbetrachtung für den menschlichen Betrachter, insbesondere unterschiedliche, stabile Farbeeindrücke in direkter Reflexion.

Insbesondere ist der zweite Farbeindruck abhängig vom Azimutwinkel. So kann ein Funktionselement derart gestaltet sein, dass es einen ersten Bereich aufweist, welcher einen Azimutwinkel von um mindestens 15°, bevorzugt um 30° und weiter bevorzugt um 45°, gedrehten bzw. unterschiedlichen weiteren ersten Bereich aufweist. Beispielsweise kann bei einem Azimutwinkel von 0° oder 90° ein zweiter Farbeindruck generiert werden, welcher unterschiedlich ist von dem zweiten Farbeindruck bei einem Azimutwinkel von beispielsweise 45°. Da der Farbkippeffekt strukturbasierend ist, ist er im perfekten Register zu anderen strukturbasierten Effekten. Insbesondere ist an diesem Effekt auch vorteilhaft, dass in beiden ersten Bereiche bei gleicher Profilform, Relieftiefe oder Gitterperiode der gleiche erste Farbendruck unabhängig vom gewählten Azimutwinkel entsteht. Bei einem ersten Betrachtungswinkel von beispielsweise 10° weisen hierbei alle ersten Bereiche den gleichen Farbeindruck auf, beispielsweise goldfarben. Bei einem zweiten Betrachtungswinkel von beispielsweise 40° hingegen unterscheiden sich die Farbeindrücke in den Bereichen je nach Gitterorientierung, das heißt je nach Azimutwinkel in dem jeweiligen Bereich, und eine versteckte Information wird nur unter diesem zweiten Betrachtungswinkel sichtbar. Ein solcher Farbeffekt wird auch metamerischer Farbeffekt genannt.

Unter Azimutwinkel wird insbesondere die Orientierung einer Reliefstruktur in der von der Grundfläche aufgespannten Ebene verstanden, wobei die x-Richtung 0° und die y-Richtung 90° entspricht. Die Orientierung einer Reliefstruktur kann in Bezug auf eine weitere Reliefstruktur, an deren Grundfläche die x-Richtung und die y-Richtung festgemacht wird, um einen definierten Winkel gedreht sein.

Vorzugsweise zeigt sich bei einem vom ersten und zweiten Einfallswinkel unterschiedlicher dritter Einfallswinkel durch das im zumindest einen ersten Bereich in die erste Beugungsordnung gebeugte Licht eine optische Erscheinung, welche von den optischen Erscheinungen des ersten und zweiten Einfallswinkels unterschiedlich ist. Diese optische Erscheinung wird als Latent-Effekt bezeichnet und entspricht dem Aufleuchten der ersten Beugungsordnung.

Gemäß einem bevorzugten Ausführungsbeispiel der Erfindung weist das Funktionselement zumindest einen zweiten Bereich auf, wobei in dem zumindest einen zweiten Bereich zumindest eine zweite Reliefstruktur und/oder eine Spiegelfläche ohne in diese Spiegelfläche geformte Reliefstruktur ausgebildet ist. Bei der zumindest einen zweiten Reliefstruktur handelt es sich um eine Reliefstruktur, welche vorzugsweise einzeln oder in Kombination und/oder in Überlagerung ausgewählt ist aus: diffraktive Reliefstruktur, holographische Reliefstruktur, insbesondere 2D-, 2D/3D- oder 3D-Hologramm, Mattstruktur, Mikrospiegelfläche, reflektive Facettenstruktur, refraktive, nahezu achromatische Mikrostruktur, bevorzugt Blazegitter mit einer Gitterperiode von mehr als 5 μm, Linse, Mikrolinsenraster, binäre Zufallsstruktur, binäre fresnelförmige Mikrostruktur. Insbesondere ist in einem Teilbereich des zumindest einen zweiten Bereich eine Metallschicht angeordnet, die bevorzugt analog zu zumindest einer der bevorzugten Ausführungsformen der Metallschicht in dem zumindest einen Teilbereich des ersten Bereichs ausgestaltet sein kann.

Die zumindest eine zweite Reliefstruktur ist somit derart ausgestaltet, dass der zumindest eine zweite Bereich insbesondere unter diffuser Beleuchtung bevorzugt silbern erscheint und/oder in der Eigenfarbe des Metalls, welches in dem zumindest einen zweiten Bereich angeordnet ist und/oder in welches die zumindest eine zweite Reliefstruktur eingeprägt ist.

Unter diffraktive Reliefstruktur wird insbesondere eine Reliefstruktur verstanden, welche eine Spatialfrequenz ausgewählt aus einem Bereich von 200 Linien/mm bis 2000 Linien/mm aufweist und insbesondere durch Beugung des einfallenden Lichts in die erste oder eine höhere Beugungsordnung einen optisch variablen Effekt generiert. Diese optisch variablen Effekte können beispielsweise regenbogenartige Farbeffekte und/oder Bewegungseffekte und/oder Pumpeffekte und/oder Transformationseffekte sein. Beispiele für diffraktive Reliefstrukturen umfassen beispielsweise Liniengitter oder Kreuzgitter. Weiter können diffraktive Reliefstrukturen auch von computergenerierten Hologrammen, beispielsweise von Kinoformen, gebildet werden.

Als Mattstrukturen können isotrop streuende oder anisotrop streuende Mattstrukturen eingesetzt werden. Unter Mattstruktur wird eine Struktur mit Licht streuenden Eigenschaften bezeichnet, welche vorzugsweise über ein stochastisches oder zufälliges Oberflächenprofil verfügt. Mattstrukturen weisen vorzugsweise eine Relieftiefe t im Bereich von 100 nm bis 5000 nm, bevorzugt von 200 nm bis 2000 nm, auf. Des Weiteren weisen Mattstrukturen vorzugsweise einen Mittenrauwert $R_a$ ausgewählt aus einem Bereich von 50 nm bis 2000 nm, bevorzugt von 100 nm bis 1000 nm, auf. Der Matteffekt kann entweder isotrop oder anisotrop sein.

Unter Mikrostruktur wird eine Struktur verstanden, deren Spatialfrequenz kleiner als 200 Linien/mm ist, bzw. deren Gitterperiode größer als 5 μm ist und welche einen optischen Effekt im Wesentlichen durch Refraktion generiert. Der Effekt ist somit nahezu achromatisch.

Linsen können als refraktiv wirkende Linsen oder als refraktiv wirkende Hohlspiegel oder auch als diffraktive Linsen oder diffraktive Hohlspiegel ausgeformt sein. Ein Mikrolinsenraster wird vorzugsweise von einer eindimensionalen oder zweidimensionalen Anordnung von Mikrolinsen, beispielsweise von Zylinderlinsen in einer eindimensionalen Anordnung der Mikrolinsen oder von Mikrolinsen mit einer jeweils sphärischen oder angenäherten sphärischen oder asphärischen Form in einer zweidimensionalen Anordnung der Mikrolinsen gebildet. Die Rasterweite eines Mikrolinsenrasters weist vorzugsweise einen Wert ausgewählt aus einem Bereich von 5 μm bis 300 μm, weiter bevorzugt aus einem Bereich von 5 μm bis 50 μm auf.

Gemäß einem bevorzugten Ausführungsbeispiel der Erfindung weist das Funktionselement zumindest einen dritten Bereich auf, wobei in dem zumindest einen dritten Bereich zumindest eine dritte Reliefstruktur ausgebildet ist. Bei der zumindest einen dritten Reliefstruktur handelt es sich insbesondere um eine Reliefstruktur, welche Gitter umfasst mit einer Gitterperiode Λ von weniger als 500 nm und mehr als 300 nm und einer Relieftiefe t von mehr als 150 nm. Der zumindest eine dritte Bereich ist derart gestaltet, dass er in direkter Reflexion über einen relativ breiten Kippwinkelbereich von insbesondere mindestens 0° bis 30° zur Normalen der durch das Funktionselement aufgespannten Ebene bevorzugt einen roten oder einen dunklen Farbeindruck, insbesondere einen schwarzen Farbeindruck, in direkter Reflexion oder in Transmission aufweist. Insbesondere ist in einem Teilbereich des zumindest einen dritten Bereichs eine Metallschicht angeordnet, die bevorzugt analog zu zumindest einer der bevorzugten Ausführungsformen der Metallschicht in dem zumindest einen Teilbereich des ersten Bereichs ausgestaltet sein kann.

Da die optischen Effekte wie der Farbeindruck der unterschiedlichen Bereiche im Wesentlichen durch Strukturen generiert werden, können insbesondere der zumindest eine erste Bereich, der zumindest zweite Bereich und der zumindest eine dritte Bereich registergenau zueinander angeordnet sein, da auf das Anordnen von zusätzlichen Lackschichten für eine farbige Gestaltung verzichtet werden kann.

Dies ermöglicht weiter insbesondere die farbige Gestaltung von im perfekten Register angeordneten, selbsterklärenden, Designelementen, wie beispielsweise Flaggen. Zweckmäßigerweise können die selbsterklärenden Designelemente durch weitere strukturbasierte Effekte ergänzt oder erweitert werden.

Die Farbstabilität bei einem Verkippen des Funktionselements in Kombination mit dem perfekten Register des Farbeindrucks in direkter Reflexion der entsprechenden verschiedenen Bereichen zueinander lässt sich für die Erfassung und/oder Erkennung und/oder Verifizierung des Funktionselements in maschinellen, insbesondere automatisierten Prozessen wie "optical machine authentication" und "optical phone authentication" nutzen. Dabei können die dafür verwendeten Lesegeräte stationär oder auch mobil sein.

Stationäre Lesegeräte, wie sie beispielsweise zur Passkontrolle an Flughäfen oder auch an Grenzübergängen verwendet werden, weisen oft die Möglichkeit auf, die Passseite mit den Sicherheitselementen bei diffuser Beleuchtung aufzunehmen. Hierbei erscheinen die den Farbeindruck gemäß dieser Erfindung aufweisenden Teilbereiche sehr kontrastreich in der Bildaufnahme, wodurch die Registerhaltigkeit des Farbeindruck relativ zu silbern erscheinenden Teilbereichen mittels einer geeigneten Bildauswertung verifiziert werden kann. Auch bei mobilen Lesegeräten, wie beispielsweise Smartphones mit geeigneter Software, lassen sich Bildaufnahmen erzeugen, welche zur Verifizierung der Registerhaltigkeit unterschiedlicher Bildelemente relativ zueinander herangezogen werden können. Bevorzugt leitet die Software den Nutzer an die Beleuchtung so zu optimieren, dass die Verifikation optimal möglich ist.

Gemäß einem Ausführungsbeispiel der Erfindung weist der zumindest eine erste Bereich, der zumindest eine zweite Bereich, der zumindest eine dritte Bereich oder zumindest einer der ersten zweiten oder dritten Bereiche eine musterförmige Formgebung auf. Ein Bereich kann beispielsweise in Form von Buchstaben, Zahlen, eines Symbols, einer geometrischen Figur oder eines Motivs ausgeformt sein. Insbesondere kann der zumindest eine erste Bereich als Minitext oder Mikrotext ausgestaltet sein.

Unter Text wird vorzugsweise eine Aneinanderreihung von zwei oder mehr Buchstaben, Symbolen oder Zahlen verstanden, wobei ein Minitext vorzugsweise eine Schrifthöhe im Bereich von 0,5 mm bis 2,5 mm aufweist und ein Mikrotext vorzugsweise eine Schrifthöhe im Bereich von 0,125 mm bis 0,5 mm aufweist. Texte mit Schrifthöhen kleiner 0,125 mm werden als Nanotext verstanden.

Weiter ist es möglich, dass die ersten und/oder zweiten und/oder dritten Bereiche als eine Vielzahl von Pixeln angeordnet sind. Die Pixel können rund, quadratisch, hexagonal, motivförmig oder auch in anderer zusammenhängender Form ausgestaltet sein. Die Pixel können weiter auch eine langgestreckte Form, insbesondere eine Linienform, aufweisen. Bevorzugt ist die maximale Ausdehnung eines Pixels in mindestens eine Richtung der Raumrichtungen, bevorzugt in x-Richtung und y-Richtung, kleiner als 300 μm, bevorzugt kleiner als 100 μm, weiter bevorzugt kleiner als 10 μm, noch weiter bevorzugt kleiner als 5 μm, ferner noch weiter bevorzugt kleiner als 3 μm. Weiter ist es vorteilhaft, wenn ein Pixel größer als 1 μm, bevorzugt größer als 1,5 μm, in x-Richtung und/oder y-Richtung ausgebildet ist. Vorstehende Ausdehnungen der Pixel bieten den Effekt von hohen Auflösungen der dargestellten Information. Somit lassen sich stärkere optische Effekte, beispielsweise Bewegungseffekte über größere Entfernungen, realisieren. Weiter sind die Ausdehnungen der Pixel groß genug, dass hierdurch die zumindest eine Reliefstruktur des zumindest einen ersten Bereichs noch eine ausreichende Zahl an Gitterperioden aufweist, so dass diese noch ihren optischen Effekt generieren kann.

Weiter ist es möglich, dass zumindest bereichsweise oder vollflächig in Blickrichtung eines Betrachters, insbesondere senkrecht auf die von dem Funktionselement aufgespannte Ebene, hinter und/oder unterhalb dem zumindest einen ersten Bereich und/oder zweiten Bereich und/oder dritten Bereich und/oder weiteren Bereichen zumindest eine lasierende Farbschicht, insbesondere vollflächig oder partiell, angeordnet ist.

Mit anderen Worten ist es möglich, dass in Blickrichtung eines Betrachters, insbesondere senkrecht auf die vom Funktionselement aufgespannten Ebene, zumindest bereichsweise oder vollflächig unterhalb der zumindest einen ersten Reliefstruktur, der zumindest einen zweiten Reliefstruktur, der zumindest einen dritten Reliefstruktur und/oder zumindest einer Spiegelfläche und/oder der Metallschicht zumindest eine lasierende Farbschicht angeordnet ist. Es ist möglich, dass die zumindest eine lasierende Farbschicht in Blickrichtung eines Betrachters, insbesondere senkrecht auf die vom Funktionselement aufgespannten Ebene derart angeordnet ist, dass sie mit dem zumindest einen ersten, zweiten und/oder dritten Bereich vollständig oder partiell überlappt. Es ist auch möglich, dass zumindest eine lasierende Farbschicht nicht mit dem zumindest einen ersten, zweiten und/oder dritten Bereich überlappt.

Die zumindest eine lasierende Farbschicht kann direkt an die Metallschicht angrenzen oder durch eine dielektrische Zwischenschicht von der Metallschicht beabstandet sein. Die zumindest eine lasierende Farbschicht wirkt hierbei bevorzugt als farbiger Hintergrund und damit als optisch kontrastierender Bereich und erzeugt insbesondere für einen Betrachter einen erfassbaren Farbeindruck in der entsprechenden Färbung der zumindest einen Farbschicht.

Es ist vorteilhaft, wenn die zumindest eine lasierende Farbschicht, insbesondere in direkter Reflexion über einen Kippwinkelbereich von bevorzugt mindestens 0° bis 30° zur Normalen und/oder über einen Kippwinkelbereich von bevorzugt mindestens 30° bis 60° zur Normalen, insbesondere im CIELAB-Farbraum einen Gesamtfarbstand dE von 50 bis 270, bevorzugt von 100 bis 270, weiter bevorzugt von 130 bis 270, zu dem ersten und/oder zu dem zweiten und/oder zu dem dritten Bereich aufweisen, insbesondere zu dem zumindest einen Teilbereich des zumindest einen ersten, zweiten und/oder dritten Bereichs in dem eine Metallschicht angeordnet ist.

Es ist auch vorteilhaft, wenn die zumindest eine lasierende Farbschicht, insbesondere in direkter Reflexion über einen Kippwinkelbereich von bevorzugt mindestens 0° bis 30° zur Normalen und/oder über einen Kippwinkelbereich von bevorzugt mindestens 30° bis 60° zur Normalen, eine dunklere Farbe, insbesondere mit einem niedrigeren Helligkeitswert L, insbesondere im Vergleich zu dem zumindest einen ersten, und/oder zweiten und/oder dritten Bereich, aufweist, und der zumindest eine erste und/oder zweite und/oder dritte Bereich eine hellere Farbe, insbesondere mit einem höheren Helligkeitswert L, insbesondere im Vergleich zu der zumindest lasierenden Farbschicht, aufweist.

Des Weiteren ist es vorteilhaft, dass die zumindest eine lasierende Farbschicht, insbesondere in direkter Reflexion über einen Kippwinkelbereich von bevorzugt mindestens 0° bis 30° zur Normalen und/oder über einen Kippwinkelbereich von bevorzugt mindestens 30° bis 60° zur Normalen, eine hellere Farbe, insbesondere mit einem höheren Helligkeitswert L, insbesondere im Vergleich zu dem zumindest einen ersten, und/oder zweiten und/oder dritten Bereich, aufweist und der zumindest eine erste und/oder zweite und/oder dritte Bereich eine dunklere Farbe, insbesondere mit einem niedrigeren Helligkeitswert L, insbesondere im Vergleich zur zumindest einen lasierenden Farbschicht, aufweist.

Bevorzugt wird eine erste Farbe als heller im Vergleich zu einer zweiten Farbe verstanden, wenn die erste Farbe einen höheren Helligkeitswert L im Vergleich zu der zweiten Farbe aufweist. Analog wird eine dritte Farbe bevorzugt als dunkler im Vergleich zu einer vierten Farbe verstanden, wenn die dritte Farbe einen niedrigeren Helligkeitswert L im Vergleich zur vierten Farbe aufweist.

Es ist vorteilhaft, wenn der erste Bereich und/oder der zweite Bereich, insbesondere in direkter Reflexion über einen Kippwinkelbereich von bevorzugt mindestens 0° bis 30° zur Normalen und/oder über einen Kippwinkelbereich von bevorzugt mindestens 30° bis 60° zur Normalen, insbesondere im CIELAB-Farbraum einen Gesamtfarbstand dE von 50 bis 270, bevorzugt von 100 bis 270, weiter bevorzugt von 130 bis 270, zu dem dritten Bereich aufweisen, und/oder wenn der erste Bereich und/oder der zweite Bereich, insbesondere in direkter Reflexion über einen Kippwinkelbereich von bevorzugt mindestens 0° bis 30° zur Normalen und/oder über einen Kippwinkelbereich von bevorzugt mindestens 30° bis 60° zur Normalen, eine hellere Farbe, insbesondere mit einem höheren Helligkeitswert L, bevorzugt im Vergleich zu dem dritten Bereich, und der dritte Bereich, insbesondere in direkter Reflexion über einen Kippwinkelbereich von bevorzugt mindestens 0° bis 30° zur Normalen und/oder über einen Kippwinkelbereich von bevorzugt mindestens 30° bis 60° zur Normalen, eine dunklere Farbe, insbesondere mit einem niedrigeren Helligkeitswert L, bevorzugt im Vergleich zum ersten und/oder zweiten Bereich, aufweist.

Alternativ können die ersten und/oder zweiten und/oder dritten Bereiche auch in einer Rasteranordnung angeordnet sein. Es ist auch möglich, dass die ersten und/oder zweiten und/oder dritten Bereiche ineinander verschachtelt (interlaced) angeordnet sind. Das heißt, dass jeweils erste und/oder zweite und/oder dritte Bereiche abwechselnd aufeinanderfolgend und insbesondere direkt zueinander benachbart angeordnet sind. Dabei weisen die ersten und/oder zweiten und/oder dritten Bereiche einen geringen Abstand und/oder Abmessung zumindest in einer Dimension von weniger als 300 $\mu$m, bevorzugt von weniger als 100 $\mu$m, auf.

Weiter ist es möglich, dass der zumindest eine erste Bereich derart gestaltet ist, dass er mindestens in zwei, bevorzugt mindestens drei, bevorzugt mindestens fünf Zonen, angeordnet ist. Vorzugsweise sind die Zonen derart gestaltet, dass sie zumindest teilweise mehr als 300 $\mu$m, bevorzugt zumindest 1000 $\mu$m, in x-Richtung und/oder y-Richtung voneinander entfernt angeordnet sind, so dass sie für das menschliche Auge als voneinander getrennt wahrgenommen werden. Insbesondere weist eine, bevorzugt jede, der Zonen zumindest einen ersten Zonenbereich auf, welcher in mindestens einer Raumrichtung kleiner als 2 mm, bevorzugt kleiner als 1 mm, weiter bevorzugt kleiner als 0,7 mm, ausgebildet ist. Hierbei kann es vorteilhaft sein, dass der zumindest eine erste Zonenbereich mindestens 20 %, bevorzugt mindestens 30 %, weiter bevorzugt mehr als 50 %, der Fläche einer einzelnen Zone ausmacht.

Dies hat den vorteilhaften Effekt, dass es hierdurch Fälschern erschwert wird, beispielsweise den goldenen Farbeindruck mittels partiellem Überdrucken mit gelber Farbe eines gefälschten Elementes, welches die Licht absorbierenden Gitterstrukturen nicht aufweist, zu imitieren. So kann das perfekte Register nicht ausreichend über einen registrierten Farbdruck, beispielsweise mittels Tintenstrahldruck, erzielt werden.

Auch ist es möglich, dass zumindest eine Zone zumindest einen zweiten Zonenbereich aufweist, der in mindestens eine Raumrichtung größer als 2 mm, bevorzugt größer als 3 mm, weiter bevorzugt größer als 5 mm, ist, insbesondere wobei die Fläche der zweiten Zonenbereiche aller Zonen zumindest in Summe größer als 20 mm$^2$, bevorzugt größer als 30 mm$^2$, weiter bevorzugt größer als 50 mm$^2$, ist. Diese Minimalfläche der ausgedehnteren Zonenbereiche erleichtert es einem Betrachter, den goldenen oder kupfernen Farbeindruck sicher wahrzunehmen.

Weiter ist es auch möglich, dass sich die Ausdehnung zumindest einer Zone in eine Raumrichtung reduziert, bevorzugt kontinuierlich oder stufenweise verjüngt. Dadurch wird das Auge eines Betrachters angeleitet von den leichter erfassbaren, breiteren zweiten Zonenbereichen auch zu den schmäleren ersten Zonenbereichen zu schauen. In diesen Bereichen ist das perfekte Register des zumindest einen ersten Zonenbereichs zu den weiteren Bereichen, Teilbereichen oder Zonen des Funktionselements für Fälscher schwieriger zu imitieren.

Weiter kann der zumindest eine erste Bereich von dem zumindest einen dritten Bereich nur bereichsweise umrahmt oder sogar vollständig eingeschlossen sein, wobei der zumindest eine dritte Bereich eine Ausdehnung in eine der Raumrichtungen ausgewählt aus einem Bereich von 30 $\mu$m bis 1 mm, bevorzugt von 50 $\mu$m bis 300 $\mu$m, weiter bevorzugt von 50 $\mu$m bis 150 $\mu$m, aufweist. Der zumindest eine dritte Bereich bildet somit einen konturartigen Rahmen oder Teilrahmen, der den zumindest einen ersten Bereich bereichsweise oder vollständig umrahmt bzw. umgibt. Hierdurch wird die Kontur des zumindest einen ersten Bereichs noch weiter hervorgehoben und die Erkennbarkeit wird durch eine Kontrasterhöhung für einen Betrachter verbessert. Bevorzugt weisen die optischen Effekte in dem ersten und zweiten und dritten Bereich zueinander eine möglichst unterschiedliche Farbigkeit und damit einen möglichst guten optischen Kontrast auf. Beispielsweise kann ein zweiter Bereich eine fresnelsche Freiformfläche aufweisen, wobei dieser zweite Bereich mit einem ersten Bereich mit der ersten Reliefstruktur mit dem goldenen Farbeindruck umschlossen ist.

In einer weiteren Ausführungsform kann der zumindest eine erste Bereich von zumindest einem zweiten Bereich bereichsweise umrahmt oder sogar vollständig eingeschlossen sein, wobei der zumindest eine zweite Bereich eine Ausdehnung in eine der Raumrichtungen ausgewählt aus einem Bereich von 30 $\mu$m bis 1 mm, bevorzugt von 50 $\mu$m bis 300 $\mu$m, weiter bevorzugt von 50 $\mu$m bis 150 $\mu$m, aufweist. Insbesondere kann hierbei der zumindest eine zweite Bereich von zumindest einem dritten Bereich bereichsweise umrahmt oder sogar vollständig eingeschlossen sein, wobei der zumindest eine dritte Bereich wie in dem vorstehenden Absatz ausgestaltet sein kann. Weiter kann der zumindest eine zweite Bereich einen Mikrotext oder Nanotext aufweisen.

Durch eine derartige Ausgestaltung wird bewirkt, dass durch den optischen Effekt des zumindest einen zweiten Bereichs die Aufmerksamkeit des Betrachters auf den Bereich um die Kontur und damit auf das perfekte Register zwischen den in direkter Reflexion verschieden erscheinenden Bereichen bzw. Konturen gelenkt wird.

Gemäß einer Ausführungsform der Erfindung können oberhalb des zumindest einen ersten Bereichs eine Vielzahl von Mikrolinsen rasterförmig angeordnet sein. Insbesondere wird unter "rasterförmig angeordnet" eine Anordnung in einem Raster verstanden. Insbesondere sind die Mikrolinsen derart angeordnet, dass der zumindest eine erste Bereich von einem Beobachter vergrößert wahrgenommen wird. Mit anderen Worten liegt der zumindest eine erste Bereich in der Fokusebene der Mikrolinsen. Die Mikrolinsen können jeweils eine zylindrische bzw. lentikulare oder eine sphärische oder angenäherte sphärische Form oder asphärische Form oder andere Formen aufweisen.

Ein Mikrolinsenraster kann mehrere Mikrolinsen-Teilraster aufweisen, wobei bevorzugt innerhalb eines Mikrolinsen-Teilrasters die Mikrolinsen als Zylinderlinsen in einer eindimensionalen Anordnung der Mikrolinsen angeordnet sind oder Mikrolinsen mit einer jeweils sphärischen oder angenäherten sphärischen oder asphärischen Form in einer zweidimensionalen Anordnung der Mikrolinsen angeordnet sind. Innerhalb eines Mikrolinsenraster können insbesondere mehrere, voneinander unterschiedliche Mikrolinsen-Teilraster angeordnet sein. Beispielsweise können innerhalb eines Mikrolinsenraster zumindest ein Mikrolinsen-Teilraster mit einer zweidimensionalen Anordnung der Mikrolinsen und zumindest ein Mikrolinsen-Teilraster mit einer eindimensionalen Anordnung der Mikrolinsen vorgesehen sein. Die Mikrolinsen-Teilraster können dabei eine unterschiedliche äußere Form aufweisen, insbesondere dreieckig, vieleckig, rund, ellipsenförmig, motivförmig, musterförmig, in Form einer Kodierung. Bevorzugt weisen hierbei diese Mikrolinsen-Teilraster mit eindimensionalen oder zweidimensionalen Anordnungen von Mikrolinsen jeweils die gleiche Rasterweite und/oder jeweils die gleiche Fokuslänge auf.

Insbesondere ist der zumindest eine erste Bereich hierbei in Teilbereichen derart angeordnet, dass die Teilbereiche eine Vielzahl von rasterförmig angeordneten Mikrobildern oder Moiré-Icons ergeben, insbesondere wobei diese Mikrobilder oder Moiré-Icons im Register zu der Vielzahl von rasterförmig angeordneten Mikrolinsen angeordnet sind. Die Rasterweite eines Rasters der Mikrobilder oder Moiré-Icons weist vorzugsweise einen Wert ausgewählt aus einem Bereich von 5 $\mu$m bis 300 $\mu$m, weiter bevorzugt aus einem Bereich von 5 $\mu$m bis 50 $\mu$m, auf.

Das Raster der Mikrobilder oder Moiré-Icons weist insbesondere eine identische oder leicht unterschiedliche, insbesondere unterschiedliche, Rasterweite im Vergleich zu der Rasterweite des Mikrolinsenrasters auf. Das Raster der Mikrobilder oder Moiré-Icons kann relativ zu dem Mikrolinsenraster leicht verdreht, insbesondere verdreht, angeordnet sein oder alternativ eine weitgehend identische, insbesondere identische, Ausrichtung wie das Mikrolinsenraster aufweisen, d. h. praktisch keine Verdrehung relativ zu dem Mikrolinsenraster aufweisen.

Das Raster der Mikrobilder oder Moiré-Icons kann, korrespondierend zu dem Mikrolinsenraster, mehrere Teilraster aufweisen, wobei innerhalb eines Teilrasters die Mikrobilder oder Moiré-Icons in einer eindimensionalen Anordnung der Mikrobilder oder Moiré-Icons angeordnet sind oder in einer zweidimensionalen Anordnung der Mikrobilder oder Moiré-Icons angeordnet sind. Innerhalb eines Rasters der Mikrobilder oder Moiré-Icons können insbesondere mehrere, voneinander unterschiedliche Teilraster angeordnet sein. Beispielsweise können innerhalb eines Rasters der Mikrobilder oder Moiré-Icons zumindest ein Teilraster mit einer zweidimensionalen Anordnung der Mikrobilder oder Moiré-Icons und zumindest ein Teilraster mit einer eindimensionalen Anordnung der Mikrobilder oder Moiré-Icons vorgesehen sein. Die Teilraster können dabei eine unterschiedliche äußere Form aufweisen, insbesondere dreieckig, vieleckig, rund, ellipsenförmig, motivförmig, musterförmig, in Form einer Kodierung. Die Mikrobilder oder Moiré-Icons können innerhalb eines Teilrasters so ausgebildet sein, dass pro Teilraster ein zu dem Teilraster zugeordneter optischer Effekt entsteht. Mehrere Teilraster können somit unterschiedliche optische Effekte erzeugen, die gemeinsam in dem Raster der Mikrobilder oder Moiré-Icons einen kombinierten optischen Effekt ergeben oder nebeneinander vorliegende separate optische Effekte ergeben.

Die Mikrobilder oder Moiré-Icons können für diese unterschiedlichen optischen Effekte pro Teilraster insbesondere unterschiedlich ausgebildete erste Bereiche und/oder zweite Bereiche und/oder dritte Bereiche und/oder lasierende Farbschichten vor und/oder hinter den ersten Bereichen und/oder zweiten Bereichen und/oder dritten Bereichen, insbesondere in senkrechter Betrachtung auf die vom Funktionselement aufgespannten Ebene, aufweisen.

Weiter können die Mikrobilder oder Moiré-Icons für diese unterschiedlichen optischen Effekte pro Teilraster insbesondere eine unterschiedliche Anzahl von ersten Bereichen und/oder zweiten Bereichen und/oder dritten Bereichen und/oder lasierenden Farbschichten vor und/oder hinter den ersten Bereichen und/oder zweiten Bereichen und/oder dritten Bereichen, insbesondere in senkrechter Betrachtung auf die vom Funktionselement aufgespannten Ebene, aufweisen.

Unter Mikrobildern werden hier vorzugsweise vollständige Motive und auch unvollständige Motive, das heißt Fragmente von Motiven verstanden. Dabei kann ein Motiv insbesondere ausgewählt sein oder eine Kombination sein aus: Bild, Symbol, Logo, Wappen, Flagge, Portrait, alphanumerisches Zeichen.

Bevorzugt sind die Teilbereiche aus einer Vielzahl von Pixeln aufgebaut, wobei die Pixel wie bereits oben beschrieben ausgestaltet sind.

Weiter können die Teilbereiche eine Vielzahl an Pixeln ausgebildet aus dem zumindest einen zweiten Bereich und/oder dem zumindest einen dritten Bereich umfassen. Bevorzugt weisen die Teilbereiche Pixel umfassend den zumindest einen ersten Bereich und/oder Pixel umfassend den zumindest einen zweiten Bereich und/oder Pixel umfassend den zumindest dritten Bereich auf. Insbesondere sind damit Mikrobilder mit einer unterschiedlichen Farbigkeit und/oder Mikrobilder mit einem achromatisch hohen Kontrast zwischen Vordergrund und Hintergrund eines Motivs möglich. Beispielsweise sind hierdurch Mikrobilder umfassend Pixel mit einer hell weißen oder silbernen Farbgebung, dunkelgrauen oder schwarzen Farbgebung und/oder einer goldenen oder kupfernen Farbgebung möglich.

Auch können die Teilbereiche durch die Anordnung der Pixel derart gestaltet sein, dass ein gradueller Übergang von einer vermehrten Anordnung von Pixeln umfassend den zumindest einen ersten Bereich zu einer vermehrten Anordnung von Pixeln umfassend den zumindest einen zweiten Bereich erzielt wird. Hierdurch ist ein erkennbarer gradueller Übergang von einer goldenen oder kupfernen Erscheinung zu einer silbernen Erscheinung möglich. Die Pixel können hierbei auch eine langgestreckte Form, insbesondere eine Linienform aufweisen.

Ferner ist es durch Kombination der vorstehenden Ausführungsvarianten möglich, den goldenen oder kupfernen Farbton eines Teilbereichs heller, d. h. näher an dem silbernen Farbton, auszugestalten. Dies lässt sich erreichen, indem die Vielzahl von Pixeln, welche nicht zumindest einen dritten Bereich umfassen, als eine Mischung, bevorzugt einer stochastischen Verteilung, von Pixeln umfassend den zumindest einen ersten Bereich und den zumindest einen zweiten Bereich angeordnet sind.

Alternativ oder zusätzlich kann ein Motiv des Mikrobilds oder ein Motiv aus Moiré-Icons in einer Zone aus Pixeln mit einem silbernen reflektierenden Erscheinungsbild und aus Pixeln mit einem dunkelgrauen bis schwarzen Erscheinungsbild aufgebaut sein und in einer anderen Zone des Motives aus Pixeln mit einem goldenen oder kupfernen Erscheinungsbild und Pixeln mit einem dunkelgrauen bis schwarzen Erscheinungsbild aufgebaut sein. Mit anderen Worten können Bereiche des Motives des Mikrobilds oder des Motives aus Moiré-Icons aus Pixeln umfassend den zumindest einen zweiten Bereich und aus Pixeln umfassend zumindest einen dritten Bereich und in einem anderen Bereich des Motives aus Pixeln umfassend zumindest einen ersten Bereich und Pixeln umfassend zumindest einen dritten Bereich aufgebaut sein. Hierdurch sind mehrfarbige Ausgestaltungen des Funktionselements möglich, wobei beispielsweise goldene oder kupferne Bewegungseffekte und silberne Bewegungseffekte im Funktionselement räumlich getrennt voneinander vorliegen.

Gemäß einer weiteren Ausführungsform der Erfindung ist die zumindest eine lasierende Farbschicht insbesondere oberhalb des zumindest einen ersten, zweiten und/oder dritten Bereich und unterhalb der Vielzahl an Mikrolinsen angeordnet.

Gemäß einer weiteren Ausführungsvariante des erfindungsgemäßen Funktionselement wird ein Motiv durch eine Vielzahl von Pixeln umfassend zumindest den einen ersten Bereich und durch eine Vielzahl von Pixeln umfassend zumindest den zumindest einen dritten Bereich gebildet. Bezüglich den Ausdehnungen der Pixel wird auf obige Ausführungen verwiesen. Die Verteilung der Pixel ist somit derart gestaltet, dass das Motiv von einem Betrachter in direkter Reflexion als golden eingefärbtes Graustufenbild, insbesondere als Halbtonbild, wahrgenommen wird. Hierdurch bietet das erfindungsmäße Funktionselement weiter den Effekt, dass das Graustufenbild oder das Halbtonbild einen Farbkippeffekt in direkter Reflexion oder in Nullter Beugungsordnung aufweist. Insbesondere bietet das Funktionselement weiter einen weiteren überraschenden Latent-Effekt in erster Beugungsordnung bei starkem Verkippen, insbesondere in den zumindest ersten Bereichen, auf.

Eine alternative Variante zur Erzeugung eines golden eingefärbten Graustufenbildes insbesondere als Halbtonbild besteht darin, in einem flächigen ersten Bereich Pixel mit einem hochauflösenden Demetallisierungsverfahren vorzusehen, wobei in diesem ersten Bereich das Metall entfernt wird. Dies kann durch bekannte Strukturierungsverfahren bzw. Demetallisierungsverfahren erfolgen wie zum Beispiel Ätzverfahren und/oder Waschverfahren und/oder Belichtungsverfahren. Mit einer Hinterlegung sowohl der Metallschicht als auch der demetallisierten Bereiche mit einer zumindest partiell flächigen Farbschicht lässt sich dann das Graustufenbild mit einem guten Kontrast sichtbar machen. Zusätzlich sind hierbei Farbmischeffekte möglich.

Gemäß einem Ausführungsbeispiel der Erfindung kann der zumindest eine erste Bereich in einer ersten Elektrodenschicht angeordnet sein. Insbesondere ist die erste Elektrodenschicht in einem reflektiven Display angeordnet oder kann in einem reflektiven Display verwendet werden. Die erste Elektrodenschicht kann weitere Schichten oder Funktionselemente umfassen, wie beispielsweise elektrisch leitende Verbindungskomponenten und/oder elektromagnetische Abschirmungen und/oder thermische Abschirmungen und/oder optische Abschirmungen und/oder Schaltungen.

Hierdurch weist die erste Elektrodenschicht die durch den zumindest einen ersten Bereich generierten optischen Effekte auf.

Weiter ist es vorteilhaft, wenn oberhalb der ersten Elektrodenschicht eine schaltbare Schicht, beispielsweise eine elektrochrome Schicht oder eine Flüssigkristallschicht oder einer PDLC (polymer dispersed liquid crystal)-Schicht, angeordnet ist. Diese schaltbare Schicht zeichnet sich dadurch aus, dass ihre Erscheinung durch das Anlegen einer Spannung geändert werden kann. Insbesondere wenn keine Spannung angelegt ist, erscheint beispielsweise eine PDLC Schicht für einen Betrachter trüb bzw. erscheint sie transparent solange eine Spannung angelegt ist. Typischerweise ist die Dicke der schaltbaren Schicht im Bereich von 2 μm bis 20 μm.

Weiter kann oberhalb der ersten Elektrodenschicht und/oder der schaltbaren Schicht eine zweite Elektrodenschicht angeordnet sein. Die zweite Elektrodenschicht ist vorzugsweise transparent oder semitransparent ausgestaltet und/oder transparent und/oder weist eine Transmission, insbesondere im Wellenlängenbereich von 400 nm bis 700 nm, von mindestens 50 %, bevorzugt von mindestens 75 %, weiter bevorzugt von mindestens 90 %, auf. Beispiele für eine derartige transparente zweite Elektrodenschicht ist eine gedruckte Poly(3,4-ethylendioxythiophen) Polystyrolsulfonat (PEDOT:PSS) Schicht oder auch eine strukturierte, bevorzugt fein strukturierte, für das menschliche Auge transparent erscheinende Metallschicht. Beispielsweise kann eine derartige fein strukturierte Metallschicht aus einem Metallnetz und/oder aus einem Metallgitter bestehen, welches aus ca. 5 nm bis 100 nm breiten, in x-sowie in y-Richtung verlaufenden Metallbahnen aufgebaut ist, welche einen Abstand voneinander von beispielsweise 50 nm bis 1000 nm besitzen. Durch die Kreuzungspunkte des Netzes ist die Gesamtfläche des Metallnetzes elektrisch leitend verbunden.

Zweckmäßigerweise ist die erste Elektrodenschicht unterhalb der zweiten Elektrodenschicht angeordnet. Mit anderen Worten ist die erste Elektrodenschicht auf der einem Betrachter abgewandten Seite der zweiten Elektrodenschicht angeordnet. Insbesondere ist die schaltbare Schicht zwischen der ersten und der zweiten Elektrodenschicht angeordnet.

Hierdurch könnten vorteilhafterweise die Eigenschaften des zumindest einen ersten Bereichs in ein reflektives Display integriert werden. Insbesondere kann der optische Effekt der schaltbaren Schicht mit dem Farbeffekt der unteren Elektrodenschicht kombiniert werden. So wird bei einem reflektiven Display mit einer schaltbaren Schicht, beispielsweise einer PDLC-Schicht, insbesondere in einem Teilbereich des Displays, welcher durch das Anlegen einer elektrischen Spannung von trüb zu transparent schaltet, der goldene oder kupferne Farbeindruck der ersten Elektrodenschicht sichtbar oder zumindest verstärkt sichtbar. Ist jedoch keine Spannung an dem reflektiven Display angelegt, so ist der zumindest eine erste Bereich im Wesentlichen nicht sichtbar oder zumindest nur schwach sichtbar. Erhalten wird somit ein Funktionselement in einem reflektiven Display, welches für einen Betrachter im Wesentlichen nur erkennbar ist, solange eine entsprechende Spannung an dem reflektiven Display angelegt ist.

Insbesondere kann die schaltbare Schicht einen Farbstoff aufweisen und/oder eingefärbt sein wodurch sie zusätzlich zu der optischen Schaltfunktion noch eine Farbfilterfunktion erhält. Dies bietet den Vorteil, dass sich das Erscheinungsbild bei Anlegen der Spannung der schaltbaren Schicht von der Farbe des Farbstoffs zu der goldenen oder kupfernen Farbe der unteren Elektrodenschicht bei angelegter Spannung ändert. Somit werden die Gestaltungsmöglichkeiten noch weiter erhöht.

Vorzugsweise beträgt der Pigmentierungsgrad und/oder der Volumenanteil des Farbstoffs der schaltbaren Schicht weniger als 15 %, bevorzugt weniger als 10 %, weiter bevorzugt weniger als 5 %. Vorzugsweise handelt es sich bei dem Farbstoff der schaltbaren Schicht um einen löslichen Farbstoff oder um unlösliche Nanopartikel.

Gemäß einer weiteren Ausführungsvariante des erfindungsgemäßen Funktionselements ist dieses als Sensorelement ausgebildet, beispielsweise zum Nachweis einer nachzuweisenden Substanz und/oder der Änderung von Umgebungsbedingungen, wie Druck, Temperatur, Lichteinfall, elektrische Spannung und/oder Strom. Hierzu ist auf der dem Betrachter zugewandten Seite der Metallschicht erfindungsgemäß eine bevorzugt polymere Sensorschicht angeordnet. Die Sensorschicht ist wie bereits vorstehend erläutert ausgebildet. In der Sensorschicht ist der Farbstoff und/oder Lumineszenzstoff angeordnet, wobei der Farbstoff bevorzugt chromogen, bevorzugt thermochrom und/oder photochrom und/oder pH-sensitiv ist.

Dies führt zu dem vorteilhaften Effekt, dass die Sensorschicht ihren Brechungsindex und/oder Absorptionskoeffizienten im Sensorbereich ändert, wenn sie in Kontakt mit einer ausreichenden Menge der nachzuweisenden Substanz kommt. Dies führt zu einer für das menschliche Auge wahrnehmbaren Veränderung des Farbeindrucks. Aufgrund der erhöhten Absorption des Farbstoffes an der Oberfläche der zumindest einen Metallschicht mit der ersten Reliefstruktur ist diese Veränderung des Farbeindrucks bereits bei relativ niedrigen Konzentrationen der nachzuweisenden Substanz erkennbar. Der Verstärkungsmechanismus wird plasmonenverstärkte Absorption bezeichnet. Die für das menschliche Auge wahrnehmbare Veränderung des Farbeindrucks ist hierbei deutlich größer im Vergleich zu einer Metallschicht mit der Sensorschicht, welche keine Reliefstruktur aufweist.

Weiter ist es möglich, dass eine bevorzugt dielektrische Kontrastschicht bereichsweise, von einem Betrachter ausgesehen, oberhalb der Sensorschicht angeordnet ist, so dass sie bevorzugt zumindest Teilbereiche der Sensorschicht bedeckt und einen Kontakt mit der nachzuweisenden Substanz und/oder dem Einfluss der Änderung der Umgebungsbedingung verhindert. Bevorzugt weist die Kontrastschicht einen Brechungsindex auf, welcher nahe an dem Brechungsindex des Mediums ist, welches die nachzuweisende Substanz beinhaltet. Der Brechungsindex der Kontrastschicht unterscheidet sich bevorzugt um bis zu $\pm 10$ %, weiter bevorzugt um bis zu $\pm 5$ %, und noch weiter bevorzugt um bis zu $\pm 2$ % von dem Brechungsindex des Mediums, welches die nachzuweisende Substanz beinhaltet.

Somit bildet die Region, in der bevorzugt die zumindest eine erste Reliefstruktur, die Metallschicht und die Sensorschicht, aber nicht die Kontrastschicht angeordnet ist, einen Sensorbereich, der bevorzugt mit dem die nachzuweisenden Substanz enthaltende Medium in Kontakt steht und/oder dem Einfluss der Änderung der Umgebungsbedingung ausgesetzt ist.

Die Funktion dieser Kontrastschicht ist es, die überdeckten Teilbereiche der Sensorschicht von dem Kontakt mit der nachzuweisenden Substanz und/oder vor dem Einfluss der Umgebungsbedingungen zu schützen, damit diese Bereiche nicht die durch die nachzuweisenden Substanz ausgelöste Änderung des Farbeindrucks zeigen. Somit bietet die Kontrastschicht den vorteilhaften Effekt, dass für das menschliche Auge der Kontrast zwischen den Bereichen mit Farbwechsel und ohne Farbwechsel besonders gut wahrnehmbar ist.

Auch ist es möglich, dass das Funktionselement weiter eine filternde transparente, insbesondere eine offenporige, Schicht aufweist, welche, von einem Betrachter aus gesehen oberhalb der Sensorschicht angeordnet ist. Die filternde Schicht ist insbesondere im Sensorbereich angeordnet. Weiter ist die filternde Schicht insbesondere für die in dem Medium vorhandene nachzuweisende Substanz durchlässig und verhindert, dass andere in dem Medium vorhandene Substanzen die Sensorschicht erreichen. Weiter ermöglicht dies, ungewollte Reaktionen der Sensorschicht mit ebenfalls im Medium vorhandenen anderen Substanzen zu reduzieren oder zu verhindern. Optional ist noch eine, bevorzugt polymere, Versiegelungsschicht vorgesehen, welche verhindert, dass das Medium an den Rändern des Sensorelements austritt. Die bevorzugt polymere Versiegelungsschicht ist somit für das Medium nicht durchlässig und bevorzugt gegenüber dem Medium chemisch inert.

Auch ist es möglich, dass das Funktionselement einen vertikal laufenden Kanal, bevorzugt in Form einer Mikrofluidik, aufweist. Der Kanal ist bevorzugt durch die bevorzugt polymere Versiegelungsschicht gebildet und kann optional durch weitere bevorzugt polymere Versiegelungsschicht versiegelt sein. Bevorzugt ist die polymere Versieglungsschicht transparent ausgebildet. Hierdurch wird das Medium in dem Kanal an dem Sensorbereich vorbeigeleitet.

Die Herstellung eines Funktionselementes, insbesondere eines Sensorelements, kann wie folgt realisiert werden. Die erste Reliefstruktur kann mittels bekannter Methoden wie holographische Zweistrahlbelichtung oder mittels e-Beam-Lithographie auf einem Glassubstrat erstellt werden. Ein Nickelshim mit der ersten Reliefstruktur kann hiervon nach bekanntem Stand der Technik mittels eines galvanischen Kopiervorgangs gewonnen werden. Der Nickelshim kann nach bekannten Verfahren vervielfältig werden und anschliessend die erste Reliefstruktur in Rolle-zu-Rolle Verfahren, beispielsweise thermischer Replikation oder UV-Replikation, in flexibler Folie produziert werden.

Unter anderem kann es für ein Funktionselement, bevorzugt für ein Sensorelement, vorteilhaft sein, wenn die erste Reliefstruktur auf einem starren Substrat, beispielsweise einem Glassubstrat oder einem Quarzsubstrat, realisiert wird. Dies erleichtert das Handling von beispielsweise flüssigen Medien. Hierfür kann die erste Reliefstruktur von dem Nickelshim in einem UV-Kopierprozess direkt auf das starre Substrat, beispielsweise Glassubstrat oder Quarzsubstrat, kopiert werden. Bekannte Prozesse dafür verwenden sogenannte Sol-Gel-Materialien, wie beispielsweise Ormocer, welche in flüssiger Form auf das starre Substrat, aufgebracht werden. Anschließend wird der Nickelshim auf das starre Substrat, beispielsweise das Glassubstrat oder das Quarzsubstrat, aufgelegt, so dass ein dünner Film des Solgel-Materials zwischen dem starren Substrat und dem Nickelshim verbleibt. Danach erfolgt die Härtung des Solgel-Materials mittels UV-Strahlung durch das starre Substrat, beispielsweise Glassubstrat oder Quarzsubstrat, hindurch sowie die Ablösung des Nickel-Shims. Auf die Oberfläche der gehärteten Solgel-Schicht mit der ersten Reliefstruktur kann anschließend die Metallschicht aus dem Vakuum aufgedampft oder gesputtert werden. Auf die Metallschicht kann danach die Sensorschicht, beispielsweise mittels Spin-Coating, als dünne Schicht aufgebracht werden.

Alternativ oder zusätzlich kann während der Herstellung des erfindungsgemäßen Funktionselements vorzugsweise ein Teilbereich des Funktionselements, insbesondere der zumindest eine erste Bereich, mittels eines musterförmig ausgebildeten Prägestempels auf ein Substrat abgeprägt werden. Weiter ist es auch möglich, dass das Funktionselement mittels einer unspezifischen Laminierwalze auf ein Substrat vollflächig aufgebracht wird. Besonders vorteilhaft ist hier weiter, wenn die Oberfläche des Substrats, auf das das Funktionselement abgeprägt wird, eine Oberflächenstruktur, beispielsweise eine Mattstruktur, aufweist und der Prägedruck so gewählt wird, dass die Grundfläche der ersten Reliefstruktur gemäß der Oberflächenstruktur beim Abprägen verformt wird.

Weiter ist es auch möglich, das Funktionselement in einem Arbeitsgang mit einem Blindprägewerkzeug, in dessen Prägefläche eine Oberflächenstruktur abgeformt wird, zu bearbeiten. Der Prägedruck wird hierbei so gewählt, dass die Grundfläche der ersten Reliefstruktur gemäß der Oberflächenstruktur des Blindprägewerkzeugs beim Aufpressen das Blindprägewerkzeug verformt wird. Auch durch dieses Verfahren ist es möglich, in einem nachträglichen Arbeitsschritt das Funktionselement durch entsprechende Verformung der Grundfläche der zumindest einen ersten Reliefstruktur nachträglich zu individualisieren und so die bereits oben beschriebenen zusätzlichen optischen Effekte in das Funktionselement oder in ein Produkt, welches das Funktionselement aufweist, einzubringen.

Die Verwendung des Funktionselements in einem Produkt, beispielsweise einem Sicherheitsdokument oder einer dekorierten Oberfläche, hat sich als besonders gut herausgestellt. So kann das Funktionselement in dem Produkt beispielsweise je nach Gestaltung derart angeordnet sein, dass es in Draufsicht betrachtet wird, aber auch über einem Fensterbereich, so dass es in Draufsicht und Durchsicht betrachtet werden kann.

Obig angeführte Sachmerkmale können selbstverständlich äquivalent in einem Verfahren oder angeführte Verfahrensmerkmale in einem Produkt angewendet werden.

Aspekte verschiedener Ausführungsformen der Erfindung sind in den Ansprüchen spezifiziert.

Im Folgenden wird die Erfindung anhand von mehreren Ausführungsbeispielen unter Zuhilfenahme der beiliegenden Zeichnungen beispielhaft erläutert. Die gezeigten Ausführungsbeispiele sind daher nicht einschränkend zu verstehen.

Fig. 1          zeigt eine schematische Schnittdarstellung eines Produkts umfassend ein Funktionselement.

Fig. 2          zeigt einen Ausschnitt eines Produkts umfassend ein Funktionselement.

Fig. 3a und 3b          zeigen eine schematische Schnittdarstellung eines Funktionselements.

Fig. 4a, 4b und 4c      zeigen schematische Draufsichten von Funktionselementen.

Fig. 4d          zeigt eine schematische Schnittdarstellung eines Funktionselements.

Fig. 5a und 5b          zeigen Reflexionsspektren.

| | |
|---|---|
| Fig. 6a | zeigt eine schematische Reliefstruktur. |
| Fig. 6b | zeigt eine Draufsicht eines Funktionselements. |
| Fig. 7a | zeigt schematische Draufsichten eines Funktionselements. |
| Fig. 7b | zeigt eine Draufsicht eines Funktionselements. |
| Fig. 8a | zeigt einen Ausschnitt eines Funktionselements. |
| Fig. 8b und 8c | zeigen schematische Draufsichten eines Funktionselements. |
| Fig. 9 | zeigt eine Draufsicht eines Funktionselements. |
| Fig. 10 | zeigt zwei Draufsichten des gleichen Funktionselements in Auflichtbetrachtung und in Durchlichtbetrachtung. |
| Fig. 11a | zeigt die Draufsicht eines Funktionselements. |
| Fig. 11b und 11c | zeigen schematische Draufsicht eines Funktionselements. |
| Fig. 12 | zeigt eine Draufsicht eines Funktionselements. |
| Fig. 13 | zeigt eine Draufsicht eines Funktionselements. |
| Fig. 14 | zeigen schematische Draufsichten eines Funktionselements. |
| Fig. 15a bis 15d | zeigen eine schematische Schnittdarstellung eines Funktionselements. |
| Fig. 15e | zeigt eine schematische Draufsicht eines Funktionselements. |
| Fig. 16 | zeigt eine schematische Draufsicht eines Funktionselements. |
| Fig. 17 | zeigt eine schematische Schnittdarstellung eines Funktionselements. |
| Fig. 18 | zeigt eine schematische Darstellung eines Produkts umfassend ein Funktionselement. |
| Fig. 19 | zeigt eine schematische Schnittdarstellung eines Funktionselements. |
| Fig. 20 | zeigt eine schematische Darstellung eines Produkts umfassend ein Funktionselement. |

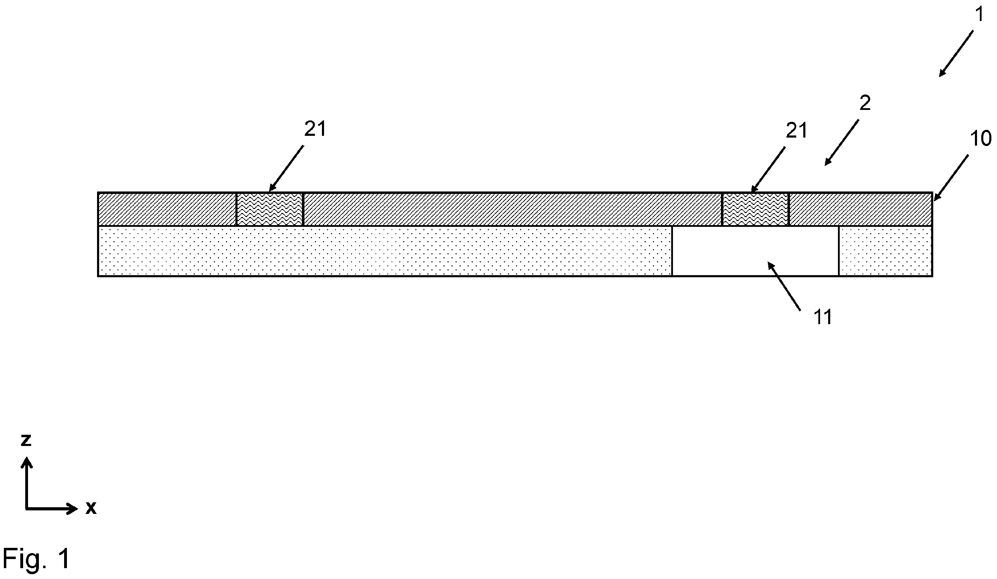

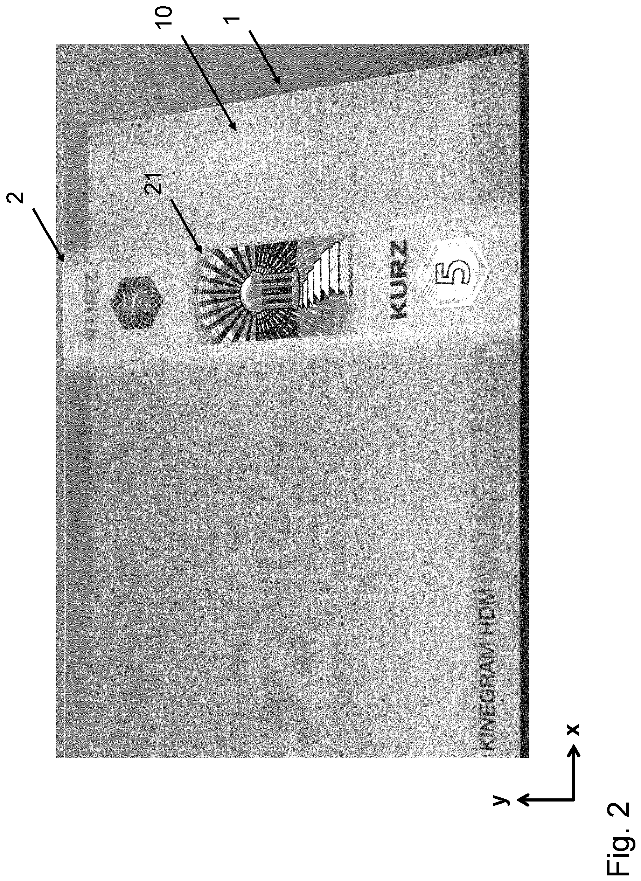

In Fig. 1 ist eine Schnittdarstellung eines beispielhaften Produkts 1 umfassend ein Funktionselement 2 dargestellt. Fig. 2 wiederum zeigt ein Ausführungsbeispiel eines Produkts 1 umfassend ein Funktionselement 2, beispielsweise nach der Schnittdarstellung von Fig. 1.

Bei dem Produkt 1 umfassend ein Funktionselement 2 nach Fig. 1 oder Fig. 2 handelt es sich beispielsweise um eine Banknote. Es ist jedoch auch möglich, dass es sich bei dem Produkt 1 beispielsweise um ein ID-Dokument, ein Etikett zur Produktsicherung oder zur Dekoration, eine ID-Karte oder Kreditkarte, Geldkarte, ein Hang-Tag eines kommerziellen Produkts oder ein Zertifikat insbesondere Software-Zertifikat, eine Verpackung, ein Bauteil für stationäre und/oder mobile Geräte, ein Spritzgussbauteil, ein direkt strukturiertes Aluminiumbauteil, ein Kraftfahrzeug, eine Dekorleiste, ein Farbfilter, einen Sensor, ein optisches Bauteil, eine Lichtsteuerung handelt. Die folgenden Ausführungen sind somit nicht auf eine Banknote beschränkt, sondern können ebenso bei den weiteren oben genannten Ausgestaltungsformen des Produkts 1 angewendet werden.

Das Produkt 1 weist hierbei ein Trägersubstrat 10 und ein auf dem Trägersubstrat 10 appliziertes Funktionselement 2 auf.

Bei dem Trägersubstrat 10 handelt es sich vorzugsweise um ein Papiersubstrat, beispielsweise mit einer Schichtdicke im Bereich von 50 $\mu$m bis 500 $\mu$m. Es ist jedoch auch möglich, dass es sich bei dem Trägersubstrat 10 um ein Kunststoffsubstrat oder um ein Trägersubstrat aus ein oder mehreren Kunststoff- und/oder Papierschichten handelt. Des Weiteren ist es auch möglich, dass auf dem Trägersubstrat 10 neben dem Funktionselement 2 auch ein oder mehrere weitere Funktionselemente appliziert oder in den Schichtaufbau oder die Schichten des Trägersubstrats 10 integriert sind. Das Trägersubstrat 10 kann so beispielsweise als weitere Funktionselemente ein oder mehrere der folgenden Elemente aufweisen: Wasserzeichen, Sicherheitsdruck, Sicherheitsfaden, Antenne, Chip, Patch oder Streifen mit zumindest einem Sicherheitsmerkmal, umfassend holographische oder beugungsoptische Strukturen.

Das Funktionselement 2 weist zumindest eine erste Reliefstruktur 13 in einem ersten Bereich 21 auf, sowie eine in zumindest einem Teilbereich der zumindest einen ersten Reliefstruktur 13 angeordnete Metallschicht 12 und optional eine bevorzugt polymere dielektrische Schicht auf der Seite der Metallschicht, welche dem Betrachter zugewandt ist.

Bevorzugt ist die zumindest eine Metallschicht 12 aus Aluminium und/oder Silber und/oder Palladium und/oder Platin und/oder Legierungen davon. Insbesondere ist die zumindest eine Metallschicht 12 aus Aluminium oder einer Legierung mit einem Aluminiumgewichtsanteil von mehr als 70 %, bevorzugt von mehr als 90 %, ausgebildet. Vorzugsweise wird die zumindest eine Metallschicht 12 aus dem Vakuum in dem zumindest einen ersten Teilbereich des zumindest einen ersten Bereich 21 aufgedampft und/oder aufgesputtert.

Alternativ kann die Metallschicht 12 auch zunächst vollflächig aufgebracht werden und anschließend in den Bereichen, welche kein Metall aufweisen sollen, wieder entfernt werden. Dies kann durch bekannte Strukturierungsverfahren bzw. Demetallisierungsverfahren erfolgen wie zum Beispiel Ätzverfahren und/oder Waschverfahren und/oder Belichtungsverfahren.

Es ist auch möglich, in die Oberfläche von Metallschichten und/oder von Metallfolien und/oder von Metallkörpern die erfindungsgemäßen Strukturen zu prägen und/oder die erfindungsgemäßen Strukturen mittels Laser (beispielsweise mittels Femtosekunden-Laser) in Oberflächen zu schreiben.

Gemäß einem bevorzugten Ausführungsbeispiel der Erfindung wird die Schichtdicke $d_{metal}$ der zumindest einen Metallschicht 12 so gewählt, dass diese eine optische Dichte (OD) ausgewählt aus einem Bereich von 0,9 bis 3,0, bevorzugt von 1,1 bis 2,5, weiter bevorzugt von 1,6 bis 1,9, aufweist. Insbesondere für eine Betrachtung des Funktionselements in Transmission ist es vorteilhaft, wenn die Metallschicht eine optische Dichte (OD) ausgewählt aus einem Bereich von 1,6 bis 1,9 aufweist. Hierdurch wird erreicht, dass ausreichend Lichtintensität insbesondere für die Betrachtung des Funktionselements in Transmission durch den Bereich mit der erfindungsgemäßen Struktur tritt. Gleichzeitig erscheinen Bereiche, insbesondere welche keine Struktur oder Strukturen, die deutlich weniger Licht durch eine Metallschicht treten lassen, ausreichend dunkel, um einen für das menschliche Auge gut wahrnehmbaren Kontrast zu erzeugen.

Vorzugsweisende ist das Funktionselement so ausgestaltet, dass eventuell oberhalb und/oder unterhalb der zumindest einen Metallschicht 12 angeordnete ein oder mehrere Schichten des Funktionselements 2 und/oder unterhalb der zumindest einen Metallschicht 12 eventuell vorgesehene ein oder mehrere Schichten des Funktionselements 2 transparent oder semitransparent ausgebildet sind, insbesondere eine Transmission, insbesondere im Wellenlängenbereich von 400 nm bis 700 nm, von mindestens 10 %, bevorzugt von mindestens 25 %, weiter bevorzugt von mindestens 75 %, noch weiter bevorzugt von mindestens 90 %, in zumindest einem Teilbereich des zumindest einen ersten Bereichs 21 aufweisen.

Bei dem Funktionselement 2 handelt es sich beispielsweise um eine Transferfolie, eine Labelfolie, eine Laminierfolie oder einen Sicherheitsfaden. Ferner kann das Funktionselement 2, insbesondere der zumindest eine erste Bereich 21, vorzugsweise noch ein oder mehrere weitere Schichten ausgewählt aus der Gruppe aufweisen: Replizierschicht, dielektrische Schicht, Schicht aus einem Farbstoff, Schicht aus einem Lumineszenzstoff, lasierende Farbschicht, Maskenschicht, Polymerschicht, Metallschicht, Schutzlackschicht, Kleberschicht, Ablöseschicht, Primerschicht, Barriereschicht, poröse Schicht, Kontrastschicht, Versiegelungsschicht, Haftvermittlerschicht, Trägerschicht, Dekorschicht. Die vorgenannten Schichten können jeweils einzeln oder auch in beliebiger Kombination miteinander in dem Funktionselement, insbesondere in dem zumindest einen ersten Bereich 21, oberhalb und/oder unterhalb der zumindest einen ersten Reliefstruktur 13 angeordnet sein. Die Schichten können dabei vollflächig wie auch nur partiell, d. h. bereichsweise, aufgebracht sein. Beispielsweise können eine oder mehrere der Schichten musterförmig angeordnet sein. Mehrere musterförmige Schichten können auch zueinander im Register angeordnet sein.

Das erfindungsgemäße Funktionselement 2 weist so beispielsweise eine Trägerfolie, vorzugsweise eine transparente Kunststofffolie bevorzugt aus PET, PC, PE, BOPP mit einer Dicke zwischen 10 $\mu$m und 500 $\mu$m, eine transparente Replizierschicht, bevorzugt aus einem thermoplastischen oder UV-härtbaren Replizierlack, eine Kleberschicht, bevorzugt eine Kaltkleberschicht, eine Heißkleberschicht oder eine UV-härtbare Kleberschicht und eine Polymerschicht, bevorzugt aus bekannten Lacksystemen mit einem Brechungsindex im Bereich von 1,45 bis 1,55, auf.

Weiter weist das erfindungsgemäße Funktionselement 2 vorzugsweise keine zusätzlichen dünnen Schichten aus hochbrechenden Materialien wie ZnS oder $TiO_2$ oder keine mit insbesondere hochbrechenden Nanopartikeln gefüllten polymeren Lackschichten auf, welche insbesondere oberhalb und/oder unterhalb der zumindest einen Metallschicht 12 angeordnet sind.

Weiter ist es vorteilhaft, wenn oberhalb und/oder unterhalb der zumindest einen Metallschicht 12 eine dielektrische Schicht, beispielsweise aus niedrigbrechendem Material wie $MgF_2$ und/oder aus einer niedrigbrechenden Polymerschicht, angeordnet ist. Vorzugsweise wird die dielektrische Schicht aufgedruckt oder aufgedampft, derart, dass sie vollflächig oder bereichsweise auf der Oberfläche der zumindest einen Metallschicht 12 angeordnet ist. Eine niedrigbrechende Schicht weist insbesondere einen Brechungsindex von höchstens 1,45 auf.

Gemäß einem bevorzugten Ausführungsbeispiel der Erfindung weist das Funktionselement 2 in den ersten Bereichen 21 oder in dem zumindest einen ersten Bereich 21 mindestens einen Farbstoff und/oder einen Lumineszenzstoff auf, welcher insbesondere in einer Schicht angeordnet ist. Der Farbstoff und/oder Lumineszenzstoff ist bevorzugt weniger als 1 μm, weiter bevorzugt weniger als 750 nm, noch weiter bevorzugt weniger als 500 nm, ferner noch weiter bevorzugt weniger als 300 nm weit von einer der Oberflächen der zumindest einen Metallschicht 12 entfernt angeordnet. Vorzugsweise ist der Farbstoff und/oder der Lumineszenzstoff in der dielektrischen Schicht oder einer polymeren Schicht angeordnet.

Der Farbstoff kann mit einem Druckverfahren oder aus dem Vakuum aufgebracht werden. Beispiele für aus dem Vakuum aufgebrachten Farbstoffen sind Patinal Schwarz A bzw. Braun A von Merck sowie Licht im sichtbaren Spektralbereich, bevorzugt im Wellenlängenbereich von 400 nm bis 700 nm, absorbierende Metalle wie Gold, Kupfer oder Chrom.

Bevorzugt ist der Farbstoff und/oder der Lumineszenzstoff lediglich bereichsweise auf der zumindest einen Metallschicht 12 angeordnet. Weiter ist der Farbstoff und/oder der Lumineszenzstoff lediglich dort vorgesehen, wo die zumindest eine Metallschicht 12 an die zumindest eine erste Reliefstruktur 13 angrenzt und den somit oben beschriebenen Effekt generiert.

Beim Einsatz von Druckverfahren kommen bevorzugt andere Farbstoffe zum Einsatz als bei dem Aufbringen aus dem Vakuum. Vorzugsweise handelt es sich bei dem Farbstoff und/oder dem Lumineszenzstoff um einen löslichen Farbstoff bzw. Lumineszenzstoff oder um unlösliche Nanopartikel oder Pigmente. Vorzugsweise werden als Farbstoff Farbstoffe folgender Stoffgruppen eingesetzt: Metallkomplexfarbstoffe, insbesondere mit $Cr^{3+}$ oder $Co^{2+}$ als Zentralatom. Vorzugsweise werden Lumineszenzstoffe ausgewählt einzeln oder in Kombination aus folgenden Stoffgruppen eingesetzt: Cumarine, Rhodamine und Cyanine.

Der Pigmentierungsgrad und/oder der Volumenanteil des Farbstoffs und/oder des Lumineszenzstoffs kann in der, den Farbstoff und/oder den Lumineszenzstoff enthaltenden, Schicht bis zu 100 % betragen, insbesondere wenn der Farbstoff und/oder der Lumineszenzstoff aus dem Vakuum aufgebracht wird. Bevorzugt beträgt der Pigmentierungsgrad und/oder der Volumenanteil des Farbstoffs und/oder des Lumineszenzstoffs mehr als 50 % und weiter bevorzugt mehr als 75 % und insbesondere bevorzugt mehr als 90 %. Bei derart hohen Pigmentierungsgraden und/oder Volumenanteilen des Farbstoffs und/oder des Lumineszenzstoffs kann die Farbstoffschicht extrem dünn ausgestaltet werden, wodurch der Farbstoff und/oder der Lumineszenzstoff maximal nahe an der Metallschicht vorliegt.

Vorzugsweise beträgt der Pigmentierungsgrad und/oder der Volumenanteil des Farbstoffs und/oder des Lumineszenzstoffs der den Farbstoff und/oder den Lumineszenzstoff enthaltenden, im Druckverfahren aufgebrachten, Schicht weniger als 15 %, bevorzugt weniger als 10 %, weiter bevorzugt weniger als 5 %, insbesondere wenn Farbstoffe und/oder Lumineszenzstoffe zum Einsatz kommen, welche ohne eine stabilisierende Matrix, z. B. aus Polymer, keine ausreichende Haftung zu der Metallschicht aufweisen und/oder mit der Metallschicht eine chemische Reaktion bewirken würden. Auch Mischungen von unterschiedlichen Pigmenten und/oder Farbstoffen und/oder Lumineszenzstoffen können zum Einsatz kommen.

Die den Farbstoff und/oder den Lumineszenzstoff enthaltende Schicht ist vorzugsweise transparent und/oder weist eine Transmission, insbesondere im Wellenlängenbereich von 400 nm bis 700 nm, von mindestens 10 %, bevorzugt von mindestens 25 %, weiter bevorzugt von mindestens 75 %, noch weiter bevorzugt von mindestens 90 %, auf. Hiermit wird insbesondere gewährleistet, dass wenn der Farbstoff auch in Teilbereichen aufgebracht ist, in der keine Reliefstruktur und keine Metallschicht angeordnet ist, keine wesentliche Färbung einer darunter liegenden Schicht erkennbar ist.

Durch das Anordnen des Farbstoffs und/oder des Lumineszenzstoffs kann der generierte erste Farbeindruck insbesondere in direkter Reflexion gezielt verändert werden. Beispielsweise ist es möglich, dass der Farbstoff und/oder der Lumineszenzstoff ein Absorptionsmaximum bei einer Wellenlängen von 550 nm aufweist, wobei die Absorption eine Gaußverteilung mit einer Breite ausgewählt aus einem Bereich von 25 nm bis 100 nm, bevorzugt von 40 nm bis 60 nm, aufweist. Da dies zu einem tiefen Einbruch der Reflexion bei 550 nm führen würde, resultiert das Anordnen eines derartigen Farbstoffs und/oder Lumineszenzstoffs in einem rötlichen ersten Farbeindruck.

Der Farbstoff und/oder der Lumineszenzstoff kann vollflächig oder auch nur partiell in einzelnen Flächenbereichen vorgesehen sein. Durch ein flächenbereichsweises partielles Aufbringen wird erreicht, dass der erste Farbeindruck nur in den Flächenbereichen mit Farbstoff und/oder Lumineszenzstoff zu beobachten ist und das benachbart dazu, wo kein Farbstoff und/oder kein der Lumineszenzstoff aufgebracht ist, der erste Farbeindruck nicht vorhanden ist. Dadurch lassen sich Designs erzeugen, die einen Kontrast des ersten Farbeindrucks zu anderen optischen Effekten erzeugen.

Weiter ist es möglich, dass zumindest bereichsweise oder vollflächig auf dem zumindest einen ersten Bereich 21 oder weiteren Bereichen eine lasierende Farbschicht 14 vollflächig oder partiell angeordnet ist. Diese lasierende Farbschicht 14 kann direkt an die Metallschicht 12 angrenzen oder durch eine dielektrische Zwischenschicht von der Metallschicht 12 beabstandet sein. Die zumindest eine lasierende Farbschicht 14 wirkt hierbei als Farbfilter und erzeugt für einen Betrachter einen erfassbaren Farbeindruck in der entsprechenden Färbung des Farbfilters. Zusätzlich zu der Farbfilterwirkung kann die lasierende Farbschicht bei entsprechend geringem Abstand von der Metallschicht 12 von bevorzugt weniger als 1 $\mu$m, weiter bevorzugt weniger als 750 nm, noch weiter bevorzugt weniger als 500 nm, ferner noch weiter weniger als 300 nm, auch wie oben beschrieben den ersten Farbeindruck durch stark erhöhte Absorption und/oder Fluoreszenz mittels plasmonenverstärkter Absorption sowie plasmonengekoppelter Emission verändern.

Der für einen Betrachter erfassbare Farbeindruck der ersten Reliefstruktur und/oder der weiteren Reliefstrukturen und/oder der Spiegelflächen unterhalb der lasierenden Farbschicht 14 kann als Kombination der optischen Effekte der entsprechenden Reliefstrukturen und/oder Spiegelflächen mit der Einfärbung durch die lasierende Farbschicht 14 bestimmt sein.

Insbesondere ist die zumindest eine lasierende Farbschicht 14 transparent und/oder weist eine Transmission, insbesondere im Wellenlängenbereich von 400 nm bis 700 nm, von mindestens 10 %, bevorzugt von mindestens 25 %, weiter bevorzugt von mindestens 75 %, noch weiter bevorzugt von mindestens 90 %, auf.

Zwei oder mehrere lasierende Farbschichten 14 können nebeneinander vorliegen. Alternativ können auch zwei oder mehrere lasierende Farbschichten 14 zumindest bereichsweise überlappend vorliegen. In den Überlappungsbereichen der zwei oder mehreren lasierenden Farbschichten 14 bildet sich eine Mischfarbe aus den Farben der zwei oder mehreren Farbschichten 14 und insbesondere den darunterliegenden zumindest einen ersten Bereich 21 aus.

Bevorzugt beträgt die Dicke der zumindest einen lasierenden Farbschicht 14 weniger als 10 $\mu$m, bevorzugt weniger als 5 $\mu$m, weiter bevorzugt weniger als 2 $\mu$m. Insbesondere beträgt der Pigmentierungsgrad und/oder der Volumenanteil des Farbstoffs und/oder Lumineszenzstoffs der lasierenden Farbschicht 14 weniger als 15 %, bevorzugt weniger als 10 %, noch weiter bevorzugt weniger als 5 %. Vorzugsweise handelt es sich bei dem Farbstoff der lasierenden Farbschicht 14 um lösliche Farbstoffe.

In einer Ausgestaltungsform kann die zumindest eine lasierende Farbschicht 14 in einem Abstand von einer der Oberflächen der zumindest einen Metallschicht 12 von weniger als 500 nm, bevorzugt weniger als 200 nm, noch weiter bevorzugt in direktem Kontakt mit einer der Oberflächen zumindest einen Metallschicht 12 angeordnet sein.

Weiter ist es auch möglich, dass der zumindest eine erste Bereich 21 einen Teilbereich aufweist, der musterförmig ausgebildet ist und insbesondere einen diesen Teilbereich umgebenen Teilbereich aufweist. Weiter kann in dem umgebenden Teilbereich zumindest eine Schicht, insbesondere eine Maskenschicht 12, angeordnet sein, welche opak ausgebildet ist, sodass der von der zumindest einen Metallschicht 12 und der zumindest einen ersten Reliefstruktur 13 generierte optische Effekt lediglich in dem Teilbereich des zumindest einen ersten Bereichs sichtbar ist, der nicht von der opaken Schicht bedeckt ist.

Das Funktionselement 2 erstreckt sich in dem Ausführungsbeispiel nach Fig. 1 und Fig. 2 beispielsweise über zumindest eine Breite oder Länge des Produkts 1.

Weiter deckt das Funktionselement 2 einen Fensterbereich 11 des Trägersubstrats 10 ab, in dem das Trägersubstrat 10 eine Ausnehmung oder Durchbrechung aufweist oder transparent ausgebildet ist. Damit ist in diesem Bereich das Funktionselement 2 bzw. zumindest ein erster Bereich 21 umfassend zumindest eine erste Reliefstruktur 13 sowohl bei Betrachtung von der Vorderseite, als auch bei Betrachtung von der Rückseite des Produkts 1 sichtbar. Hierbei kann insbesondere das Vorliegen eines unterschiedlichen Farbeindrucks von der Vorderseite im Vergleich zur Rückseite überprüft werden. Beispielsweise kann das Funktionselement 2 in dem Fensterbereich von der Vorderseite betrachtet kupferfarben und von der Rückseite her betrachtet goldfarben erscheinen. Der unterschiedliche Farbeindruck kann erzeugt werden durch: ein asymmetrisches Gitterprofil und/oder einen unterschiedlichen Brechungsindex der dielektrischen Schicht auf den beiden Seiten der Metallschicht 12 und/oder eine Farbstoffschicht auf einer der beiden Seiten der Metallschicht 12.

Alternativ oder zusätzlich kann das Funktionselement 2 einen ersten Bereich 21 aufweisen, welcher nicht in einem Fensterbereich 12 des Produkts 1 angeordnet ist, sondern vollständig auf einem opaken Bereich des Substrats 10 appliziert ist. Ein derartiges Funktionselement 2 kann beispielsweise in seiner Formgebung als Patch oder als Streifen ausgebildet sein.

Weiter ist es auch möglich, dass das Funktionselement 2 in Schichten des Trägersubstrats 10 eingebettet ist, insbesondere wenn es sich bei dem Produkt 1 um ein kartenförmiges Produkt 1 handelt. In diesem Fall wird das Funktionselement 2 als Patch oder Streifen auf einer Lage des kartenförmigen Produkts 1 bereitgestellt und anschließend mit weiteren Lagen des kartenförmigen Produkts 1 laminiert und so in das kartenförmige Produkts 1 eingebettet.

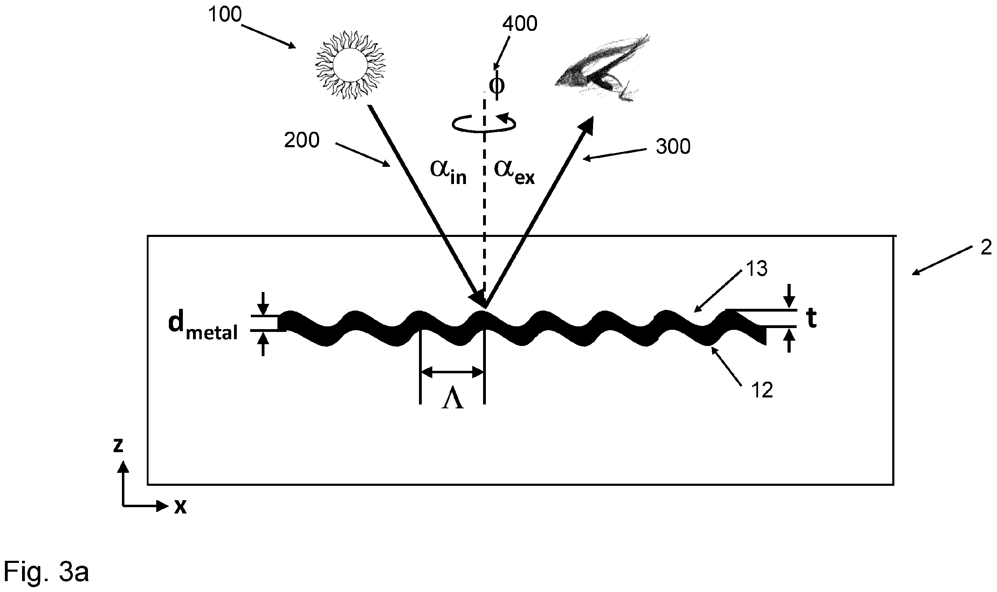

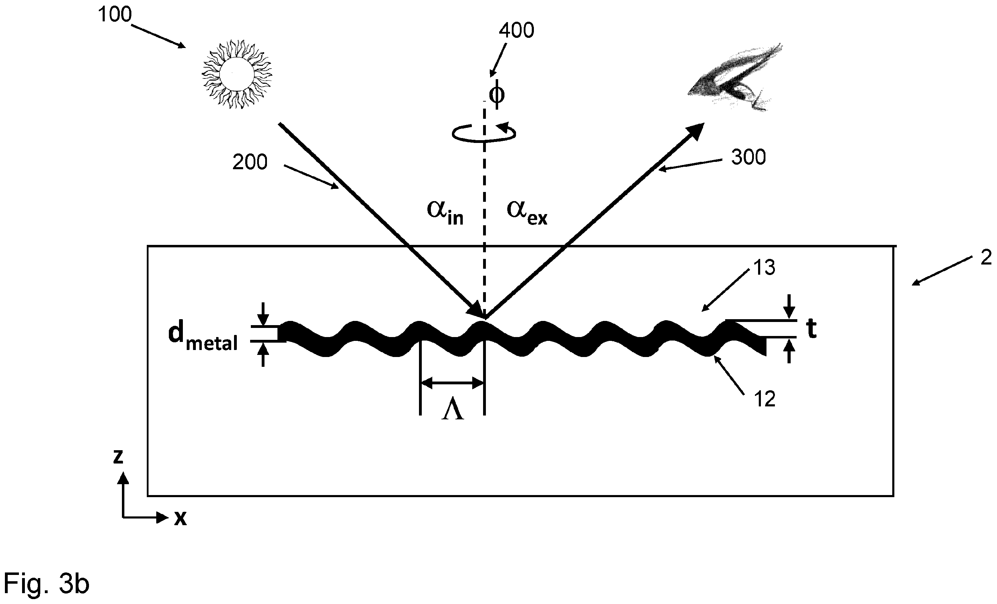

Fig. 3a und 3b zeigen einen Ausschnitt eines erfindungsgemäßen Funktionselements 2, beispielsweise nach Fig. 1 oder Fig. 2 und sollen verschiedenen Parameter der Profilform verdeutlichen. So weist das Funktionselement 2 eine erste Reliefstruktur 13 in zumindest einem ersten Bereich 21 auf. Auch ist eine Metallschicht 12 mit einer Schichtdicke $d_{metal}$ in einem Teilbereich der zumindest einen ersten Reliefstruktur 13 angeordnet und optional eine bevorzugt polymere dielektrische Schicht auf der Seite der Metallschicht 12, welche dem Betrachter zugewandt ist, angeordnet.

Die zumindest eine Reliefstruktur 13 weist in zumindest einer durch einen zugeordneten Azimutwinkel bestimmten Richtung eine Abfolge von Erhebungen und Vertiefungen auf, deren Erhebungen mit einer Gitterperiode $\Lambda$ aufeinander abfolgen, welche kleiner als eine Wellenlänge des sichtbaren Lichtes sind. Die eine erste Reliefstruktur 13 weist weiter eine Relieftiefe t auf.

Der Farbeindruck bzw. Farbeffekt der Reliefstruktur 13 ist in direkter Reflexion sichtbar, also im Spiegelreflex bzw. unter der Bedingung, dass $\alpha_{in} = \alpha_{ex}$ ist, wobei $\alpha_{in}$ der Winkel des einfallenden Lichts 100, 200 und $\alpha_{ex}$ der Winkel des reflektierten Lichts 300, gegen die Flächennorm der Grundfläche bzw. Normalen 400, ist. Bevorzugt wird durch entsprechende Wahl der Relieftiefe t und der Profilform der Reliefstruktur 13 weiter auch ein klar erkennbarer Farbwechsel erzeugt, wenn der Einfallswinkel und Ausfallswinkel gleichzeitig beispielsweise aus einem Bereich von 0° bis 30° (siehe Fig. 3a) auf beispielsweise einen Einfallswinkel und Ausfallswinkel im Bereich von 30° bis 60° (siehe Fig. 3b) geändert wird. Das erfindungsgemäße Funktionselement 2 ist derart gestaltet, dass bei einer derartigen Änderung von einem ersten Einfallswinkel zu einem zweiten Einfallswinkel anstatt einem ersten, ein zweiter Farbeindruck wahrgenommen wird.

Vorzugsweise ist die Profilform und/oder die Relieftiefe und/oder Gitterperiode der zumindest ersten Reliefstruktur 13 weiter so gewählt, dass bei einem vom ersten Einfallswinkel unterschiedlichen zweiten Einfallswinkel die farbige Erscheinung des im ersten Teilbereich direkt reflektierten bzw. durch die zumindest eine Metallschicht 12 direkt transmittierten Lichts unterschiedlich verändert wird.

Insbesondere zeigt sich bei einem ersten Einfallswinkel ein erster Farbeindruck in direkter Reflexion und bei einem zweiten Einfallswinkel ein zweiter Farbeindruck in direkter Reflexion, wobei, insbesondere ausgehend von der Normalen 400 senkrecht auf der Grundebene der Reliefstruktur 13, der erste Einfallswinkel ausgewählt ist aus einem Bereich von 0° bis 30° und insbesondere wobei der zweite Einfallswinkel um einen Wert, ausgewählt aus einem Bereich von 10° bis 45°, größer ist als der erste Einfallswinkel. Hiermit wird ein definierter Farbwechsel beim Verkippen bzw. ein Farbkippeffekt ermöglicht. Damit zeigen sich unter dem ersten bzw. dem zweiten Einfallswinkel bei Auflichtbetrachtung und/oder. Durchlichtbetrachtung für den menschlichen Betrachter, insbesondere unterschiedliche, relativ stabile Farbeindrücke in direkter Reflexion.

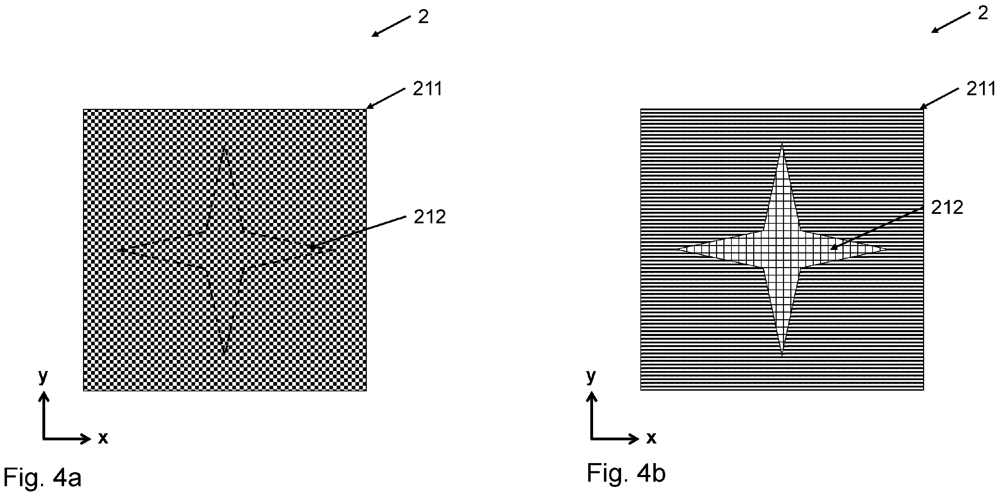

Fig. 4a und Fig. 4b zeigen eine beispielhafte Ausführungsform des erfindungsgemäßen Funktionselements, welches zwei erste Bereiche 211, 212 mit jeweils einer Reliefstruktur 13 und eine auf den Reliefstrukturen angeordneten Metallschicht 12 aufweist. Weiter kann das Funktionselement optional eine bevorzugt polymere dielektrische Schicht aufweisen, welche auf der Seite der Metallschicht, welche dem Betrachter zugewandt ist, angeordnet ist. In beiden ersten Bereichen 211, 212 weist die Reliefstruktur die gleiche Profilform und Relieftiefe und Gitterperiode auf. Wird das Funktionselement 2 in Fig. 4a unter einem ersten Einfallswinkel betrachtet, so ist für einen Betrachter in beiden ersten Bereichen 211, 212 somit der gleiche erste Farbeindruck erkennbar und das Funktionselement 2 erscheint einfarbig. Wird das Funktionselement 2 unter dem zweiten Einfallswinkel betrachtet, wie in Fig. 4b schematisch dargestellt, so kann für beide Bereiche 211, 212 ein zweiter Farbeindruck wahrgenommen werden. Dieser zweite Farbeindruck ist unterschiedlich vom ersten goldenen oder kupfernen Farbeindruck und ist weiter für beide Bereiche unterschiedlich. Ein Betrachter erkennt somit beispielsweise einen grünen Stern in einem ersten Bereich 212 vor einem magentafarbenen Hintergrund des weiteren ersten Bereichs 211. Dieser zweite Farbeindruck ist insbesondere abhängig von dem Azimutwinkel der Reliefstruktur 13. So weist beispielsweise der eine erste Bereich 212 einen Azimutwinkel von 0° oder 90° und der weitere erste Bereich 211 dagegen einen um mindestens 15°, bevorzugt um 30° und weiter bevorzugt um 45°, gedrehten bzw. unterschiedlichen Azimutwinkel auf.

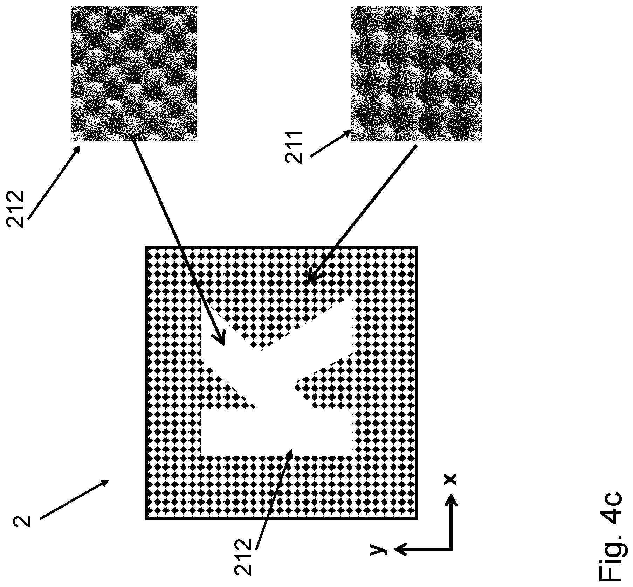

Beispielsweise ist zur Verdeutlichung in dem Ausführungsbeispiel eines Funktionselements 2 nach Fig. 4c hierzu ein K-förmiger erster Bereich 212 derart ausgestaltet, dass er einen Azimutwinkel von 45° aufweist, während der den K-förmigen Bereich umgebenen Bereich 211 mit einem Azimutwinkel von 0° ausgestaltet ist. Da die beiden ersten Bereiche 211, 212 die gleiche Profilform, Relieftiefe oder Gitterperiode aufweisen entsteht in beiden ersten Bereichen unter einem ersten Einfallswinkel und Ausfallswinkel der gleiche erste Farbendruck in direkter Reflexion. Vorteilhaft ist hierbei, dass dieser Farbkippeffekt strukturbasierend, und somit im perfekten Register zu anderen strukturbasierten Effekten ist.

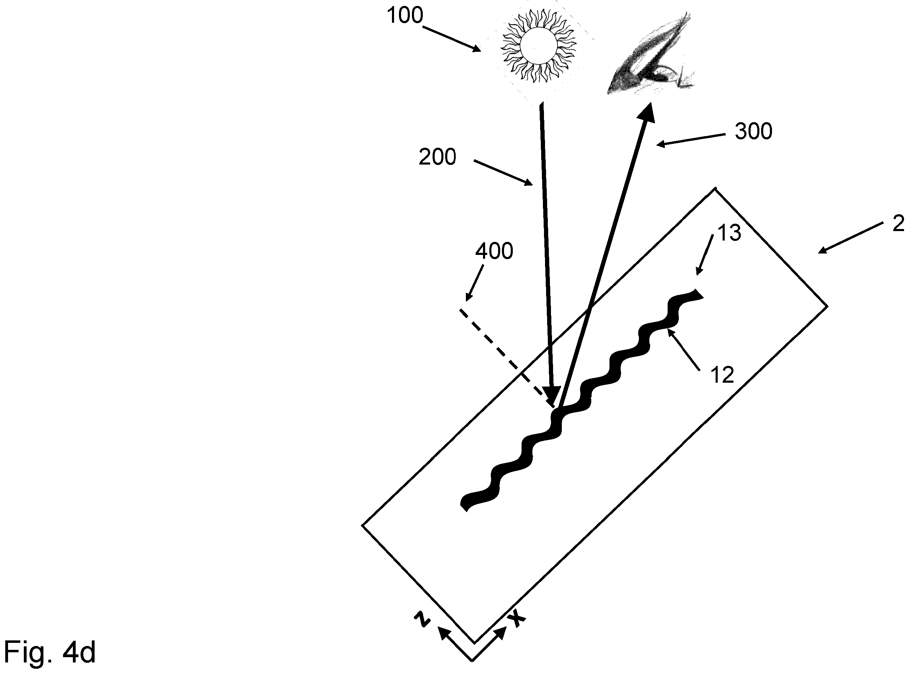

Erfindungsgemäß zeigt sich bei einem vom ersten und zweiten Einfallswinkel unterschiedlichen dritten Einfallswinkel von 60° oder mehr zur Normalen 400 - wie es beispielhaft in Fig. 4d dargestellt ist - durch das im zumindest einen ersten Bereich 21 in die erste Beugungsordnung gebeugte Licht eine optische Erscheinung, welche von den optischen Erscheinungen der ersten und zweiten Einfallswinkel unterschiedlich ist.

Gemäß einer bevorzugten Ausführungsform des erfindungsgemäßen Funktionselements ist die Gitterperiode $\Lambda$ und/oder die Profilform und/oder Relieftiefe t der ersten Reliefstruktur 13 derart ausgestaltet, dass der zumindest eine erste Bereich 21 für einen Einfallswinkel bzw. Betrachtungswinkel von 0° bis 30° erfindungsgemäß eine um mindestens 10 % niedrigere Reflexion des eingestrahlten Lichts in mindestens 75 % des Wellenlängenbereichs von 400 nm bis 500 nm im Vergleich zur Reflexion in mindestens 75 % des Wellenlängenbereichs von 525 nm bis 700 nm aufweist.

Bevorzugt ist es, wenn die Profilform und/oder Relieftiefe t der ersten Reliefstruktur 13 derart ausgestaltet, dass der zumindest eine erste Bereich 21 eine um mindestens 15 % niedrigere Reflexion des eingestrahlten Lichts in mindestens 70 % des Wellenlängenbereichs von 400 nm bis 500 nm im Vergleich zur Reflexion in mindestens 70 % des Wellenlängenbereichs von 525 nm bis 700 nm aufweist, weiter bevorzugt dass der zumindest eine erste Bereich 21 eine um mindestens 15 % niedrigere Reflexion des eingestrahlten Lichts in mindestens 90 % des Wellenlängenbereichs von 400 nm bis 500 nm im Vergleich zur Reflexion in mindestens 90 % des Wellenlängenbereichs von 525 nm bis 700 nm aufweist und noch weiter bevorzugt, dass der zumindest eine erste Bereich 21 eine um mindestens 20 % niedrigere Reflexion des eingestrahlten Lichts in mindestens 90 % des Wellenlängenbereichs von 400 nm bis 500 nm im Vergleich zur Reflexion in mindestens 90 % des Wellenlängenbereichs von 525 nm bis 700 nm aufweist.

Zusätzlich zu den bevorzugten Ausgestaltungen der Profilform und/oder Relieftiefe t und/oder Gitterperiode Λ der ersten Reliefstruktur, ist es bevorzugt, dass der zumindest eine erste Bereich 21 eine direkte Reflexion des eingestrahlten Lichts in mindestens 90 % des Wellenlängenbereichs von 525 nm bis 700 nm größer als 30 %, bevorzugt größer als 40 %, bevorzugt größer als 50 %, aufweist, damit der erste Farbeindruck nicht als zu dunkel erscheint.

Der Wellenlängenbereich von 400 nm bis 500 nm entspricht insbesondere dem Wellenlängenbereich des violetten und blauen Lichts und der Wellenlängenbereich von 525 nm bis 700 nm insbesondere dem Wellenlängenbereich des grünen, gelben, orangenen und roten Lichts. Durch obig genannte Ausgestaltung des zumindest einen ersten Bereichs 21, insbesondere hinsichtlich der Profilform und/oder Relieftiefe t und/oder Gitterperiode Λ, ergibt sich somit, dass der Anteil an blauem und/oder cyanfarbenen, reflektierten Licht geringer ist als die Anteile des restlichen reflektierten Lichts des für das menschliche Auge sichtbaren Wellenlängenbereichs, bevorzugt von 400 nm bis 700 nm. Dadurch erscheint für einen Betrachter der erste Farbeindruck in direkter Reflexion in einem goldenen oder kupfernen Farbton.

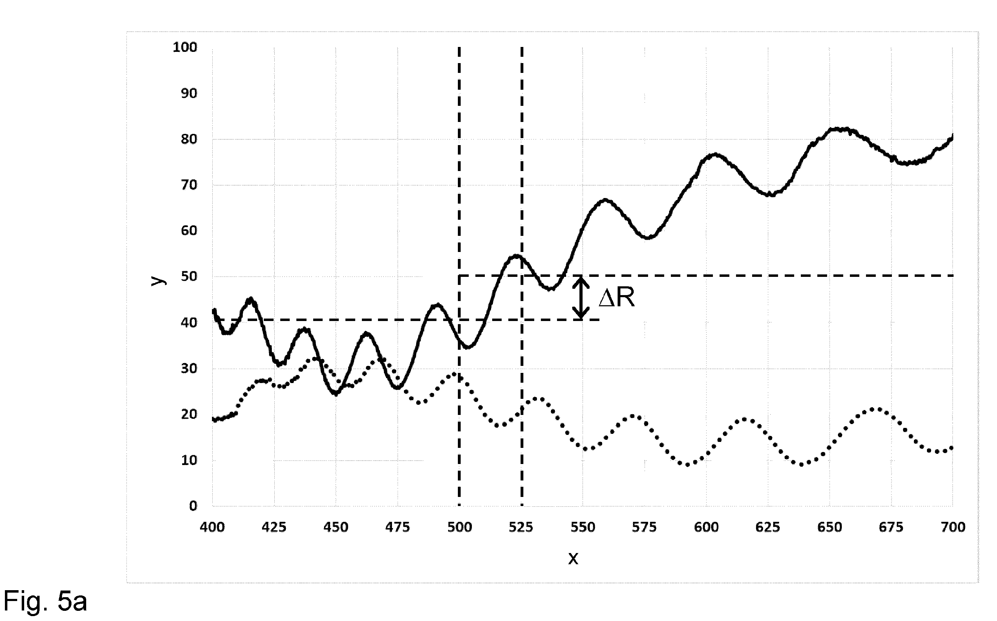

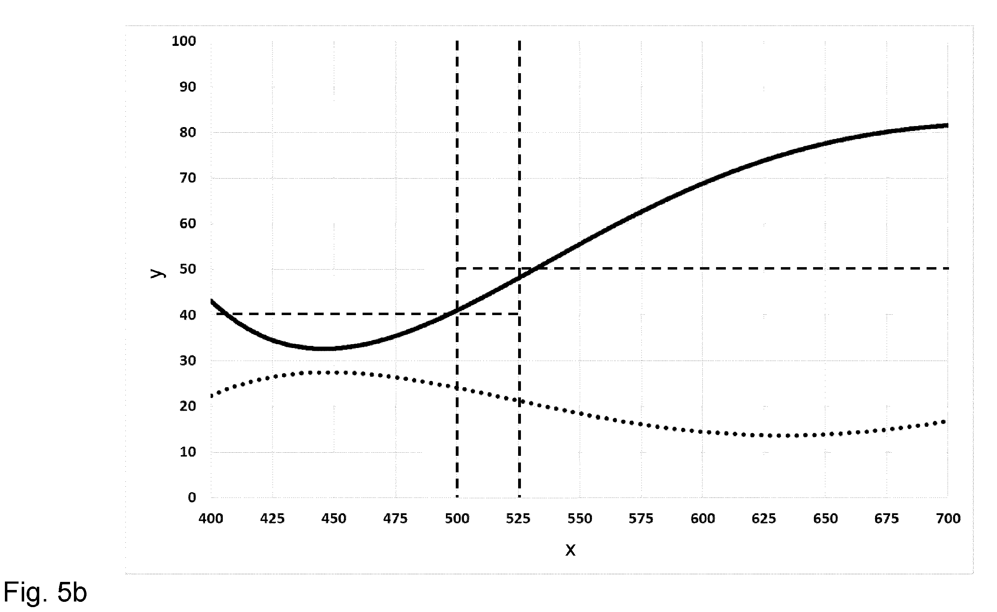

Fig. 5a und 5b zeigen Reflexionsspektren einer Reliefstruktur eines ersten Bereichs 21 eines erfindungsgemäßen Funktionselements 2 (durchgezogene Linie), um vorstehende Ausführungen zu verdeutlichen. Die gepunktete Linie entspricht einem beispielhaften dritten Bereich 23, der insbesondere eine dunkle oder schwarze Farbgebung generiert, zum direkten Vergleich. In Fig. 5a sind die Spektren mit den gemessenen Originaldaten eingezeichnet, während in Fig. 5b die gleichen mit einem Polynom 5. Grades angefitteten Spektren dargestellt sind. Die Messungen wurden jeweils in einem Wellenlängenbereich von 400 nm bis 700 nm durchgeführt (x-Achse), während auf der y-Achse die erhaltenen Werte für die Reflexion zwischen 0 % und 100 % aufgetragen sind.

Deutlich ist zu erkennen, dass das Reflexionsspektrum des ersten Bereichs 21 eine höhere Reflexion im Vergleich zu dem dritten Bereich 23 aufweist. Weiter ist die Reflexion des ersten Bereichs 21 im Wellenlängenbereich von 525 nm bis 700 nm höher als im Wellenlängenbereich von 400 nm bis 500 nm. Der eingezeichnete Parameter ΔR steht für den vorstehend angeführten bevorzugten Unterschied der Wellenlängenbereiche und ist zur besseren Orientierung durch die waagrechten und senkrechten gestrichelten Linien verdeutlicht.

Gemäß einem bevorzugten Ausführungsbeispiel eines Funktionselements 2, wie es beispielsweise in Fig. 1 oder Fig. 2 gezeigt ist, ist die Profilform der zumindest einen ersten Reliefstruktur 13 in x-Richtung und/oder y-Richtung asymmetrisch ausgestaltet. Mit anderen Worten ist die Profilform der zumindest einen ersten Reliefstruktur 13 in x-Richtung und/oder y-Richtung nicht symmetrisch ausgestaltet. Weiter ist es vorteilhaft, wenn die Profilform insbesondere über die Relieftiefe t hinweg kontinuierlich oder stufenweise variiert.

Vorteilhafterweise wird das anregende elektrische Feld durch die asymmetrische Profilform stärker beispielsweise an den schmalen Spitzen der Reliefstruktur 13 lokalisiert. Dies kann zu einer ausgeprägteren Resonanz und Absorption führen. Des Weiteren unterscheidet sich die Anregung der Plasmonen auf beiden Seiten der asymmetrischen Profilformen, so dass einfallendes Licht einen unterschiedlichen Effekt generiert je nach dem auf welche der Oberflächen das Licht eingestrahlt wird.

Symmetrische Profilformen sind beispielsweise sinusförmig oder rechteckförmig oder binär. Mit anderen Worten weisen symmetrische Profilformen eine Spiegelsymmetrie auf, wenn die Grundfläche als Spiegelebene herangezogen wird. Hierbei bleibt die Profilform bei dieser Spiegelung gleich, die Reliefstruktur wird lediglich um eine halbe Gitterperiode Λ verschoben. Erfindungsgemäß weisen asymmetrische Profilformen keine Spiegelsymmetrie in der von der Grundfläche aufgespannten Ebene auf.

Es ist bevorzugt, dass für die Werte der Gitterperiode Λ der zumindest einen ersten Reliefstruktur 13 in x-Richtung und/oder y-Richtung Λ < 300 nm, bevorzugt Λ ≤ 280 nm, weiter bevorzugt Λ ≤ 260 nm, gilt. Weiter bevorzugt sind die Werte der Gitterperiode Λ der zumindest einen ersten Reliefstruktur 13 in x-Richtung und/oder y-Richtung ausgewählt aus einem Bereich von 150 nm bis 260 nm, bevorzugt von 180 nm bis 250 nm.

Weiter ist es von Vorteil, dass für die Werte der Relieftiefe t der zumindest einen ersten Reliefstruktur in x-Richtung und/oder y-Richtung t < 0,7 Λ, bevorzugt t ≤ 0,6 Λ, gilt. Auch ist es vorteilhaft, dass für die Werte der Relieftiefe t der zumindest einen ersten Reliefstruktur 13 in x-Richtung und/oder y-Richtung t > 0,2 Λ, bevorzugt t ≥ 0,3 Λ, gilt.

Weiter ist es möglich, dass die bevorzugt asymmetrische Profilform der zumindest einen ersten Reliefstruktur 13 so gewählt ist, dass die Breite der Erhebungen und Vertiefungen der zumindest einen ersten Reliefstruktur 13 bezogen auf einen Abstand von t/2 von der Grundfläche mindestens 60 % der Gitterperiode, bevorzugt mindestens 70 % der Gitterperiode und/oder höchstens 40 % der Gitterperiode, bevorzugt höchstens 30 % der Gitterperiode, beträgt.

Insbesondere ist es möglich, dass die Flankensteilheit der zumindest einen ersten Reliefstruktur 13, bezogen auf einen Abstand von t/2 von der Grundfläche einen Wert im Bereich von 60° bis 90°, bevorzugt von 70° und 85°, aufweist.

Vorzugsweise wird die Flankensteilheit der zumindest einen ersten Reliefstruktur 13 bezogen auf jeden Abstand zwischen 25 % der Relieftiefe und 75 % der Relieftiefe ausgehend von der Grundfläche so gewählt, dass dieser einen Wert ausgewählt aus einem Bereich von 40° bis 90°, bevorzugt von 50° bis 85°, aufweist.

Weiter ist es vorteilhaft, einen Wert für die Flankensteilheit der zumindest einen ersten Reliefstruktur 13 zu wählen, bezogen auf jeden Abstand zwischen 0 % und 25 % der Relieftiefe und/oder zwischen 75 % und 100 % der Relieftiefe ausgehend jeweils von der Grundfläche, der einen Wert aufweist ausgewählt aus einem Bereich von 0° bis 50°, bevorzugt von 0° bis 40°.

Die zumindest eine erste Reliefstruktur 13 ist bevorzugt als ein 2D-Gitter, bevorzugt als ein Kreuzgitter und/oder als ein hexagonales Gitter oder als komplexeres 2D-Gitter, ausgebildet. Unter komplexeren 2D-Gittern werden beispielsweise 2D-Gitter mit einer bevorzugt geringfügigen stochastischen Variation der Gitterperiode verstanden. Weiter werden darunter auch 2D-Gitter mit einer periodischen Anordnung über einer Länge von mindestens vier Mal der lokal vorliegenden Gitterperiode und gleichzeitig einer zufälligen Anordnung über Längen von mehr als 100 μm verstanden. 2D-Gitter weisen in x-Richtung und y-Richtung eine Abfolge von Erhebungen und Vertiefungen auf. Das bedeutet, dass die eine erste Reliefstruktur 13 bevorzugt nicht als Liniengitter, also als 1D-Gitter, ausgestaltet ist.

Bei einem Kreuzgitter oder einem hexagonalen Gitter wird die Gitterperiode Λ der Abfolge von Erhebungen und Vertiefungen bezüglich beider Richtungen vorzugsweise aus den vorstehend angegebenen Bereichen gewählt. Hierbei ist die Gitterperiode in x-Richtung und y-Richtung bevorzugt gleich. Die Gitterperiode kann aber auch in beiden Raumrichtungen unterschiedlich sein.

Weiter ist es auch möglich, dass die periodische Variation der zumindest einen ersten Reliefstruktur 13 zumindest bereichsweise mit einer zufälligen und/oder pseudo-zufälligen Variation überlagert ist.

Des Weiteren ist auch möglich, die periodische Variation der zumindest einen ersten Reliefstruktur 13 zumindest bereichsweise auf eine Mikrostruktur, insbesondere auf eine Fresnel-Linsen und/oder eine Fresnel-Freiformflächen und/oder auf Mikrospiegeln und/oder Blazegittern, insbesondere mit einer Periode von mehr als 5 μm und/oder auf Computer-Generierte Hologramm (CGH)-Strukturen, zu überlagern.

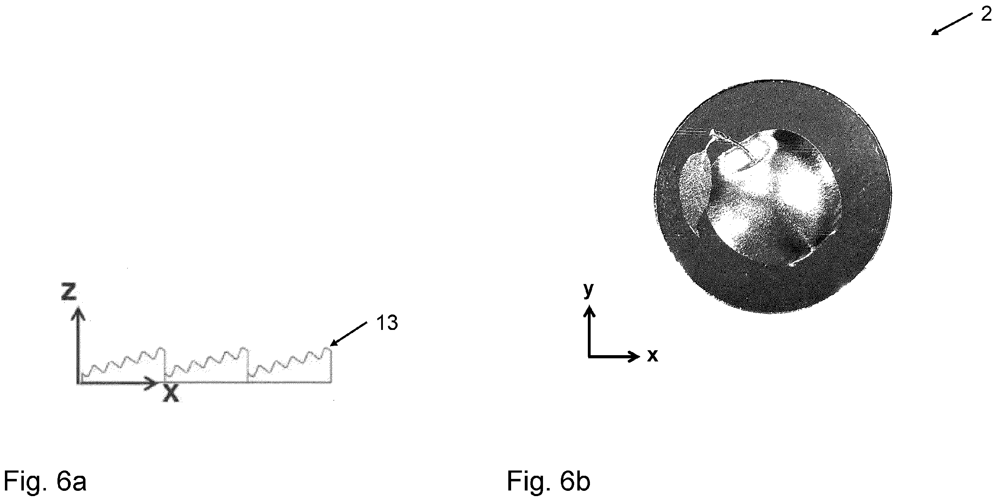

So ist beispielhaft in Fig. 6a gezeigt, dass die zumindest eine Reliefstruktur 13 umfassend Erhebungen und Vertiefungen auf eine Mikrostruktur wie einem Blazegitter überlagert werden kann. Beispielhaft ist hierbei in Fig. 6b ein Funktionselement 2 gezeigt, welches einen Apfel darstellt. Deutlich sind Bereiche erkennbar, welche durch die Mikrostruktur, beispielsweise Fresnel-Freiformflächen, virtuell aus der Oberfläche herausragen oder hinter die Oberfläche zurückspringen. Hierdurch ist es möglich, neben den optischen Effekten der zumindest einen ersten Reliefstruktur 13, wie stabiler Farbeindruck, Farbkippeffekt und "Latent-Effekt", gleichzeitig den optischen Effekt der Mikrostruktur selbst zu realisieren oder die optischen Effekte beider Strukturen zu kombinieren. So werden beispielsweise Bereiche, welche durch die Mikrostruktur, beispielsweise Fresnel-Freiformflächen, ein virtuell aus der Oberfläche herausragender oder hinter die Oberfläche zurückspringender optischer Wölbungseffekt nicht achromatisch wahrgenommen, sondern als ein goldfarbener oder kupferfarbener derartiger optischer Wölbungseffekt.

Bei Überlagerung einer Blazegitter-Struktur, insbesondere mit einer Gitterperiode von mehr als 5 μm, das heißt mit schräg gestellten makroskopischen Flächen, mit der ersten Reliefstruktur 13 kommt es zu einer entsprechenden Verkippung der ersten Reliefstruktur 13 um den Winkel der schräg gestellten makroskopischen Fläche gegenüber einer Grundfläche, wodurch diese so kombinierte Reliefstruktur 13 einen Farbeindruck mit einem größeren Betrachtungswinkelbereich erzeugt. Bei Überlagerung der ersten Reliefstruktur 13 mit einer Fresnel-Linsen-Struktur oder mit Fresnel-Freiformflächen mit variierendem Winkel der Flanken kann bei einer Überlagerung mit der ersten Reliefstruktur 13 auch ein Farbgradient der kombinieren Reliefstruktur realisiert werden.

Gemäß einem bevorzugten Ausführungsbeispiel der Erfindung weist das Funktionselement 2 zumindest einen zweiten Bereich 22 auf, wobei in dem zumindest einen zweiten Bereich 22 zumindest eine zweite Reliefstruktur 15 ausgebildet ist. Bei der zumindest einen zweiten Reliefstruktur 15 handelt es sich um eine Reliefstruktur, welche vorzugsweise einzeln oder in Kombination und/oder in Überlagerung ausgewählt ist aus: diffraktive Reliefstruktur, holographische Reliefstruktur, insbesondere 2D-, 2D/3D- oder 3D-Hologramm, Mattstruktur, Mikrospiegelfläche, reflektive Facettenstruktur, refraktive, nahezu achromatische Mikrostruktur, bevorzugt Blazegitter mit einer Gitterperiode von mehr als 5 μm, Linse, Mikrolinsenraster, binäre Zufallsstruktur, binäre fresnelförmige Mikrostruktur.

Die zumindest eine zweite Reliefstruktur 15 ist somit derart ausgestaltet, dass der zumindest eine zweite Bereich 22 insbesondere unter diffuser Beleuchtung bevorzugt silbern erscheint und/oder in der Eigenfarbe des Metalls welches in dem zumindest einen zweiten Bereich angeordnet ist und/oder in welches die zumindest eine zweite Reliefstruktur 15 eingeprägt, ist.

Gemäß einem bevorzugten Ausführungsbeispiel der Erfindung weist das Funktionselement 2 zumindest einen dritten Bereich 23 auf, wobei in dem zumindest einen dritten Bereich 23 zumindest eine dritte Reliefstruktur 16 ausgebildet ist. Bei der zumindest einen dritten Reliefstruktur 16 handelt es sich insbesondere um eine Reliefstruktur, welche Gitterstrukturen umfasst mit einer Gitterperiode Λ von mehr als 300 nm und einer Relieftiefe t von mehr als 150 nm. Vorzugsweise weist der zumindest eine dritte Bereich 23 eine Schicht aus hochbrechenden Materialien auf. Der zumindest eine dritte Bereich 23 ist derart gestaltet, dass er bevorzugt einen roten oder dunklen, im Wesentlichen einen schwarzen ersten Farbeindruck in direkter Reflexion oder in Transmission aufweist.

Da die optischen Effekte wie der Farbeindruck der unterschiedlichen Bereiche im Wesentlichen durch Strukturen generiert werden, können insbesondere der zumindest eine erste Bereich 21, der zumindest zweite Bereich 22 und der zumindest eine dritte Bereich 23 registergenau zueinander angeordnet sein, da auf das Anordnen von zusätzlichen Lackschichten für eine farbige Gestaltung verzichtet werden kann.

Gemäß einer Ausführungsform der Erfindung weist der zumindest eine erste Bereich 21, der zumindest eine zweite Bereich 22, der zumindest dritte Bereich 23 oder zumindest einer der ersten zweiten oder dritten Bereiche 21, 22, 23 eine musterförmige Formgebung auf. Ein Bereich kann beispielsweise in Form von Buchstaben, Zahlen, eines Symbols, einer geometrischen Figur oder eines Motivs ausgeformt sein. Insbesondere kann der zumindest eine erste Bereich 21 als Minitext oder Mikrotext ausgestaltet sein.

Weiter ist es möglich, dass die ersten und/oder zweiten und/oder dritten Bereiche 21, 22, 23 als eine Vielzahl von Pixeln angeordnet sind. Die Pixel können rund, quadratisch, hexagonal, motivförmig oder auch in anderer zusammenhängender Form ausgestaltet sein. Die Pixel können weiter auch eine langgestreckte Form, insbesondere eine Linienform aufweisen. Bevorzugt ist die maximale Ausdehnung eines Pixels in mindestens eine Richtung der Raumrichtungen, bevorzugt in x-Richtung ($P_x$) und y-Richtung ($P_y$), kleiner als 300 $\mu$m, bevorzugt kleiner als 100 $\mu$m, weiter bevorzugt kleiner als 10 $\mu$m, noch weiter bevorzugt kleiner als 5 $\mu$m, ferner noch weiter bevorzugt kleiner als 3 $\mu$m. Weiter ist es vorteilhaft, wenn ein Pixel in seiner Ausdehnung ($P_x$, $P_y$) größer als 1 $\mu$m, bevorzugt größer als 1,5 $\mu$m, in x-Richtung und/oder y-Richtung ausgebildet ist.

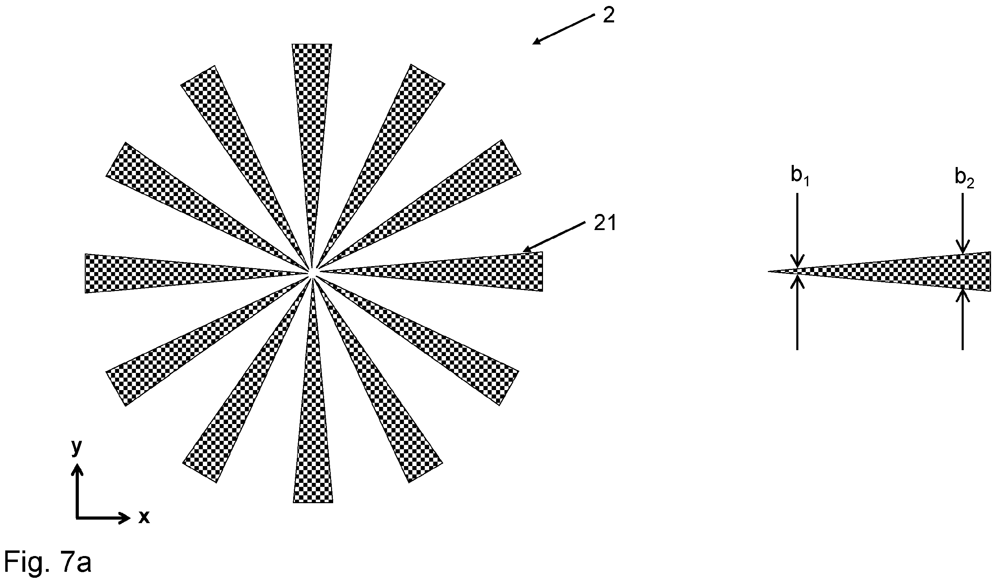

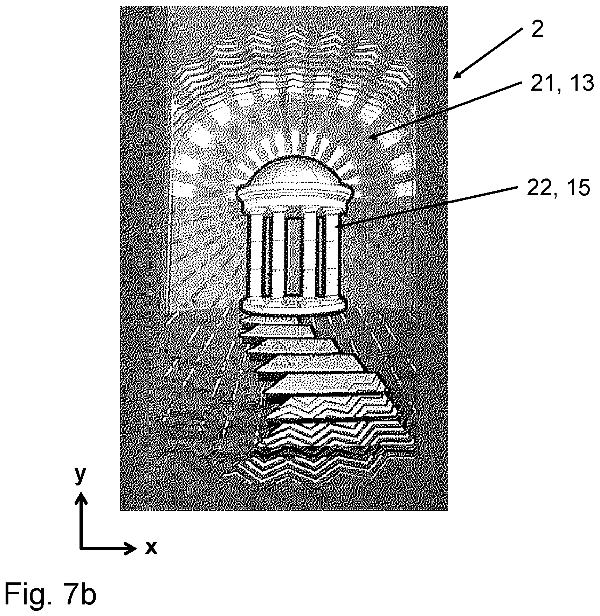

Weiter ist es wie in Fig. 7a und Fig. 7b gezeigt möglich, dass der zumindest eine erste Bereich 21 derart gestaltet ist, dass er mindestens in zwei, bevorzugt mindestens drei, bevorzugt mindestens fünf Zonen, angeordnet ist. Vorzugsweise sind die Zonen derart gestaltet, dass sie zumindest 300 $\mu$m, bevorzugt zumindest 1000 $\mu$m, in x-Richtung und/oder y-Richtung voneinander entfernt angeordnet sind, so dass sie für das menschliche Auge als voneinander getrennt wahrgenommen werden. Insbesondere weist eine, bevorzugt jede, der Zonen zumindest einen ersten Zonenbereich auf, welcher in mindestens einer Raumrichtung $b_1$ kleiner als 2 mm, bevorzugt kleiner als 1 mm, weiter bevorzugt kleiner als 0,7 mm, ausgebildet ist. Hierbei kann es vorteilhaft sein, dass der zumindest eine erste Zonenbereich mindestens 20 %, bevorzugt mindestens 30 %, weiter bevorzugt mehr als 50 %, der Fläche einer einzelnen Zone ausmacht.

Auch ist es möglich, dass zumindest eine Zone zumindest einen zweiten Zonenbereich aufweist, der in mindestens eine Raumrichtung $b_2$ größer als 2 mm, bevorzugt größer als 3 mm, weiter bevorzugt größer als 5 mm, ausgebildet ist, insbesondere wobei die Fläche der zweiten Zonenbereiche aller Zonen zumindest in Summe größer als 20 mm$^2$, bevorzugt größer als 30 mm$^2$, weiter bevorzugt größer als 50 mm$^2$, ist. Weiter ist es auch möglich, dass sich die Ausdehnung zumindest einer Zone in eine Raumrichtung reduziert, bevorzugt kontinuierlich oder stufenweise verjüngt.

Fig. 7b zeigt ein Beispiel der vorstehenden Ausführung, in welchem kontinuierlich sich verjüngende Zonen in Form von Sonnenstrahlen des zumindest einen ersten Bereichs 21 in ein Design umfassend zumindest einen zweiten Bereich 22 integriert sind. Die sich verjüngenden Zonen laufen auf einen als Tempel gestalteten zweiten Bereich 22 zu. Zwischen den sich verjüngenden Zonen sind weitere Strukturen umfassend einen zweiten Bereich 22 im perfekten Register angeordnet, welche einen radialen, achromatischen Bewegungseffekt in Abhängigkeit des Kippwinkels erzeugen. Weiter ist das Funktionselement 2 auch so ausgestaltet, dass der Hintergrund des Tempels aus einem ersten Bereich 21 gestaltet ist. Die Gestaltung einer derartigen Kombination aus Zonen des ersten Bereichs 21 und den zweiten Bereichen 22, also achromatischen Bewegungseffekte und goldenen oder kupfernen erscheinenden Teilbereiche, lässt sich sehr gut von menschlichem Auge erfassen.

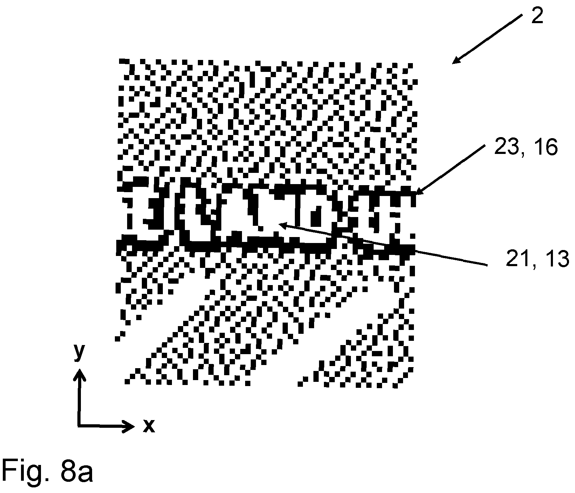

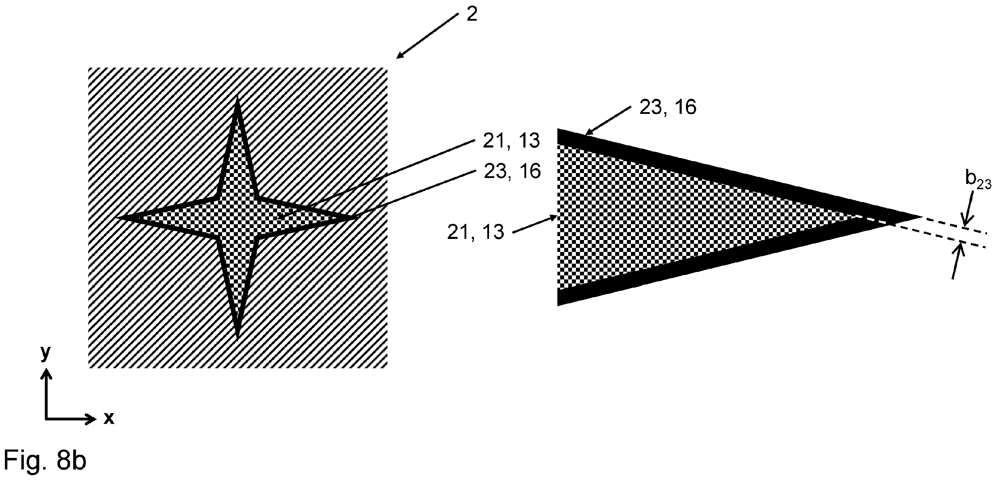

Weiter kann wie in dem Ausgestaltungbeispiel nach Fig. 8b der zumindest eine erste Bereich 21 von dem zumindest einen dritten Bereiche 23 bereichsweise umrahmt oder sogar vollständig eingeschlossen sein, wobei der zumindest eine dritte Bereich 23 eine Ausdehnung $b_{23}$ in eine der Raumrichtungen ausgewählt aus einem Bereich von 30 $\mu$m bis 1 mm, bevorzugt von 50 $\mu$m bis 300 $\mu$m, weiter bevorzugt von 50 $\mu$m bis 150 $\mu$m, aufweist. Der zumindest eine dritte Bereich 23 bildet somit einen konturartigen Rahmen, der den zumindest einen ersten Bereich 21 umrahmt. Dies ist insbesondere wie in Fig. 8a zu sehen vorteilhaft bei Minitexten oder Mikrotexten, da deren Lesbarkeit hierdurch erhöht wird. Bevorzugt weisen die optischen Effekte in dem ersten und zweiten und dritten Bereich 21, 22, 23 zueinander eine möglichst unterschiedliche Farbigkeit und damit einen möglichst guten optischen Kontrast auf.

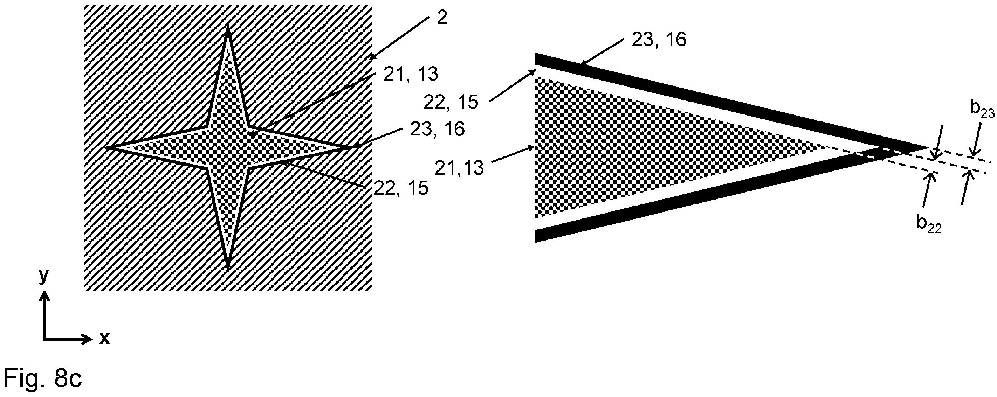

In einer weiteren Ausführungsform welche in Fig. 8c dargestellt ist, kann der zumindest eine erste Bereich 21 von zumindest einem zweiten Bereich 22 bereichsweise umrahmt oder sogar vollständig eingeschlossen sein, wobei der zumindest eine zweite Bereich 22 eine Ausdehnung $b_{22}$ in eine der Raumrichtungen ausgewählt aus einem Bereich von 30 $\mu$m bis 1 mm, bevorzugt von 50 $\mu$m bis 300 $\mu$m, weiter bevorzugt von 50 $\mu$m bis 150 $\mu$m, aufweist. Insbesondere kann hierbei der zumindest eine zweite Bereich 22 von zumindest einem dritten Bereich 23 bereichsweise umrahmt oder sogar vollständig eingeschlossen sein, wobei der zumindest eine dritte Bereich 23 wie in dem vorstehenden Absatz insbesondere dessen Ausdehnung $b_{23}$ ausgestaltet sein kann. Weiter kann der zumindest eine zweite Bereich 22 einen Mikrotext oder Nanotext aufweisen.

Da die optischen Effekte, beispielsweise der Farbeindruck, der unterschiedlichen Bereiche im Wesentlichen durch Strukturen generiert werden und nicht durch zusätzliche aufgedruckte Farbschichten, können insbesondere der zumindest eine erste Bereich 21, der zumindest zweite Bereich 22 und der zumindest eine dritte Bereich 23 registergenau zueinander angeordnet sein.

Dies ermöglicht weiter insbesondere die farbige Gestaltung von im perfekten Register angeordneten, selbsterklärenden, Designelementen, wie beispielsweise Flaggen. Zweckmäßigerweise können diese selbsterklärenden Designelemente durch weitere strukturbasierte Effekte ergänzt werden.

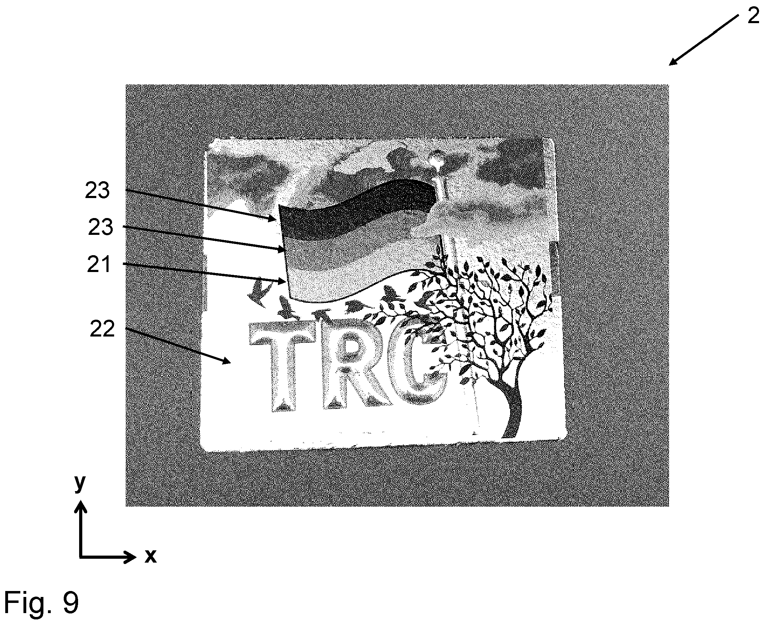

Das in Fig. 9 gezeigte Funktionselement 2 soll die vorstehende Ausführung veranschaulichen. Gezeigt ist ein Funktionselement 2 welches auch die zumindest eine erste Reliefstruktur 13 in zumindest einem ersten Bereich 21 und die in zumindest einem Teilbereich der ersten Reliefstruktur 13 angeordnete Metallschicht 12 aufweist. Optional weist das Funktionselement 2 eine bevorzugt polymere dielektrische Schicht auf der Seite der Metallschicht 12, welche dem Betrachter zugewandt ist, auf. Weiter umfasst das Funktionselement 2 zwei weitere dritte Bereiche 23. Die zwei dritten Bereiche sind in ihrer Profilform, Relieftiefe und Gitterperiode derart gestaltet, dass sie unterschiedliche erste Farbeindrücke generieren. In diesem Beispiel sind die zwei dritten Bereiche 23 und der eine erste Bereich 21 in Form einer Flagge angeordnet und die Bereiche sind derart gestaltet, dass je schwarz, rot oder golden erscheinen. Ein Betrachter kann hierbei intuitiv die Flagge der Bundesrepublik Deutschland erkennen.

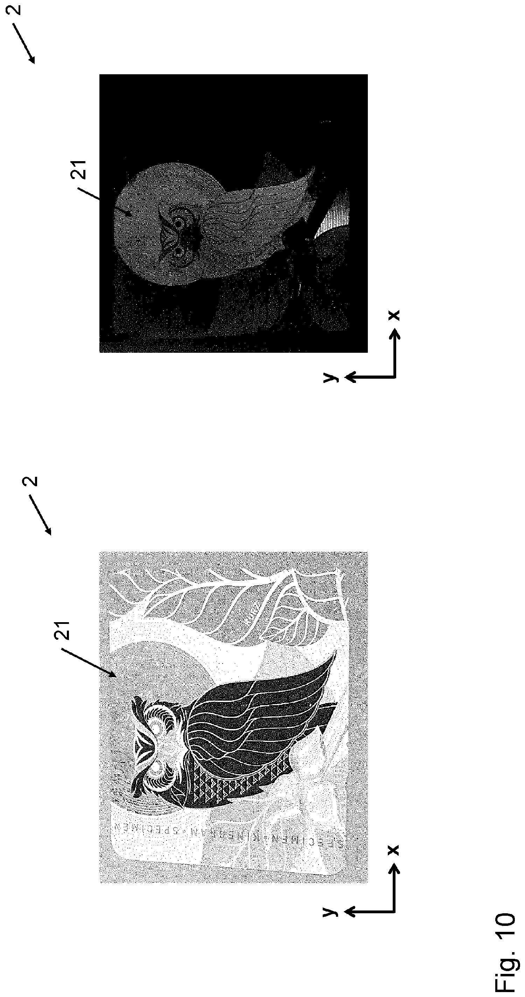

Fig. 10 zeigen ein weiteres Ausführungsbeispiel, in dem die zumindest eine erste Reliefstruktur in dem zumindest einen ersten Bereich 21 zusätzlich auch einen Farbeindruck im Durchlicht aufweist. Dies liegt an der erhöhten Transmission durch die auf der Reliefstruktur 13 angeordneten Metallschicht 12 infolge der durch die Reliefstruktur ermöglichten Plasmonenanregung. Die erfindungsgemäße Reliefstruktur 13 ist in diesem Design in dem Mond sowie in den Augen der Eule integriert. Der Körper der dargestellten Eule hingegen weist eine in Reflexion dunkel erscheinende Reliefstruktur eines dritten Bereichs auf. Im restlichen Design sind bevorzugt andere strukturbasierte Effekte, beispielsweise fresnelsche Freiformeffekte oder auch diffraktive Gitterstrukturen integriert.

Fig. 10 zeigt links das Design in Auflichtbetrachtung und bei diffuser Beleuchtung. Rechts in Fig. 10 ist das Funktionselement 2 bei senkrechter Durchlichtbetrachtung gezeigt, wobei die Bereiche mit den anderen strukturbasierten Effekten nur als dunkle Umrandung der Eule und des Mondes zu sehen sind. Beim Kippen des Funktionselements 2 verändern sich die Farbeindrücke im Durchlicht beider Reliefstrukturen zu Magenta.

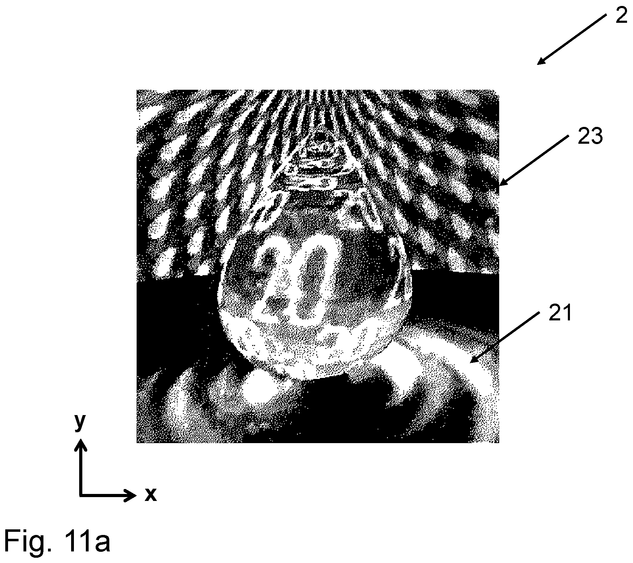

Gemäß einer weiteren Ausführungsform des erfindungsgemäßen Funktionselements 2 können oberhalb des zumindest einen ersten Bereichs 21 eine Vielzahl von Mikrolinsen rasterförmig angeordnet werden. Insbesondere sind die Mikrolinsen derart angeordnet, dass der zumindest eine erste Bereiche 21 von einem Betrachter vergrößert wahrgenommen wird. Mit anderen Worten liegt der zumindest eine erste Bereich 21 in der Fokusebene der Mikrolinsen. Zur Verdeutlichung ist in Fig. 11a eine beispielhafte Ausführung eines erfindungsgemäßen Funktionselements 2 nach Fig. 1 oder Fig. 2 gezeigt, wobei über dem Funktionselement 2 noch eine Vielzahl an Mikrolinsen angeordnet sind, so dass sich einem Betrachter die gezeigte tropfenförmige Bildinformation ergibt.

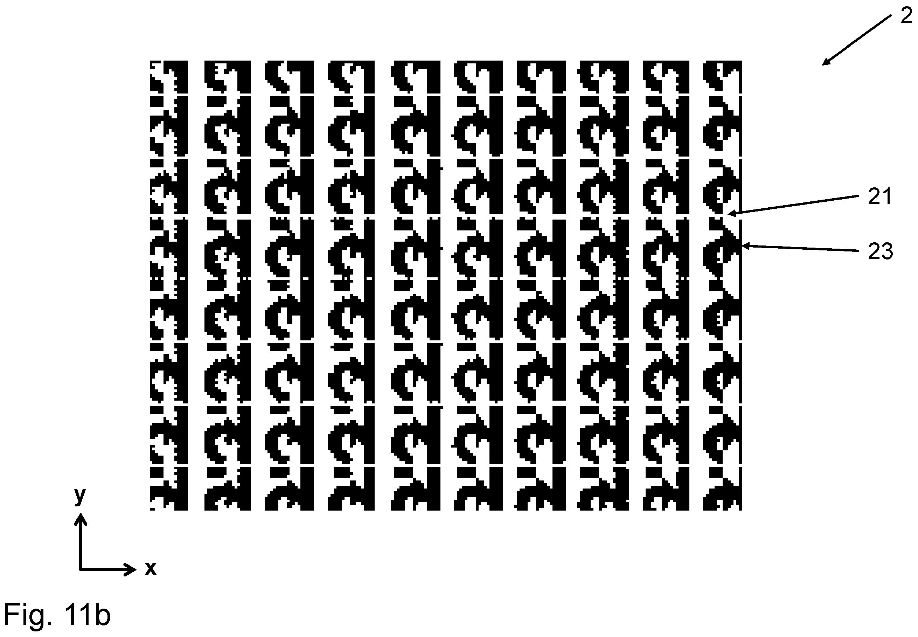

In Fig. 11b ist gezeigt, wie insbesondere der zumindest eine erste Bereich 21 und beispielsweise der zumindest eine dritte Bereich 23 hierbei in Teilbereichen derart angeordnet sind, so dass die Teilbereiche eine Vielzahl von rasterförmig angeordneten Mikrobildern oder Moiré-Icons ergeben. Insbesondere sind hierbei diese Mikrobilder oder Moiré-Icons im Register zu der Vielzahl von rasterförmig angeordneten Mikrolinsen angeordnet.

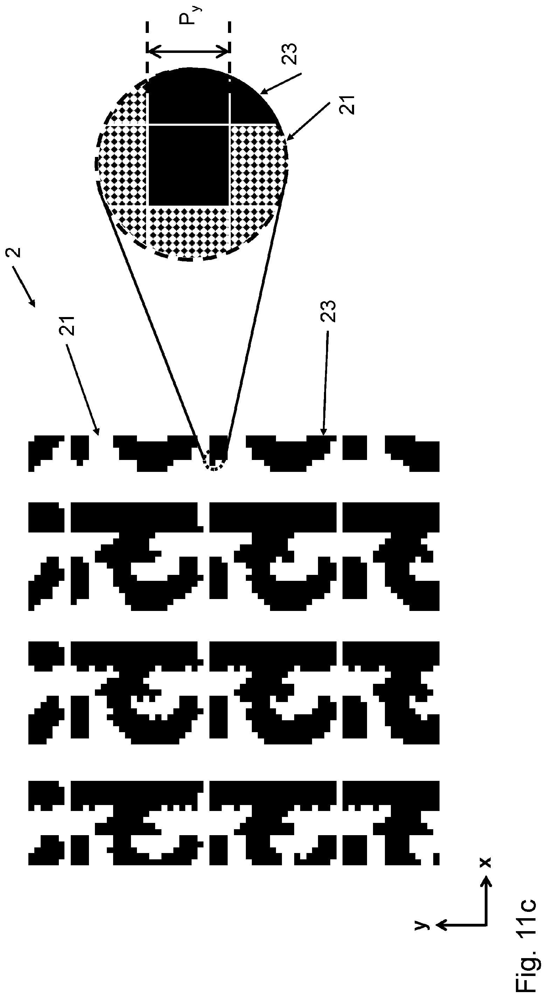

Weiter ist in Fig. 11c in Vergrößerung gezeigt, dass die Teilbereiche insbesondere aus einer Vielzahl an Pixeln aufgebaut sind, wobei die Pixel wie bereits oben beschrieben bezüglich ihrer Raumausdehnung ($P_x$ und $P_y$) ausgestaltet sind.

Je nach gewünschter farblicher Gestaltung umfassen die Teilbereiche eine Vielzahl an Pixeln ausgebildet aus dem zumindest einen ersten Bereich 21, aus dem zumindest einen zweiten Bereich 22 und/oder aus dem zumindest einen dritten Bereich 23. Beispielsweise sind hierdurch wie in Fig. 11b gezeigte Mikrobilder umfassend Pixel mit einer hell weißen oder silbernen Farbgebung, dunkelgrauen oder schwarzen Farbgebung und/oder einer goldenen oder kupfernen Farbgebung möglich.

Auch können die Teilbereiche durch die Anordnung der Pixel derart gestaltet sein, dass ein gradueller Übergang von einer vermehrten Anordnung von Pixeln umfassend den zumindest einen ersten Bereich 21 zu einer vermehrten Anordnung von Pixeln umfassend den zumindest einen zweiten Bereich 22 realisiert wird. Hierdurch ist ein erkennbarer gradueller Übergang von einer goldenen oder kupfernen Erscheinung zu einer silbernen Erscheinung möglich.

Ferner ist es durch Kombination der vorstehenden Ausführungsvarianten möglich, den goldenen oder kupfernen Farbeindruck eines Teilbereichs heller, sprich näher an dem silbernen Farbton, auszugestalten. Dies lässt sich erreichen, indem die Vielzahl von Pixeln, welche nicht zumindest einen dritten Bereich 23 umfassen, als eine Mischung, bevorzugt einer stochastischen Verteilung, von Pixeln, umfassend den zumindest einen ersten Bereich 21 und den zumindest einen zweiten Bereich 22, angeordnet sein.

Alternativ oder zusätzlich kann ein Motiv des Mikrobilds oder ein Motiv aus Moiré-Icons in einer Zone aus Pixeln mit einem silbernen reflektierenden Erscheinungsbild und aus Pixeln mit einem dunkelgrauen bis schwarzen Erscheinungsbild aufgebaut sein und in einer anderen Zone des Motives aus Pixeln mit einem goldenen oder kupfernen Erscheinungsbild und Pixeln mit einem dunkelgrauen bis schwarzen Erscheinungsbild aufgebaut sein. Mit anderen Worten können Bereiche des Motives des Mikrobilds oder des Motives aus Moiré-Icons aus Pixeln umfassend den zumindest einen zweiten Bereich 22 und aus Pixeln umfassend zumindest einen dritten Bereich 23 und in einem anderen Bereich des Motives aus Pixeln umfassend zumindest einen ersten Bereich 21 und Pixeln umfassend zumindest einen dritten Bereich 23 aufgebaut sein. Hierdurch sind mehrfarbige Ausgestaltungen des Funktionselements 2 möglich, wobei beispielsweise goldene oder kupferne Bewegungseffekte und silberne Bewegungseffekte im Sicherheitselement 2 räumlich getrennt voneinander vorliegen.

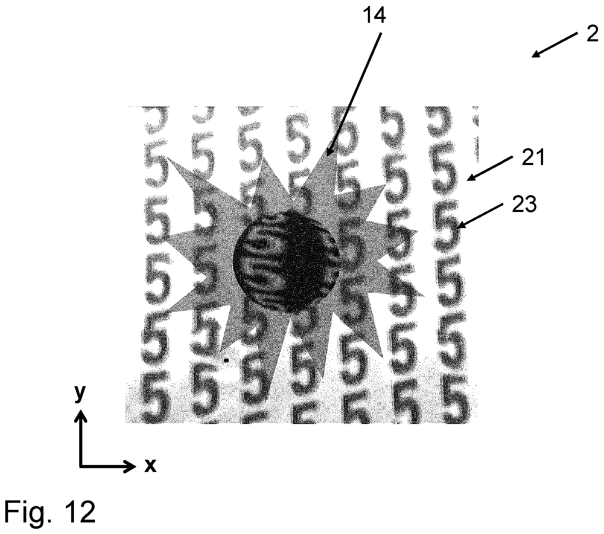

Fig. 12 zeigt ein weiteres Ausführungsbeispiel des Funktionselements 2 nach Fig. 11a. Das Funktionselement 2 weist die bereits oben angeführten Teilbereiche umfassend eine Vielzahl an Pixeln umfassend erste, zweite und/oder dritte Bereiche 21, 22, 23 auf, welche derart abgebildet sind, dass sie die Ziffer "5" darstellen. Weiter ist zentral auch eine Vielzahl an Mikrolinsen rasterförmig angeordnet, so dass die dort angeordneten Teilbereiche vergrößert werden. Zusätzlich ist nun zumindest eine lasierende, sternförmig ausgebildete, Farbschicht 14 insbesondere oberhalb des zumindest einen ersten, zweiten und/oder dritten Bereichs 21, 22, 23 und unterhalb der Vielzahl an Mikrolinsen angeordnet. Bezüglich der Ausführungsformen und Effekte der lasierenden Farbschicht wird auf vorstehende Ausführungen verwiesen.

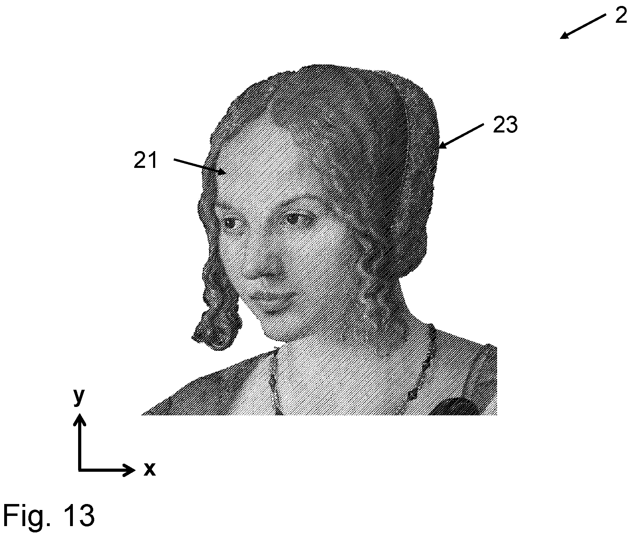

Fig. 13 zeigt eine weitere Ausführungsvariante des erfindungsgemäßen Funktionselements 2 beispielsweise nach Fig. 1 oder Fig. 2. Gemäß dieser Ausführungsvariante wird ein Motiv durch eine Vielzahl von Pixeln umfassend zumindest den einen ersten Bereich 21 und durch eine Vielzahl von Pixeln umfassend zumindest den zumindest einen dritten Bereich 23 gebildet. Mit anderen Worten stellt das Funktionselement 2 ein Graustufenbild, insbesondere ein Halbtonbild, oder ein monochromatisches Bild dar. Die Grauabstufung wird mittels Halbtönen durch die Verteilung der Pixel erreicht, wobei die dunkel erscheinenden Bereiche aus Pixeln umfassend dritte Bereiche 23 und die hellerscheinenden Bereiche aus Pixeln umfassend den ersten Bereich 21 gestaltet sind. Bezüglich den Ausdehnungen $P_x$ oder $P_y$ der Pixel wird auf obige Ausführungen verwiesen.

Das erfindungsmäße Funktionselement 2 bietet durch seine Ausgestaltung im Vergleich zu einem gewöhnlichen Graustufenbild weiter den Effekt, dass es einen ersten Farbeffekt in direkter Reflexion oder Nullter Beugungsordnung aufweist. Insbesondere bietet das Funktionselement 2 weiter einen weiteren überraschenden Latent-Effekt bei starkem Verkippen, insbesondere in den zumindest ersten Bereichen 21, auf. Das Graustufenbild kann weiter von Bereichen des Funktionselements 1 mit weiteren strukturbasierten Effekten, vorzugsweise vollständig, umrahmt sein. Beispielsweise kann das Graustufenbild von einem Feinlinienbewegungseffekt umgeben sein, welcher bei der Außenkontur des Graustufenbildes endet und so die Aufmerksamkeit des Betrachters auf dieses Graustufenbild lenkt.

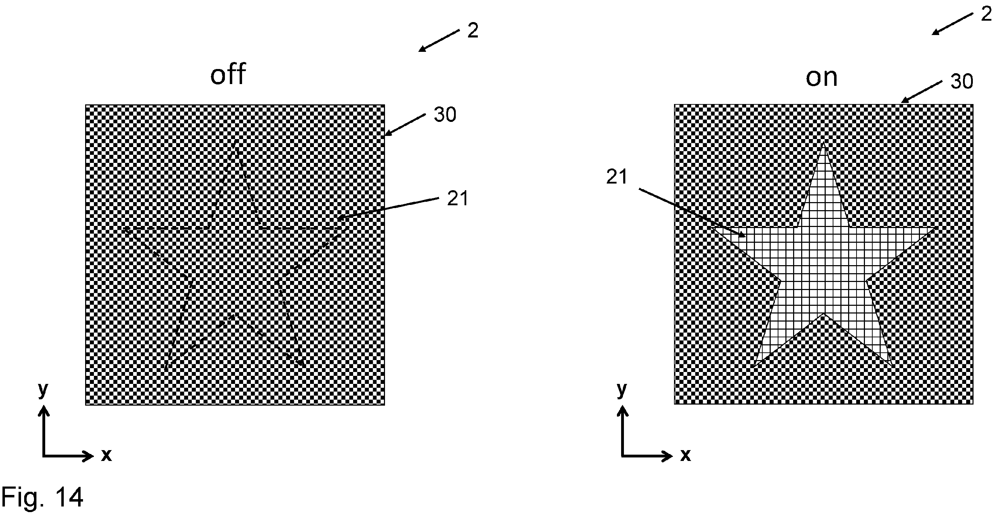

Fig. 14 zeigt eine weitere Ausführungsform eines erfindungsgemäßen Funktionselements 2 beispielsweise nach Fig. 1. Auch hier weist das Funktionselement 2 zumindest eine erste Reliefstruktur 13 in zumindest einem ersten Bereich 21 auf. Weiter ist in zumindest einem Teilbereich der ersten Reliefstruktur 13 eine Metallschicht 12 angeordnet und optional eine bevorzugt polymere dielektrische Schicht auf der Seite der Metallschicht 12, welche dem Betrachter zugewandt ist, angeordnet.

Gemäß diesem Ausführungsbeispiel kann der zumindest eine erste Bereich 21 in einer ersten Elektrodenschicht angeordnet sein. Insbesondere ist die erste Elektrodenschicht in einem reflektiven Display angeordnet oder kann in einem reflektiven Display verwendet werden. Die erste Elektrodenschicht kann weitere Schichten oder Funktionselemente umfassen, wie beispielsweise elektrisch leitende Verbindungskomponenten und/oder elektromagnetische Abschirmungen und/oder thermische Abschirmungen und/oder optische Abschirmungen und/oder Schaltungen.

Hierdurch weist die erste Elektrodenschicht die durch den zumindest einen ersten Bereich 21 generierten optischen Effekte auf.

Weiter ist es vorteilhaft, wenn oberhalb der ersten Elektrodenschicht eine schaltbare Schicht 30, beispielsweise eine elektrochrome Schicht oder eine Flüssigkristallschicht oder einer PDLC (polymer dispersed liquid crystal) - Schicht, angeordnet. Die schaltbare Schicht 30 zeichnet sich dadurch aus, dass ihre Erscheinung durch das Anlegen einer Spannung geändert werden kann. Insbesondere wenn keine Spannung angelegt ist, erscheint sie beispielsweise im Falle der PDLC-Schicht für einen Betrachter trüb bzw. erscheint sie transparent solange eine Spannung angelegt ist.

Weiter kann oberhalb der ersten Elektrodenschicht und/oder der schaltbaren Schicht 30 eine zweite Elektrodenschicht angeordnet sein. Die zweite Elektrodenschicht ist vorzugsweise transparent oder semitransparent ausgestaltet und/oder transparent und/oder weist eine Transmission, insbesondere im Wellenlängenbereich von 400 nm bis 700 nm, von mindestens 50 %, bevorzugt von mindestens 75 %, weiter bevorzugt von mindestens 90 %, auf. Beispiele für eine derartige transparente zweite Elektrodenschicht ist eine gedruckte PEDOT:PSS Schicht oder auch eine strukturierte, bevorzugt fein strukturierte, für das menschliche Auge transparent erscheinende Metallschicht.

Zweckmäßigerweise ist die erste Elektrodenschicht unterhalb der zweiten Elektrodenschicht angeordnet. Mit anderen Worten ist die erste Elektrodenschicht auf der einem Betrachter abgewandten Seite der zweiten Elektrodenschicht angeordnet. Insbesondere ist die schaltbare Schicht 30 zwischen der ersten und der zweiten Elektrodenschicht angeordnet.

Hierdurch könnten vorteilhafterweise die Eigenschaften des zumindest einen ersten Bereichs 21 in ein reflektives Display integriert werden. Insbesondere kann der optische Effekt der schaltbaren Schicht 30 mit dem Farbeffekt der unteren Elektrodenschicht kombiniert werden. So wird bei einem reflektiven Display mit einer schaltbaren Schicht 30, beispielsweise einer PDLC-Schicht, insbesondere in einem Teilbereich des Displays, welcher durch das Anlegen einer elektrischen Spannung (in Fig. 14 gekennzeichnet durch "on") von trüb zu transparent schaltet, der goldene oder kupferne Farbeindruck der ersten Elektrodenschicht sichtbar oder zumindest verstärkt sichtbar. Ist jedoch keine Spannung an dem reflektiven Display angelegt (in Fig. 14 gekennzeichnet durch "off"), so ist der zumindest eine erste Bereich 21 im Wesentlichen nicht sichtbar oder zumindest nur schwach sichtbar.

Erhalten wird somit ein Funktionselement 2 in einem reflektiven Display, welches für einen Betrachter im Wesentlichen nur erkennbar ist, solange eine entsprechende Spannung an dem reflektiven Display angelegt ist.

Weiter kann die schaltbare Schicht 30 auch einen Farbstoff aufweisen oder eingefärbt sein, wodurch sie zusätzlich zu der optischen Schaltfunktion noch eine Farbfilterfunktion erhält. Dies bietet den weiteren Vorteil, dass sich das Erscheinungsbild bei Anlegen der Spannung der schaltbaren Schicht von der Farbe des Farbstoffs zu der goldenen oder kupfernen Farbe der unteren Elektrodenschicht bei angelegter Spannung.

Vorzugsweise beträgt der Pigmentierungsgrad und/oder der Volumenanteil des Farbstoffs der schaltbaren Schicht 30 weniger als 15 %, bevorzugt weniger als 10 %, weiter bevorzugt weniger als 5 %. Vorzugsweise handelt es sich bei dem Farbstoff der schaltbaren Schicht 30 um einen löslichen Farbstoff oder um unlösliche Nanopartikel.

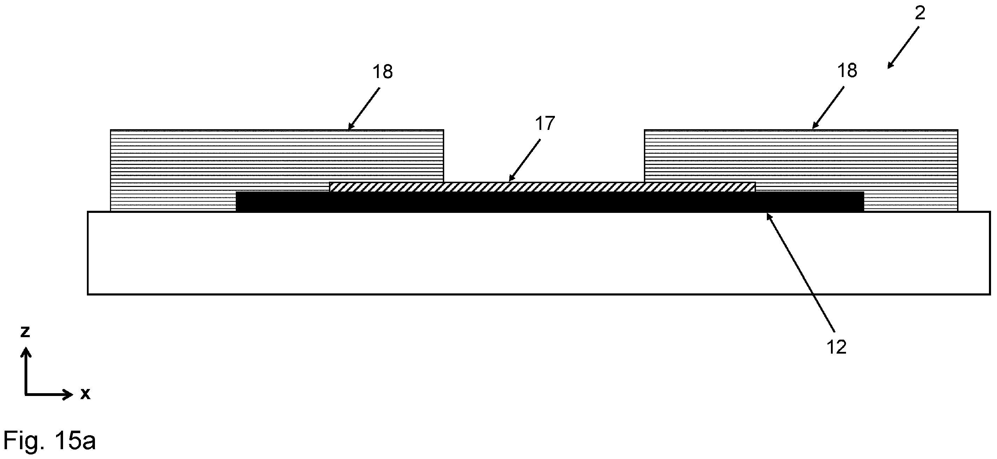

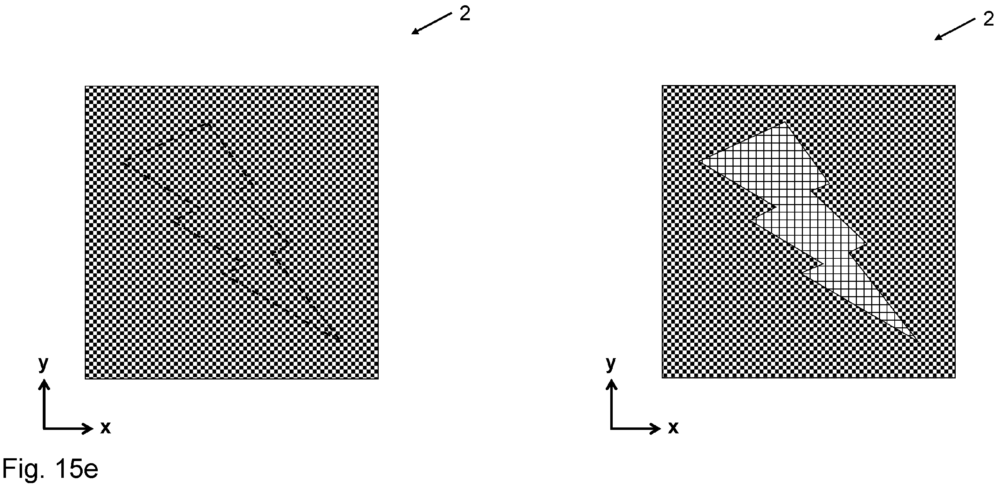

Fig. 15a bis 15e zeigen eine weitere Ausführungsform eines erfindungsgemäßen Funktionselements 2 beispielsweise nach Fig. 1. Diese Ausführungsform beschreibt das Funktionselement 2 bevorzugt als Sensorelement. Das Funktionselement 2 bzw. Sensorelement kann beispielsweise in einem Sensor als Produkt verwendet werden. Die Funktionsweise des Funktionselements 2 ist beispielsweise der Nachweis einer spezifischen Substanz. Fig. 15a bis 15d zeigen schematische Schnittdarstellungen verschiedener möglicher Ausführungsformen eines erfindungsgemäßen Funktionselements 2 und Fig. 15e zeigt eine schematische Aufsicht auf das Funktionselement vor (links) und während und/oder nach (rechts) dem Kontakt mit der nachzuweisenden Substanz.

Auch hier weist das Funktionselement 2 zumindest eine erste Reliefstruktur 13 in zumindest einem ersten Bereich 21 auf. Die zumindest eine erste Reliefstruktur 13 ist der Einfachheit halber in Fig. 15a bis 15d nicht dargestellt. Weiter ist in zumindest einem Teilbereich der ersten Reliefstruktur 13 eine Metallschicht 12 angeordnet und optional in zumindest einem Teilbereich der Metallschicht 12 eine bevorzugt polymere Sensorschicht 17 auf der Seite der Metallschicht 12, welche dem Betrachter zugewandt ist, angeordnet. Insbesondere die Region des vorstehenden Teilbereichs, die mit dem die nachzuweisende Substanz aufweisende Medium in Kontakt gebracht wird, bildet den Sensorbereich. Die Sensorschicht 17 verändert hierbei ihren Brechungsindex und/oder Absorptionskoeffizienten, wenn sie in Kontakt mit einer ausreichenden Menge der nachzuweisenden Substanz kommt. Dies führt zu einer für das menschliche Auge wahrnehmbaren Veränderung des Farbeindrucks. Aufgrund der erhöhten Absorption des Farbstoffes an der Oberfläche der zumindest einen Metallschicht 12 mit der ersten Reliefstruktur 13 ist diese Veränderung des Farbeindrucks bereits bei relativ niedrigen Konzentrationen der nachzuweisenden Substanz erkennbar. Der Verstärkungsmechanismus wird plasmonenverstärkte Absorption bezeichnet. Die für das menschliche Auge wahrnehmbare Veränderung des Farbeindrucks ist hierbei deutlich größer im Vergleich zu einer Metallschicht 12 mit der Sensorschicht 17, welche keine zumindest eine erste Reliefstruktur 13 aufweist.

Dieses variable Absorptionsverhalten kann reversibel oder auch irreversibel sein.

Optional kann noch eine bevorzugt dielektrische Kontrastschicht 18 vorgesehen sein, die Teilbereiche des Sensors, welche dem Betrachter zugewandt ist, überdeckt, und in welchen sowohl die zumindest eine erste Reliefstruktur 13, die Metallschicht 12 sowie die Sensorschicht 17 angeordnet ist. Die Funktion dieser Kontrastschicht 18 ist es, die überdeckten Teilbereiche der Sensorschicht 17 von dem Kontakt mit der nachzuweisenden Substanz zu schützen, damit diese Bereiche nicht die, durch die nachzuweisenden Substanz ausgelöste, Änderung des Farbeindrucks zeigen. Für das menschliche Auge ist so der Kontrast zwischen diesen verschiedenen Bereichen besonders gut wahrnehmbar.

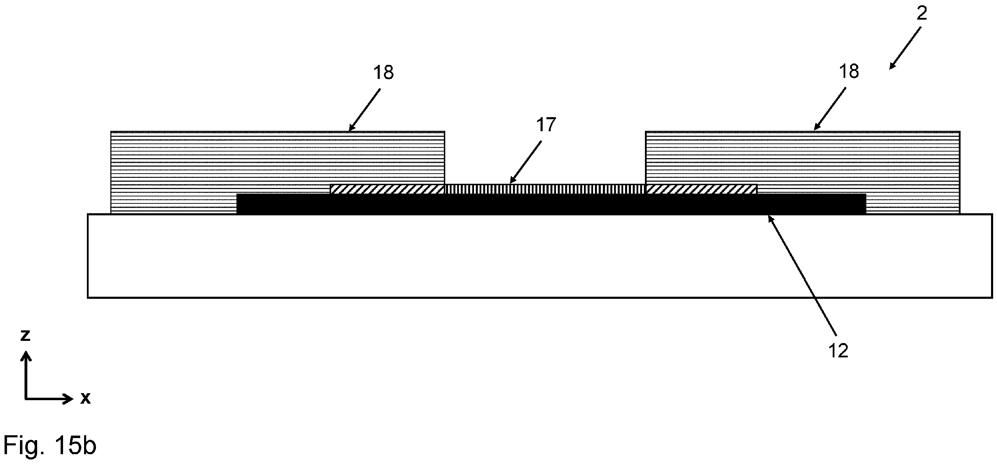

Fig. 15a zeigt das Sensorelement 2 vor und Fig. 15b während und/oder nach Kontakt mit der nachzuweisenden Substanz. Bevorzugt weist die Kontrastschicht 18 einen Brechungsindex auf, welcher nahe an dem Brechungsindex des Mediums ist, welches die nachzuweisende Substanz beinhaltet. Der Brechungsindex der Kontrastschicht 18 unterscheidet sich bevorzugt um bis zu $\pm 10 \%$, weiter bevorzugt um bis zu $\pm 5 \%$, und noch weiter bevorzugt um bis zu $\pm 2 \%$ von dem Brechungsindex des Mediums, welches die nachzuweisende Substanz beinhaltet. Soll beispielsweise die nachzuweisende Substanz in Wasser (Brechungsindex $n_{H2O} \approx 1{,}33$) gelöst nachgewiesen werden, so sind Teflon (Brechungsindex $n_{Teflon} \approx 1{,}31$), PVDF Polyvinylidenfluorid (Brechungsindex $n_{PVDF} \approx 1{,}42$) oder auch Magnesiumfluorid $MgF_2$ (Brechungsindex $n_{MgF2} \approx 1{,}38$) mögliche Materialien für die Kontrastschicht 18.

Fig. 15e zeigt die Sensorfunktion in einer schematischen Aufsicht, wobei hier die Kontrastschicht 18 so ausgestaltet ist, dass Bereiche der Sensorschicht 17 in Form eines Blitzes nicht bedeckt sind. Das auf der linken Seite der Fig. 15e dargestellte Funktionselement 2 zeigt den Zustand, bevor das Funktionselement 2 in Kontakt mit der nachzuweisen Substanz kommt. Der Blitz ist nicht oder nahezu nicht erkennbar. Das auf der rechten Seite der Fig. 15e dargestellte Funktionselement 2 zeigt den Zustand, während das Funktionselement 2 in Kontakt mit der nachzuweisenden Substanz ist. Der Blitz ist aufgrund der Veränderung des Farbeindrucks klar erkennbar.

Beispielsweise kann die Sensorschicht 17 aus einem Farbstoff, eingebettet in eine Polymermatrix, bestehen. Als Farbstoffe zum Beispiel für pH-Sensoren eignen sich Methylorange, Bromthymolblau oder Phenolphthalein. Sie zeigen in wässriger Lösung verschiedene Farben in Abhängigkeit vom pH-Wert. Phenolphthalein beispielsweise ist transparent für pH-Werte kleiner als 8 und wird magentafarben ab pH-Werten von 9. Bei einem sehr hohen pH-Wert nahe 14 wird es wieder farblos. Bei einem ganz niedrigen pH-Wert kleiner als Null färbt sich der Indikator rotorange.

Je nach Sensorschicht 17 bzw. Farbstoff in der Sensorschicht 17 können verschiedene Substanzen, ob gasförmig oder flüssig, nachgewiesen werden. Gasförmiges $NO_2$ beispielsweise reagiert mit Perylen und ändert den komplexen Brechungsindex dieses Materials, was bei ausreichender Konzentration des Gases zu einer Änderung des Farbeindrucks des Funktionselements 2 führt. Perylen kann beispielsweise mittels eines PECVD-Prozesses direkt auf die Metallschicht 12 aufgebracht sein.

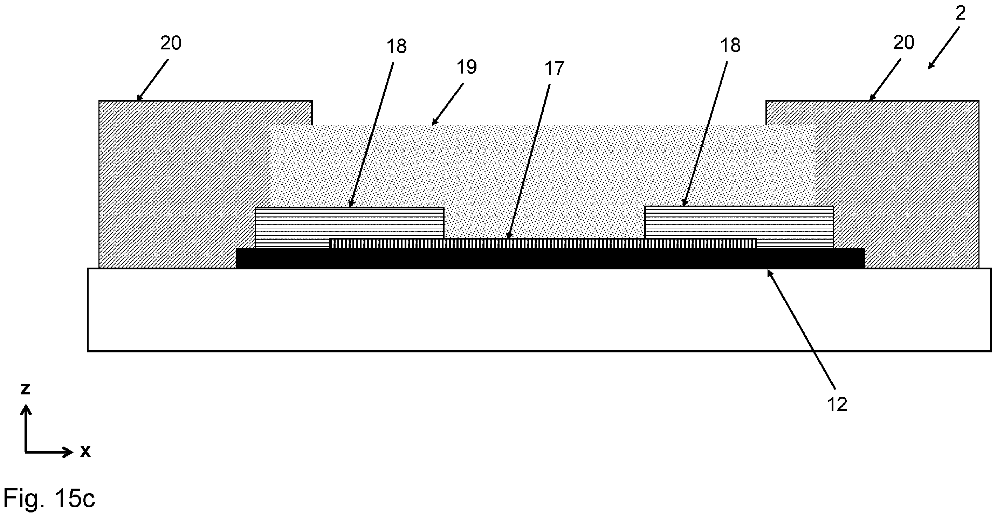

Fig. 15c zeigt eine Ausgestaltungsform des Funktionselements 2 für einen Sensor, bei der zusätzlich zumindest auf dem Sensorbereich eine filternde transparente, insbesondere eine offenporige, Schicht 19 aufgebracht ist. Mit anderen Worten ist oberhalb der Seite der Sensorschicht 17, welche dem Betrachter zugewandt ist, eine filternde transparente, insbesondere eine offenporige, Schicht 19 angeordnet. Diese filternde Schicht 19 ist für die in dem Medium vorhandene nachzuweisende Substanz durchlässig und verhindert, dass andere in dem Medium vorhandene Substanzen die Sensorschicht 17 erreichen. Dies ermöglicht es, ungewollte Reaktionen der Sensorschicht 17 mit ebenfalls im Medium vorhandenen anderen Substanzen zu reduzieren oder zu verhindern. Optional ist noch eine, bevorzugt polymere, Versiegelungsschicht 20 im Randbereich des Funktionselements 2 vorgesehen, welche verhindert, dass das Medium an den Rändern des Funktionselements 2 austritt.

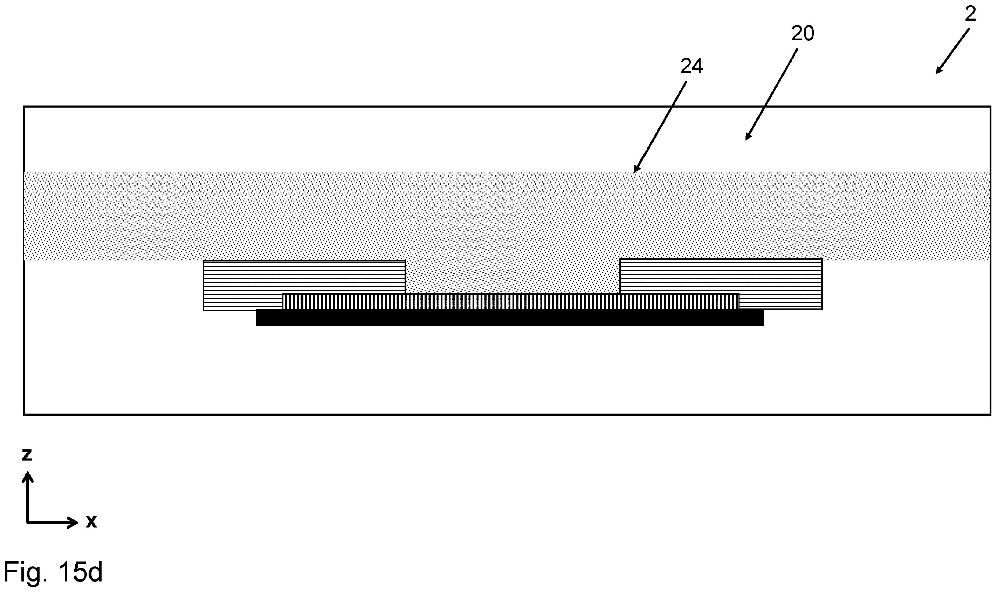

Fig 15d zeigt eine weitere Ausgestaltungsform, bei der das Medium durch einen vertikal verlaufenden Kanal 24 zu dem Sensorbereich geleitet wird. Der Kanal 24 kann in Form einer Mikrofluidik ausgebildet sein. Der Kanal 24 kann optional mit einer weiteren bevorzugt polymeren Versieglungsschicht 20 versiegelt sein. Bevorzugt ist die Versieglungsschicht 20 transparent ausgebildet.

Die Herstellung eines Funktionselementes 2, insbesondere eines Sensorelements, kann wie folgt realisiert werden. Die zumindest eine erste Reliefstruktur 13 kann mittels bekannter Methoden wie holographische Zweistrahlbelichtung oder mittels e-Beam-Lithographie auf einem Glassubstrat erstellt werden. Ein Nickelshim mit der zumindest einen ersten Reliefstruktur 13 kann hiervon nach bekanntem Stand der Technik mittels eines galvanischen Kopiervorgangs gewonnen werden. Der Nickelshim kann nach bekannten Verfahren vervielfältig werden und anschliessend die zumindest eine erste Reliefstruktur 13 in Rolle-zu-Rolle Verfahren, beispielsweise thermischer Replikation oder UV-Replikation, in flexibler Folie produziert werden.

Unter anderem kann es für ein Funktionselement 2, bevorzugt für ein Sensorelement, vorteilhaft sein, wenn die zumindest eine erste Reliefstruktur 13 auf einem starren Substrat, beispielsweise einem Glassubstrat oder einem Quarzsubstrat, realisiert wird. Dies erleichtert das Handling von beispielsweise flüssigen Medien. Hierfür kann die zumindest eine erste Reliefstruktur 13 von dem Nickelshim in einem UV-Kopierprozess direkt auf das starre Substrat, beispielsweise Glassubstrat oder Quarzsubstrat, kopiert werden. Bekannte Prozesse dafür verwenden sogenannte Solgel-Materialien, wie beispielsweise Ormocer, welche in flüssiger Form auf das starre Substrat, aufgebracht werden. Anschließend wird der Nickelshim auf das starre Substrat, beispielsweise das Glassubstrat oder das Quarzsubstrat, aufgelegt, so dass ein dünner Film des Solgel-Materials zwischen dem starren Substrat und dem Nickelshim verbleibt. Danach erfolgt die Härtung des Solgel-Materials mittels UV-Strahlung durch das starre Substrat, beispielsweise Glassubstrat oder Quarzsubstrat, hindurch sowie die Ablösung des Nickel-Shims. Auf die Oberfläche der gehärteten Solgel-Schicht mit der zumindest einen ersten Reliefstruktur 13 kann anschließend die Metallschicht 12 aus dem Vakuum aufgedampft oder gesputtert werden. Auf die Metallschicht 12 kann danach die Sensorschicht 17, beispielsweise mittels Spin-Coating, als dünne Schicht aufgebracht werden.

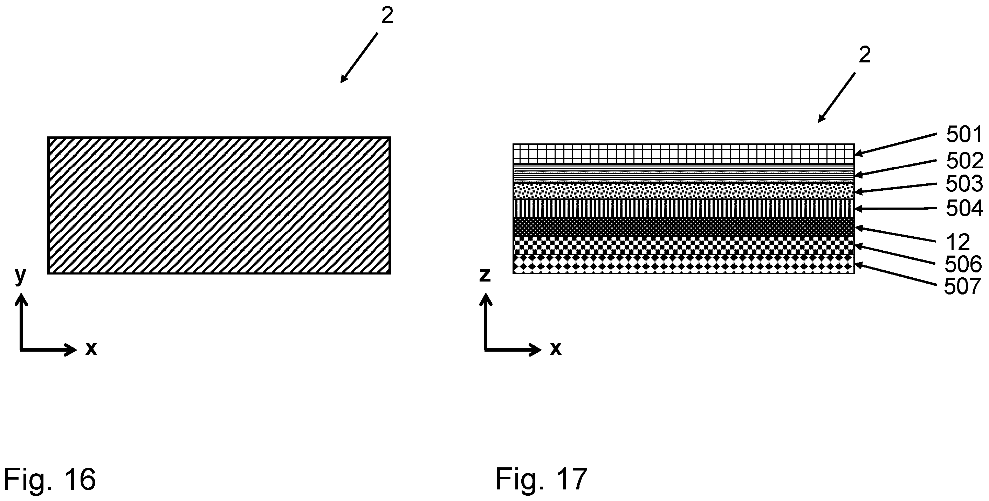

In Fig. 16 und 17 ist eine weitere schematische Ausführungsform eines Funktionselements 2 gezeigt. Diese Ausführungsform beschreibt eine Transferfolie als Funktionselement 2. Das Funktionselement 2 nach Fig. 16 und 17 kann die Ausgestaltungsformen wie unter Fig. 1 beschrieben aufweisen. Fig. 17 zeigt die schematische Schnittdarstellung der Transferfolie. Fig. 16 zeigt die schematische Draufsicht auf die Transferfolie, wobei die Trägerschicht 501 bereits von der Transferschicht abgezogen wurde, so dass die zumindest eine erste Reliefstruktur 13 vollflächig die dem Betrachter zugewandte Seite ausbildet.

Die Transferfolie weist eine Trägerschicht 501 und eine von der Trägerschicht 501 ablösbare Transferschicht auf. Die Trägerschicht 501 kann eine Trennschicht 502 aufweisen. Auf der Trägerschicht 501 sind ein oder mehrere weitere der folgenden Schichten, vorzugsweise in folgender Reihenfolge angeordnet, wobei sie bevorzugt die Transferschicht bilden: eine Ablöseschicht 503, eine Replizierschicht 504 umfassend die zumindest eine erste Reliefstruktur 13, eine Metallschicht 12, eine Primerschicht 506 und eine Kleberschicht 507.

Die Trägerschicht 501 besteht bevorzugt aus Polyester, weiter bevorzugt aus PET, und die Trennschicht 502 vorzugsweise aus Wachs. Die Metallschicht 12 ist bevorzugt aus Aluminium gebildet und wurde vorzugsweise aufgedampft. Weiter ist die zumindest eine erste Reliefstruktur 13 des Funktionselements 2 bevorzugt vollflächig in der Replizierschicht 504 angeordnet. Der zumindest eine erste Bereich 21 ist in Betrachtungsrichtung senkrecht auf die von der Replizierschicht 504 aufgespannten Ebene, insbesondere vollflächig, in der Transferschicht angeordnet.

Typische Verfahren für das Übertragen der Transferschicht sind beispielsweise das Heißprägeverfahren und das Kaltprägeverfahren.

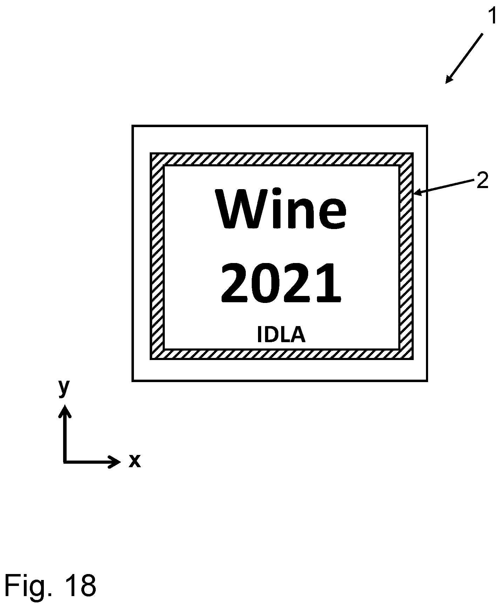

Fig. 18 zeigt eine Ausführungsform eines Produkts 1 umfassend ein Funktionselement 2. Diese Ausführungsform beschreibt beispielsweise ein Flaschenetikett einer Weinflasche. Das Flaschenetikett umfasst ein Papieretikett zum Aufkleben auf eine Flasche. Als Dekorlage enthält das Etikett einen auf das Papieretikett heißgeprägten Dekorrahmen aus der in Fig. 16 und 17 beschriebenen Transferfolie. Das Übertragen der Transferschicht erfolgt mittels Heißprägeverfahren oder Kaltprägeverfahren. Die Trägerschicht 501 kann nach dem Übertragen der Transferschicht abgezogen werden. Zusätzlich weist das in Fig. 18 gezeigte Flaschenetikett weitere Dekorelemente, die auf das Flaschenetikett geprägt wurden, auf. Das Wort "Wine" ist beispielsweise mittels einer handelsüblichen Goldfolie auf das Papieretikett geprägt und die Jahreszahl "2021" ist beispielsweise mit einer handelsüblichen "Silberfolie" geprägt.

Unter einer Silberfolie wird bevorzugt eine aluminisierte Folie ohne diffraktive bzw. refraktive Strukturen verstanden. Derartige Folien werden auch als Spiegelfolien bezeichnet. Weiter wird unter Goldfolie bevorzugt eine aluminisierte Folie ohne diffraktive bzw. refraktive Strukturen verstanden, welche in Betrachtungsrichtung auf der Aluminiumschicht angeordnet eine zusätzliche bevorzugt gelb lasierte Schicht aufweist.

Weiterhin wurde beispielhaft das Wort "IDLA" mittels einer aluminisierten Transferfolie mit diffraktiven Mattstrukturen geprägt. Solche Folien ähneln den in Fig. 16 und 17 beschriebenen Folien, wobei anstelle der erfindungsgemäßen Reliefstruktur vorstehend bereits beschriebene Mattstrukturen zum Einsatz kommen.

Zusätzlich können auf dem Etikett Drucke aufgebracht sein, die neben, unter oder über den beprägten Bereichen angeordnet sein können.

Der in Fig. 18 dargestellte Dekorrahmen umfassend das erfindungsgemäße Funktionselement kann zwei Funktionen erfüllen. Einerseits stellt er ein dekoratives Element dar, welches einen interessanten, blickwinkelabhängigen Farbwechsel aufweist. Andererseits dient er gleichzeitig als Sicherheitselement zum Schutz vor Fälschungen.

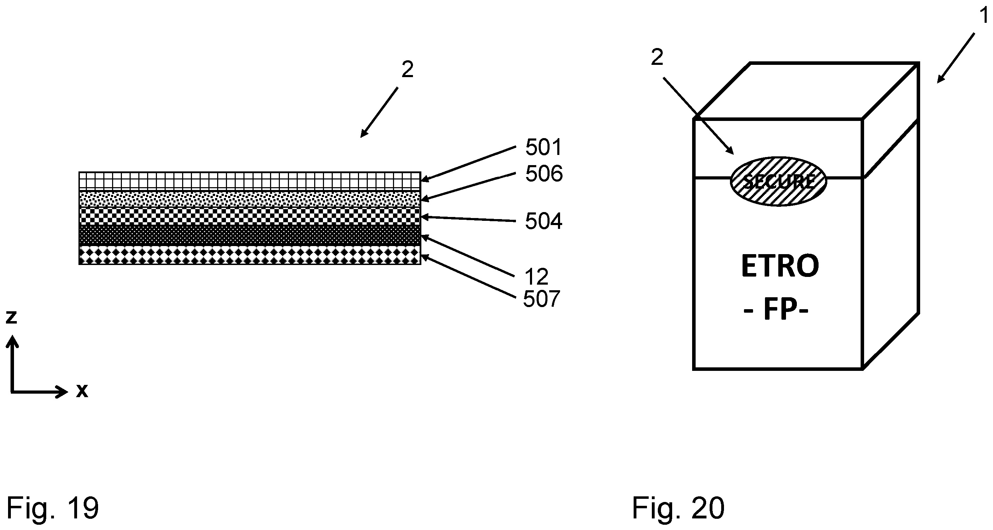

Fig. 19 zeigt den Schichtenaufbau eines erfindungsgemäßen Funktionselements als Labelfolie und/oder Laminierfolie. Die Labelfolie und/oder Laminierfolie weist eine oder mehrere der folgenden Schichten, vorzugsweise in folgender Reihenfolge auf: eine Trägerschicht 501, eine Primerschicht 506, eine Replizierschicht 504 umfassend die zumindest eine erste Reliefstruktur 13, eine Metallschicht 12 und eine Kleberschicht 507.

Die Trägerschicht 501 besteht bevorzugt aus Polyester, weiter bevorzugt aus PET und die Kleberschicht 507 ist bevorzugt eine Kaltkleberschicht. Die Metallschicht 12 besteht bevorzugt aus Aluminium und wurde vorzugsweise aufgedampft. Weiter ist die zumindest eine erste Reliefstruktur 13 bevorzugt vollflächig in der Replizierschicht 504 angeordnet.

In Fig. 20 ist eine weitere beispielhafte Ausführungsform eines Produkts umfassend ein Funktionselement 2 gezeigt. Diese Ausführungsform zeigt beispielsweise ein Label auf Basis der in Fig. 19 beschriebenen Labelfolie und/oder Laminierfolie auf einer Verpackung beispielsweise für Pharmazieprodukte. Das in Fig. 20 gezeigte Label ist im oberen Bereich der Verpackung bereichsweise über dem aufklappbaren Deckel und dem unteren Bereich der Verpackung angebracht. Auf die Labelfolie und/oder Laminierfolie ist weiter beispielsweise der Schriftzug "SECURE" gedruckt und zusätzlich ist ein Schriftzug "ETRO - PF -" mittels einer handelsüblichen Silberfolie auf die Verpackung geprägt.

Das in Fig. 20 auf der Verpackung angeordnete Label kann die wesentlichen Aspekte eines Sicherheitselements und eines Dekorelements erfüllen. So weist es einen blickwinkelabhängigen Farbwechsel auf und lenkt die Aufmerksamkeit des Betrachters auf sich. Dieser kann dann leicht erkennen, ob die Verpackung bereits geöffnet wurde. Weiter bietet das Label auch Schutz vor Fälschungen.

Selbstverständlich können die vorstehend aufgeführten Ausführungsvarianten der Funktionselemente 2 oder Produkte 1, beliebig miteinander kombiniert werden und stellen keine Limitierung, insbesondere in ihrer Formgebung und Kombination, dar.

Bezugszeichenliste

| | |
|---|---|
| 1 | Produkt |
| 2 | Funktionselement |
| 10 | Trägersubstrat |
| 11 | Fensterbereich |
| 12 | Metallschicht |
| 13 | erste Reliefstruktur |
| 14 | lasierende Lackschicht |
| 15 | zweite Reliefstruktur |
| 16 | dritte Reliefstruktur |
| 17 | Sensorschicht |
| 18 | Kontrastschicht |
| 19 | filternde Schicht |
| 20 | Versiegelungsschicht |
| 21, 211, 212 | erster Bereich |
| 22 | zweiter Bereich |

| 23 | dritter Bereich |
| 24 | Kanal |
| 30 | schaltbare Schicht |
| 100 | Lichtquelle |
| 200 | Einstrahlwinkel |
| 300 | Ausstrahlwinkel |
| 400 | Normale der Grundfläche |
| 501 | Trägerschicht |
| 502 | Trennschicht |
| 503 | Ablöseschicht |
| 504 | Replizierschicht |
| 506 | Primerschicht |
| 507 | Kleberschicht |

**Patentansprüche**

1. Funktionselement (2) umfassend zumindest eine erste Reliefstruktur (13) in zumindest einem ersten Bereich (21) und zumindest eine in zumindest einem Teilbereich der zumindest einen ersten Reliefstruktur (13) angeordnete Metallschicht (12), wobei optional eine bevorzugt polymere dielektrische Schicht auf der Seite der Metallschicht (12), welche dem Betrachter zugewandt ist, angeordnet ist,

   wobei die zumindest eine erste Reliefstruktur (13) eine periodische Variation in x- und y-Richtung von Erhebungen und Vertiefungen aufweist,
   wobei die Erhebungen mit einer Gitterperiode $\Lambda$ aufeinander abfolgen, welche kleiner als eine Wellenlänge des für das menschliche Auge sichtbaren Lichts ist,
   wobei die Minima der Vertiefungen eine Grundfläche definieren und wobei die zumindest eine erste Reliefstruktur (13) eine Relieftiefe t aufweist,
   wobei in dem zumindest einen ersten Bereich (21) bei einem ersten Einfallswinkel ein erster Farbeindruck und bei einem zweiten Einfallswinkel ein zweiter Farbeindruck, entsteht,
   wobei der erste Einfallswinkel ausgewählt ist aus einem Bereich von 0° bis 30°,
   wobei bei einem dritten Einfallswinkel im zumindest einen ersten Bereich (21) ein vom ersten und zweiten Farbeindruck unterschiedlicher optischer Effekt entsteht, wobei der dritte Einfallswinkel einen Wert von 60° oder mehr aufweist, und wobei für einen Einfallswinkel im Bereich von 0° bis 30° der zumindest eine erste Bereich (21) eine um mindestens 10 % niedrigere Reflexion des eingestrahlten Lichts in mindestens 75 % des Wellenlängenbereichs von 400 nm bis 500 nm im Vergleich zur Reflexion in mindestens 75 % des Wellenlängenbereichs von 525 nm bis 700 nm aufweist,
   und/oder
   wobei auf zumindest einem Teilbereich der Metallschicht (12) eine bevorzugt polymere Sensorschicht (17) auf der Seite der Metallschicht (12), welche dem Betrachter zugewandt ist, angeordnet ist, wobei in der Sensorschicht (17) ein Farbstoff und/oder ein Lumineszenzstoff angeordnet ist.

2. Funktionselement (2) nach Anspruch 1,
   **dadurch gekennzeichnet,**

   **dass** der zweite Farbeindruck in Abhängigkeit vom Azimutwinkel generiert wird, und insbesondere wobei das Funktionselement (2) zumindest einen ersten Bereich (21) aufweist, dessen Azimutwinkel um mindestens 15°, bevorzugt um 30° und weiter bevorzugt um 45°, zu dem Azimutwinkel eines weiteren ersten Bereichs (21) gedreht ist, und/oder
   **dass** die periodische Variation der zumindest einen ersten Reliefstruktur (13) zumindest bereichsweise mit einer zufälligen und/oder pseudo-zufälligen Variation überlagert ist,
   und/oder
   **dass** die periodische Variation der zumindest einen ersten Reliefstruktur (13) zumindest bereichsweise auf eine Mikrostruktur, insbesondere mit Fresnel-Linsen, Fresnel-Freiformflächen, Mikrospiegeln, Blazegittern oder Computer-Generierte Hologramm (CGH)-Strukturen, überlagert ist,
   und/oder
   **dass** die zumindest eine erste Reliefstruktur (13) als ein Kreuzgitter und/oder als ein hexagonales Gitter oder als ein komplexeres 2D-Gitter, ausgebildet ist.

3. Funktionselement (2) nach Anspruch 1,
**dadurch gekennzeichnet,**

**dass** für die Werte der Gitterperiode $\Lambda$ der zumindest einen ersten Reliefstruktur (13) in x- Richtung und/oder y-Richtung $\Lambda < 300$ nm, bevorzugt $\Lambda \leq 280$ nm, bevorzugt $\Lambda \leq 260$ nm, gilt,
und/oder
**dass** die Werte der Gitterperiode $\Lambda$ der zumindest einen ersten Reliefstruktur (13) in x-Richtung und/oder y-Richtung ausgewählt aus einem Bereich von 150 nm bis 260 nm, bevorzugt von 180 nm bis 250 nm, sind,
und/oder
**dass** für die Werte der Relieftiefe t der zumindest einen ersten Reliefstruktur (13) in x-Richtung und/oder y-Richtung $t < 0,7 \Lambda$, bevorzugt $t \leq 0,6 \Lambda$, gilt,
und/oder
**dass** für die Werte der Relieftiefe t der zumindest einen ersten Reliefstruktur 13 in x-Richtung und/oder y-Richtung $t > 0,2 \Lambda$, bevorzugt $t \geq 0,3 \Lambda$, gilt.

4. Funktionselement (2) nach einem der vorstehenden Ansprüche, **dadurch gekennzeichnet,**

**dass** die Profilform der zumindest einen ersten Reliefstruktur (13) kontinuierlich oder stufenweise variiert ist, und/oder
**dass** die Profilform der zumindest einen ersten Reliefstruktur (13) in x-Richtung und/oder y-Richtung asymmetrisch ausgestaltet ist, und/oder
**dass** die Breite der Erhebungen und Vertiefungen der zumindest einen ersten Reliefstruktur (13) bezogen auf einen Abstand von t/2 von der Grundfläche mindestens 60 % der Gitterperiode, bevorzugt mindestens 70 % der Gitterperiode und/oder höchstens 40 % der Gitterperiode, bevorzugt höchstens 30 % der Gitterperiode, beträgt, und/oder
**dass** oberhalb und/oder unterhalb der zumindest einen ersten Reliefstruktur (13) eine Polymerschicht angeordnet ist, vorzugsweise aus einem Polymer welches einen Brechungsindex im Bereich von 1,45 bis 1,55 aufweist, und insbesondere wobei die Polymerschicht vollflächig oder bereichsweise auf der zumindest einen ersten Reliefstruktur (13) aufgebracht ist.

5. Funktionselement (2) nach einem der vorstehenden Ansprüche, **dadurch gekennzeichnet,**

**dass** der zumindest eine erste Bereich (21) eine um mindestens 15 % niedrigere Reflexion des eingestrahlten Lichts in mindestens 90 % des Wellenlängenbereichs von 400 nm bis 500 nm im Vergleich zur Reflexion in mindestens 90 % des Wellenlängenbereichs von 525 nm bis 700 nm aufweist und noch weiter bevorzugt, dass der zumindest eine erste Bereich (21) eine um mindestens 20 % niedrigere Reflexion des eingestrahlten Lichts in mindestens 90 % des Wellenlängenbereichs von 400 nm bis 500 nm im Vergleich zur Reflexion in mindestens 90 % des Wellenlängenbereichs von 525 nm bis 700 nm aufweist, und/oder
**dass** der zumindest eine erste Bereich (21) eine Reflexion des eingestrahlten Lichts in mindestens 90 % des Wellenlängenbereichs von 525 nm bis 700 nm größer als 30 %, bevorzugt größer als 40 %, bevorzugt größer als 50 %, aufweist.

6. Funktionselement (2) nach einem der vorstehenden Ansprüche, **dadurch gekennzeichnet,**

**dass** in dem zumindest einen ersten Bereich (21), vorzugsweise bereichsweise oder vollflächig, ein Farbstoff und/oder ein Lumineszenzstoff angeordnet ist, bevorzugt weniger als 1 $\mu$m, weiter bevorzugt weniger als 750 nm, noch weiter bevorzugt weniger als 500 nm, ferner noch weiter bevorzugt weniger als 300 nm weit von einer der Oberflächen der zumindest einen Metallschicht entfernt angeordnet ist,
und/oder
**dass** der Farbstoff und/oder der Lumineszenzstoff in der bevorzugt polymeren dielektrischen Schicht angeordnet sind.

7. Funktionselement (2) nach einem der vorstehenden Ansprüche, **dadurch gekennzeichnet,**

**dass** das Funktionselement (2) zumindest einen dritten Bereich (23) aufweist, wobei in dem zumindest einen dritten Bereich (23) zumindest eine dritte Reliefstruktur (16) ausgebildet ist, insbesondere wobei die zumindest eine dritte Reliefstruktur (16) eine Gitterperiode $\Lambda$ von weniger als 500 nm und mehr als 300 nm und einer Relieftiefe t von mehr als 150 nm aufweist,

und/oder

**dass** der zumindest eine erste Bereich (21) derart gestaltet ist, dass er mindestens in zwei, bevorzugt mindestens drei, bevorzugt mindestens fünf Zonen, angeordnet ist, insbesondere wobei die Zonen zumindest teilweise mehr als 300 μm, bevorzugt zumindest 1000 μm, in x-Richtung und/oder y-Richtung voneinander entfernt angeordnet sind.

8. Funktionselement (2) nach einem der vorstehenden Ansprüche, **dadurch gekennzeichnet,**
   **dass** die ersten, zweiten oder dritten Bereiche (21, 22, 23) als eine Vielzahl von Pixeln angeordnet sind, wobei die Pixel rund, quadratisch, hexagonal, motivförmig oder auch in anderer zusammenhängender Form ausgestaltet sind und/oder eine langgestreckte Form, insbesondere eine Linienform, aufweisen, insbesondere wobei oberhalb des zumindest einen ersten Bereichs (21) eine Vielzahl von Mikrolinsen rasterförmig angeordnet sind, insbesondere wobei eine lasierende Farbschicht (14) zumindest bereichsweise unterhalb der Vielzahl an Mikrolinsen angeordnet ist, insbesondere wobei das Raster der Mikrolinsen mehrere Mikrolinsen-Teilraster aufweist, bevorzugt wobei innerhalb eines Mikrolinsen-Teilrasters die Mikrolinsen als Zylinderlinsen in einer eindimensionalen Anordnung der Mikrolinsen angeordnet sind oder Mikrolinsen mit einer jeweils sphärischen oder angenäherten sphärischen oder asphärischen Form in einer zweidimensionalen Anordnung der Mikrolinsen angeordnet sind.

9. Funktionselement (2) nach einem der vorstehenden Ansprüche, **dadurch gekennzeichnet,**

   **dass** der zumindest eine erste Bereich (21) in einer ersten Elektrodenschicht angeordnet ist, insbesondere wobei oberhalb der ersten Elektrodenschicht eine schaltbare Schicht (30), bevorzugt eine elektrochrome Schicht oder eine Flüssigkristallschicht oder eine PDLC-Schicht, und oberhalb der ersten Elektrodenschicht und/oder der schaltbaren Schicht (30) eine zweite Elektrodenschicht angeordnet ist,
   insbesondere wobei die schaltbare Schicht (30) einen Farbstoff aufweist und/oder eingefärbt ist, insbesondere wobei der Pigmentierungsgrad und/oder der Volumenanteil des Farbstoffs der schaltbaren Schicht (30) weniger als 15 %, bevorzugt weniger als 10 %, weiter bevorzugt weniger als 5 %, beträgt.

10. Funktionselement (2) nach einem der vorstehenden Ansprüche, **dadurch gekennzeichnet,**

    **dass** eine bevorzugt dielektrische Kontrastschicht (18) bereichsweise, von einem Betrachter ausgesehen, oberhalb der bevorzugt polymeren Sensorschicht (17) angeordnet ist, und/oder
    wobei das Funktionselement (2) weiter eine filternde transparente, insbesondere eine offenporige, Schicht (19) aufweist, welche, von einem Betrachter aus gesehen, oberhalb der bevorzugt polymeren Sensorschicht (17) angeordnet ist,
    und/oder
    wobei der Farbstoff und/oder den Lumineszenzstoff ein auf äußere Einflüsse variable reagierendes Absorptionsverhalten aufweist, insbesondere wobei auf äußere Einflüsse reagierende variable Farbstoffe und/oder Lumineszenzstoffe chromogene Materialien sind, welche ihre Farbe oder ihre Transparenz je nach Temperatur, Lichteinfall, elektrische Spannung und/oder Strom sowie bei Druck verändern.

11. Funktionselement (2) nach einem der vorstehenden Ansprüche, **dadurch gekennzeichnet,**
    **dass** zumindest bereichsweise oder vollflächig in Blickrichtung eines Betrachters, insbesondere senkrecht auf die von dem Funktionselement (2) aufgespannte Ebene, unterhalb dem zumindest einen ersten Bereich (21) und/oder zweiten Bereich (22) und/oder dritten Bereich (23) zumindest eine lasierende Farbschicht, insbesondere vollflächig oder partiell, angeordnet ist.

12. Funktionselement (2) nach Anspruch 11,
    **dadurch gekennzeichnet,**

    **dass** die zumindest eine lasierende Farbschicht direkt an die Metallschicht (12) angrenzt oder durch eine dielektrische Zwischenschicht von der Metallschicht (12) beabstandet ist, und/oder
    **dass** die zumindest eine lasierende Farbschicht, insbesondere in direkter Reflexion über einen Kippwinkelbereich von bevorzugt mindestens 0° bis 30° zur Normalen und/oder über einen Kippwinkelbereich von bevorzugt mindestens 30° bis 60° zur Normalen, insbesondere im CIELAB-Farbraum einen Gesamtfarbstand dE von 50 bis 270, bevorzugt von 100 bis 270, weiter bevorzugt von 130 bis 270, zu dem zumindest einen ersten und/oder zu dem zweiten und/oder zu dem dritten Bereich (21, 22, 23) aufweist,
    und/oder
    **dass** die zumindest eine lasierende Farbschicht, insbesondere in direkter Reflexion über einen Kippwinkelbereich von bevorzugt mindestens 0° bis 30° zur Normalen und/oder über einen Kippwinkelbereich von bevorzugt mindestens 30° bis 60° zur Normalen, eine dunklere Farbe, insbesondere mit einem niedrigeren Helligkeitswert L, und der zumindest eine erste und/oder zweite und/oder dritte Bereich (21, 22, 23) eine hellere Farbe, insbesondere mit einem höheren Helligkeitswert L, aufweist,

und/oder

**dass** die zumindest eine lasierende Farbschicht, insbesondere in direkter Reflexion über einen Kippwinkelbereich von bevorzugt mindestens 0° bis 30° zur Normalen und/oder über einen Kippwinkelbereich von bevorzugt mindestens 30° bis 60° zur Normalen, eine hellere Farbe, insbesondere mit einem höheren Helligkeitswert L, und der zumindest eine erste und/oder zweite und/oder dritte Bereich (21, 22, 23) eine dunklere Farbe, insbesondere mit einem niedrigeren Helligkeitswert L, aufweist.

13. Funktionselement (2) nach einem der vorstehenden Ansprüche, **dadurch gekennzeichnet,**

**dass** der zumindest eine erste Bereich (21) und/oder der zumindest eine zweite Bereich (22), insbesondere in direkter Reflexion über einen Kippwinkelbereich von bevorzugt mindestens 0° bis 30° zur Normalen und/oder über einen Kippwinkelbereich von bevorzugt mindestens 30° bis 60° zur Normalen, insbesondere im CIELAB-Farbraum einen Gesamtfarbstand dE von 50 bis 270, bevorzugt von 100 bis 270, weiter bevorzugt von 130 bis 270, zu dem zumindest einen dritten Bereich (23) aufweisen,

und/oder

**dass** der zumindest eine erste Bereich (21) und/oder der zumindest eine zweite Bereich (22), insbesondere in direkter Reflexion über einen Kippwinkelbereich von bevorzugt mindestens 0° bis 30° zur Normalen und/oder über einen Kippwinkelbereich von bevorzugt mindestens 30° bis 60° zur Normalen, eine hellere Farbe, insbesondere mit einem höheren Helligkeitswert L, bevorzugt im Vergleich zu dem zumindest einen dritten Bereich (23), aufweist.

14. Funktionselement (2) nach einem der vorstehenden Ansprüche, **dadurch gekennzeichnet,**

**dass** der zumindest eine erste Bereich (21) in Teilbereichen derart angeordnet, dass die Teilbereiche eine Vielzahl von rasterförmig angeordneten Mikrobildern oder Moiré-Icons ergeben, insbesondere wobei die Mikrobilder oder Moiré-Icons im Register zu der Vielzahl von rasterförmig angeordneten Mikrolinsen angeordnet sind, und/oder

**dass** das Raster der Mikrobilder oder Moiré-Icons mehrere Teilraster aufweist, wobei innerhalb eines Teilrasters die Mikrobilder oder Moiré-Icons in einer eindimensionalen Anordnung der Mikrobilder oder Moiré-Icons angeordnet sind oder in einer zweidimensionalen Anordnung der Mikrobilder oder Moiré-Icons angeordnet sind, und/oder

**dass** die Mikrobilder oder Moiré-Icons innerhalb eines Teilrasters so ausgebildet sind, dass pro Teilraster ein zu dem Teilraster zugeordneter optischer Effekt entsteht, bevorzugt wobei mehrere Teilraster unterschiedliche optische Effekte erzeugen, die gemeinsam in dem Raster der Mikrobilder oder Moiré-Icons einen kombinierten optischen Effekt ergeben oder nebeneinander vorliegende separate optische Effekte ergeben,

und/oder

**dass** die Mikrobilder oder Moiré-Icons für unterschiedliche optische Effekte pro Teilraster insbesondere unterschiedlich ausgebildete und/oder eine unterschiedliche Anzahl von zumindest einen ersten Bereichen (21) und/oder zumindest einen zweiten Bereichen (22) und/oder zumindest einen dritten Bereichen (23) und/oder zumindest einen lasierenden Farbschichten vor und/oder hinter den zumindest einen ersten Bereichen (21) und/oder zumindest einen zweiten Bereichen (22) und/oder zumindest einen dritten Bereichen (23) aufweisen.

15. Verfahren zur Herstellung eines Funktionselements (2) nach Anspruch 1 bis 14 oder insbesondere zur Modifizierung einer Oberfläche durch ein Funktionselement (2) nach Anspruch 1 bis 14, wobei in zumindest einem ersten Bereich (21) des Funktionselements zumindest eine erste Reliefstruktur (13) angeordnet wird und zumindest in zumindest einem Teilbereich der zumindest einen ersten Reliefstruktur (13) eine Metallschicht (12) angeordnet wird und optional eine bevorzugt polymere dielektrische Schicht auf der Seite der Metallschicht (12), welche dem Betrachter zugewandt ist, angeordnet wird,

so dass die zumindest eine erste Reliefstruktur (13) eine periodische Variation in x- und y-Richtung von Erhebungen und Vertiefungen aufweist,

und die Erhebungen mit einer Gitterperiode $\Lambda$ aufeinander abfolgen, welche kleiner als eine Wellenlänge des für das menschliche Auge sichtbaren Lichts ist,

und so dass die Minima der Vertiefungen eine Grundfläche definieren und die zumindest eine erste Reliefstruktur (13) eine Relieftiefe t aufweist,

wobei in dem zumindest einen ersten Bereich (21) bei einem ersten Einfallswinkel ein erster Farbeindruck und bei einem zweiten Einfallswinkel ein zweiter Farbeindruck, entsteht,

wobei der erste Einfallswinkel ausgewählt ist aus einem Bereich von 0° bis 30°,

wobei bei einem dritten Einfallswinkel im zumindest einen ersten Bereich (21) ein vom ersten und zweiten Farbeindruck unterschiedlicher optischer Effekt entsteht,

wobei der dritte Einfallswinkel einen Wert von 60° oder mehr aufweist,

und wobei für einen Einfallswinkel im Bereich von 0° bis 30° der zumindest eine erste Bereich (21) eine um mindestens 10 % niedrigere Reflexion des eingestrahlten Lichts in mindestens 75 % des Wellenlängenbereichs von 400 nm bis 500 nm im Vergleich zur Reflexion in mindestens 75 % des Wellenlängenbereichs von 525 nm bis 700 nm aufweist,

und/oder

wobei auf zumindest einem Teilbereich der Metallschicht (12) eine bevorzugt polymere Sensorschicht (17) auf der Seite der Metallschicht (12), welche dem Betrachter zugewandt ist, angeordnet ist, wobei in der Sensorschicht (17) ein Farbstoff und/oder ein Lumineszenzstoff angeordnet ist.

16. Verfahren nach Anspruch 15,
**dadurch gekennzeichnet,**

**dass** oberhalb der einem Betrachter zugewandten Seite der zumindest einen ersten Reliefstruktur (13) eine Polymerschicht angeordnet wird, insbesondere wobei die Polymerschicht vollflächig oder bereichsweise auf der zumindest einen ersten Reliefstruktur (13) angeordnet wird,
und/oder

**dass** in dem zumindest einen ersten Bereich (21), vorzugsweise bereichsweise oder vollflächig, ein Farbstoff und/oder ein Lumineszenzstoff angeordnet wird, bevorzugt weniger als 1 μm, weiter bevorzugt weniger als 750 nm, noch weiter bevorzugt weniger als 500 nm, ferner noch weiter bevorzugt weniger als 300 nm, weit von einer der Oberflächen der zumindest einen Metallschicht (12) entfernt angeordnet wird,
und/oder

**dass** oberhalb und/oder unterhalb der zumindest einen Metallschicht (12) eine dielektrische Schicht aufgedruckt oder aufgedampft wird, und wobei insbesondere der Farbstoff und/oder der Lumineszenzstoff in der bevorzugt polymeren dielektrischen Schicht angeordnet werden,
und/oder

**dass** zumindest bereichsweise oder vollflächig zumindest eine lasierende Farbschicht angeordnet wird, wobei die zumindest eine lasierende Farbschicht, insbesondere in Blickrichtung eines Betrachters senkrecht auf die von dem Funktionselement aufgespannte Ebene, unterhalb dem zumindest einen ersten Bereich und/oder zweiten Bereich und/oder dritten Bereich zumindest eine lasierende Farbschicht, insbesondere vollflächig oder partiell, angeordnet wird.

17. Produkt (1), insbesondere ein Sicherheitsdokument oder eine dekorierte Oberfläche, umfassend ein Funktionselement (2) nach einem der Ansprüche 1 bis 14,

wobei das Produkt (1) insbesondere eine Banknote, ein ID-Dokument, ein Etikett zur Produktsicherung oder zur Dekoration, eine ID-Karte, eine oder Kreditkarte, eine Geldkarte, ein Hang-Tag eines kommerziellen Produkts oder ein Zertifikat, insbesondere Software-Zertifikat, eine Verpackung, ein Bauteil für stationäre und/oder mobile Geräte, ein Spritzgussbauteil, ein direkt strukturiertes Aluminiumbauteil, ein Kraftfahrzeug, eine Dekorleiste, ein Farbfilter, ein Sensor, ein optisches Bauteil oder eine Lichtsteuerung ist.

**Claims**

1. Functional element (2) comprising at least one first relief structure (13) in at least one first region (21) and at least one metallic layer (12) arranged in at least one partial region of the at least one first relief structure (13),

wherein a preferably polymeric dielectric layer is optionally arranged on the side of the metallic layer (12), which faces towards the observer,

wherein the at least one first relief structure (13) has a periodic variation in the x- and y-directions of elevations and indentations,

wherein the elevations follow one another with a grating period A which is smaller than a wavelength of the light visible to the human eye,

wherein the minima of the indentations define a base area and wherein the at least one first relief structure (13) has a relief depth t,

wherein, in the at least one first region (21), a first colour impression emerges with a first angle of incidence and a second colour impression with a second angle of incidence,

wherein the first angle of incidence is selected from a range of from 0° to 30°,

wherein, with a third angle of incidence, an optical effect different to the first and second colour impression emerges in at least one first region (21), wherein the third angle of incidence has a value of 60° or more,

and wherein for an angle of incidence in the range of from 0° to 30°, the at least one first region (21) has a reflection, lower by at least 10%, of the irradiated light in at least 75% of the wavelength range of from 400nm to 500nm in comparison to the reflection in at least 75% of the wavelength range of from 525nm to 700nm,

and/or

wherein a preferably polymeric sensor layer (17) on the side of the metallic layer (12), which faces towards the observer, is arranged on at least one partial region of the metallic layer (12), wherein a dye and/or luminescent material is arranged in the sensor layer (17).

2. Functional element (2) according to claim 1,
   **characterised in that**

   **the second** colour impression is generated depending on the azimuth angle, and in particular wherein the functional element (2) has at least one first region (21), the azimuth angle of which is rotated by at least 15°, preferably by 30° and further preferably by 45° in relation to the azimuth angle of a further first region (21), and/or
   the periodic variation of the at least one first relief structure (13) is superimposed at least regionally with an incidental and/or pseudo-incidental variation,
   and/or
   the periodic variation of the at least one first relief structure (13) is superimposed at least regionally onto a microstructure, in particular with Fresnel lenses, Fresnel free-form surfaces, micro-mirrors, blazed gratings or computer-generated hologram (CGH) structures,
   and/or
   the at least one first relief structure (13) is formed as a cross grating and/or as a hexagonal grating or as a more complex 2D grating.

3. Functional element (2) according to claim 1,
   **characterised in that**,

   for the values of the grating period A of the at least one first relief structure (13) in the x-direction and/or y-direction, it applies that A < 300 nm, preferably A $\leq$ 280 nm, preferably A $\leq$ 260 nm,
   and/or
   the values of the grating period A of the at least one first relief structure (13) in the x-direction and/or y-direction are selected from a range of from 150 nm to 260 nm, preferably from 180 nm to 250 nm,
   and/or,
   for the values of the relief depth t of the at least one first relief structure (13) in the x-direction and/or y-direction, it applies that t < 0.7 A, preferably t $\leq$ 0.6 A, and/or,
   for the values of the relief depth t of the at least one first relief structure 13 in the x-direction and/or y-direction, it applies that t > 0.2 A, preferably t $\geq$ 0.3.

4. Functional element (2) according to one of the preceding claims,
   **characterised in that**

   the profile shape of the at least one first relief structure (13) is varied continuously or incrementally,
   and/or
   the profile shape of the at least one first relief structure (13) is formed asymmetrically in the x-direction and/or y-direction,
   and/or
   the width of the elevations and indentations of the at least one first relief structure (13) based on a spacing of t/2 apart from the base area is at least 60% of the grating period, preferably at least 70% of the grating period and/or at most 40% of the grating period, preferably at most 30% of the grating period,
   and/or
   a polymer layer is arranged above and/or below the at least one first relief structure (13), preferably made of a polymer which has a refraction index ranging from 1.45 to 1.55, and in particular wherein the polymer layer is applied over the entire surface or regionally on the at least one first relief structure (13).

5. Functional element (2) according to one of the preceding claims,
**characterised in that**

the at least one first region (21) has a reflection, lower by at least 15%, of the irradiated light in at least 90% of the wavelength range of from 400 nm to 500 nm in comparison to the reflection in at least 90% of the wavelength range of from 525 nm to 700 nm, and further preferably the at least one first region (21) has a reflection, lower by at least 20%, of the irradiated light in at least 90% of the wavelength range of from 400 nm to 500 nm in comparison to the reflection in at least 90% of the wavelength range of from 525 nm to 700 nm,
and/or
the at least one first region (21) has a reflection of the irradiated light in at least 90% of the wavelength range of from 525 nm to 700 nm greater than 30%, preferably greater than 40%, preferably greater than 50%.

6. Functional element (2) according to one of the preceding claims,
**characterised in that**,

in the at least one first region (21), preferably regionally or over the entire surface, a dye and/or a luminescent material is arranged, preferably is arranged less than 1 $\mu$m, further preferably less than 750 nm, further preferably still less than 500 nm, yet further preferably still less than 300 nm removed from one of the surfaces of the at least one metallic layer,
and/or
the dye and/or the luminescent material are arranged in the preferably polymeric dielectric layer.

7. Functional element (2) according to one of the preceding claims,
**characterised in that**

the functional element (2) has at least one third region (23), wherein, in the at least one third region (23), at least one third relief structure (16) is formed, in particular wherein the at least one third relief structure (16) has a grating period A of less than 500 nm and more than 300 nm and a relief depth t of more than 150 nm,
and/or
the at least one first region (21) is formed in such a way that it is arranged at least in two, preferably at least three, preferably at least five zones, in particular wherein the zones are arranged at least partially removed from one another by more than 300 $\mu$m, preferably at least 1000 $\mu$m, in the x-direction and/or y-direction.

8. Functional element (2) according to one of the preceding claims,
**characterised in that**
the first, second or third regions (21, 22, 23) are arranged as a plurality of pixels, wherein the pixels are formed to be round, quadratic, hexagonal, in the form of a motif or also in a different cohesive shape, and/or have an elongated shape, in particular a linear shape, in particular wherein a plurality of micro-lenses are arranged in a grid above the at least one first region (21), in particular wherein a glazing dye (14) is arranged at least regionally below the plurality of micro-lenses, in particular wherein the grid of the micro-lenses has several micro-lens partial grids, preferably wherein the micro-lenses are arranged inside a micro-lens partial grid as cylinder lenses in a one-dimensional arrangement of the micro-lenses, or micro-lenses with a respectively spherical or approximate spherical or aspherical shape are arranged in a two-dimensional arrangement of the micro-lenses.

9. Functional element (2) according to one of the preceding claims,
**characterised in that**

the at least one first region (21) is arranged in a first electrode layer, in particular wherein a switchable layer (30), preferably an electrochromic layer or a liquid crystal layer or a PDLC layer, is arranged above the first electrode layer, and a second electrode layer is arranged above the first electrode layer and/or the switchable layer (30), in particular wherein the switchable layer (30) has a dye and/or is dyed, in particular wherein the degree of pigmentation and/or the proportion by volume of the dye of the switchable layer (30) is less than 15%, preferably less than 10%, further preferably less than 5%.

10. Functional element (2) according to one of the preceding claims,

**characterised in that**

a preferably dielectric contrast layer (18) is arranged regionally, when seen by an observer, above the preferably polymeric sensor layer (17),

and/or

wherein the functional element (2) further has a filtering transparent, in particular an open-pored, layer (19), which, when seen by an observer, is arranged above the preferably polymeric sensor layer (17),

and/or

wherein the dye and/or the luminescent material has an absorption behaviour reacting variably to external influences, in particular wherein variable dyes and/or luminescent material reacting to external influences are chromogenic materials, which change their colour or their transparency depending on temperature, incidence of light, electric voltage and/or current and under pressure.

11. Functional element (2) according to one of the preceding claims,
**characterised in that**
at least one lasering coloured layer is arranged, in particular over the entire surface or partially, at least regionally or over the entire surface in the viewing direction of an observer, in particular perpendicular to the plane spanned by the functional element (2), below the at least one first region (21) and/or second region (22) and/or third region (23).

12. Functional element (2) according to claim 11,
**characterised in that**

the at least one lasering coloured layer directly adjoins the metallic layer (12) or is spaced apart from the metallic layer (12) by a dielectric intermediary layer, and/or

the at least one lasering coloured layer, in particular in direct reflection via a tilting angle range of preferably at least 0° to 30° in relation to the normal and/or via a tilting angle range of preferably at least 30° to 60° to the normal, in particular in the CIELAB colour space, has an overall colour level dE of from 50 to 270, preferably from 100 to 270, further preferably from 130 to 270, in relation to the at least one first and/or to the second and/or to the third region (21, 22, 23),

and/or

the at least one lasering coloured layer, in particular in direct reflection via a tilting angle range of preferably at least 0° to 30° to the normal and/or via a tilting angle range of preferably at least 30° to 60° to the normal, has a darker colour, in particular with a lower brightness value L, and the at least one first and/or second and/or third region (21, 22, 23) has a lighter colour, in particular with a higher brightness value L,

and/or

the at least one lasering colour layer, in particular in direct reflection via a tilting angle range of preferably at least 0° to 30° to the normal and/or via a tilting angle range of preferably at least 30° to 60° to the normal, has a lighter colour, in particular with a higher brightness value L, and the at least one first and/or second and/or third region (21, 22, 23) has a darker colour, in particular with a lower brightness value L.

13. Functional element (2) according to one of the preceding claims,
**characterised in that**

the at least one first region (21) and/or the at least one second region (22), in particular in direct reflection via a tilting angle range of preferably at least 0° to 30° to the normal and/or via a tilting angle range of preferably at least 30° to 60° to the normal, in particular in the CIELAB colour space, have an overall colour level dE of from 50 to 270, preferably from 100 to 270, further preferably from 130 to 270, in relation to the at least one third region (23),

and/or

the at least one first region (21) and/or the at least one second region (22), in particular in direct reflection via a tilting angle range of preferably at least 0° to 30° to the normal and/or via a tilting angle range of preferably at least 30° to 60° to the normal, has a lighter colour, in particular with a higher brightness value L, preferably in comparison to the at least one third region (23).

14. Functional element (2) according to one of the preceding claims, **characterised in that**

the at least one first region (21) is arranged in partial regions in such a way that the partial regions result in a plurality of micro-images or Moiré icons arranged in the shape of a grid, in particular wherein the micro-images or Moiré icons are arranged in register to the plurality of micro-lenses arranged in the shape of a grid,

and/or

the grid of the micro-images or Moiré icons has several partial grids, wherein the micro-images or Moiré icons are arranged in a one-dimensional arrangement of the micro-images or Moiré icons inside a partial grid or are arranged in a two-dimensional arrangement of the micro-images or Moiré icons,

and/or

the micro-images or Moiré icons are formed inside a partial grid in such a way that an optical effect allocated to the partial grid emerges per partial grid, preferably wherein several partial grids generate different optical effects, which together in the grid of the micro-images or Moiré icons result in a combined optical effect or result in separate optical effects present one next to the other,

and/or,

for different optical effects per partial grid, the micro-images or Moiré icons have, in particular, differently formed and/or a different number of at least one first regions (21) and/or at least one second regions (22) and/or at least one third regions (23) and/or at least one lasering coloured layers in front of and/or behind the at least one first regions (21) and/or at least one second regions (22) and/or at least one third regions (23).

15. Method for producing a functional element (2) according to claim 1 to 14 or in particular for modifying a surface using a functional element (2) according to claim 1 to 14, wherein, in at least one first region (21) of the functional element, at least one first relief structure (13) is arranged, and at least in at least one partial region of the at least one first relief structure (13), a metallic layer (12) is arranged, and optionally a preferably polymeric dielectric layer is arranged on the side of the metallic layer (12) which is facing towards the observer,

such that the at least one first relief structure (13) has a periodic variation in the x- and y-direction of elevations and indentations,

and the elevations follow one another with a grating period A which is smaller than a wavelength of the light visible to the human eye,

and such that the minima of the indentations define a base area, and the at least one first relief structure (13) has a relief depth t,

wherein, in the at least one first region (21), with a first angle of incidence, a first colour impression and, with a second angle of incidence, a second colour impression emerges, wherein the first angle of incidence is selected from a range of from 0° to 30°,

wherein, with a third angle of incidence, an optical effect different to the first and second colour impression emerges in the at least one first region (21),

wherein the third angle of incidence has a value of 60° or more,

and wherein, for an angle of incidence ranging from 0° to 30°, the at least one first region (21) has a reflection, lower by at least 10%, of the irradiated light in at least 75% of the wavelength range of from 400 nm to 500 nm in comparison to the reflection in at least 75% of the wavelength range of from 525 nm to 700 nm,

and/or

wherein a preferably polymeric sensor layer (17) is arranged on the side of the metallic layer (12), which faces towards the observer, on at least one partial region of the metallic layer (12), wherein a dye and/or a luminescent material is arranged in the sensor layer (17).

16. Method according to claim 15,
**characterised in that**

a polymer layer is arranged above the side of the at least one first relief structure (13) facing towards an observer, in particular wherein the polymer layer is arranged over the entire surface or regionally on the at least one first relief structure (13),

and/or,

in the at least one first region (21), preferably regionally or over the entire surface, a dye and/or a luminescent material is arranged, preferably is arranged less than 1 µm, further preferably less than 750 nm, further preferably still less than 500 nm, yet further preferably still less than 300 nm removed from one of the surfaces of the at least one metallic layer (12),

and/or

a dielectric layer is printed or vapour deposited above and/or below the at least one metallic layer (12), and wherein in particular the dye and/or the luminescent material are arranged in the preferably polymeric dielectric layer,

and/or

at least one lasering colour layer is arranged at least regionally or over the entire surface, wherein the at least one lasering coloured layer is arranged below the at least one first region and/or second region and/or third region at least one lasering colour layer in particular over the entire surface or partially, in particular in the viewing direction of an observer perpendicular to the plane spanned by the functional element.

17. Product (1), in particular a security document or a decorated surface, comprising a functional element (2) according to one of claims 1 to 14,

wherein the product (1) is, in particular, a banknote, an ID document, a label for product protection or for decoration, an ID card, an or credit card, a bank card, a hang tag for a commercial product or a certificate, in particular software certificate, packaging, a component for stationary and/or mobile devices, an injection moulded part, a directly structured aluminium component, a motor vehicle, a decorative strip, a colour filter, a sensor, an optical component or a light controller.

**Revendications**

1. Élément fonctionnel (2) comprenant au moins une première structure en relief (13) dans au moins une première région (21) et au moins une couche métallique (12) disposée dans au moins une sous-région de l'au moins une première structure en relief (13),

dans lequel, facultativement, une couche diélectrique de préférence polymère est disposée sur le côté de la couche métallique (12) qui est orienté vers l'observateur,

dans lequel l'au moins une première structure en relief (13) présente une variation périodique dans les directions x et y de bosses et de creux,

dans lequel les bosses se succèdent avec une période de réseau ^, laquelle est inférieure à une longueur d'onde de la lumière visible pour l'œil humain,

dans lequel les minima des creux définissent une surface de base et dans lequel l'au moins une première structure en relief (13) présente une profondeur de relief t,

dans lequel dans l'au moins une première région (21) une première impression de couleur se produit à un premier angle d'incidence et une deuxième impression de couleur à un deuxième angle d'incidence,

dans lequel le premier angle d'incidence est choisi dans une plage de 0° à 30°,

dans lequel un effet optique différent de la première et deuxième impression de couleur se produit dans l'au moins une première région (21) à un troisième angle d'incidence, dans lequel le troisième angle d'incidence présente une valeur de 60° ou plus,

et dans lequel, pour un angle d'incidence dans la plage de 0° à 30°, l'au moins une première région (21) présente une réflexion de la lumière rayonnée inférieure d'au moins 10 % dans au moins 75 % de la plage de longueurs d'onde de 400 nm à 500 nm par rapport à la réflexion dans au moins 75 % de la plage de longueurs d'onde de 525 nm à 700 nm, et/ou

dans lequel, sur au moins une sous-région de la couche métallique (12), une couche de capteur (17) de préférence polymère est disposée sur le côté de la couche métallique (12) qui est orienté vers l'observateur, dans lequel un colorant et/ou une substance luminescente est disposé(e) dans la couche de capteur (17).

2. Élément fonctionnel (2) selon la revendication 1,
**caractérisé en ce**

**que** la deuxième impression de couleur est générée en fonction de l'angle d'azimut, et en particulier dans lequel l'élément fonctionnel (2) présente au moins une première région (21) dont l'angle d'azimut est tourné d'au moins 15°, de préférence de 30° et de manière davantage préférée de 45°, par rapport à l'angle d'azimut d'une autre première région (21), et/ou

**que** la variation périodique de l'au moins une première structure en relief (13) est superposée au moins par endroits à une variation aléatoire et/ou pseudo-aléatoire, et/ou

**que** la variation périodique de l'au moins une première structure en relief (13) est superposée au moins par endroits sur une microstructure, en particulier avec des lentilles de Fresnel, des surfaces de forme libre de Fresnel, des micromiroirs, des réseaux blasés ou des structures d'hologramme généré par ordinateur (CGH), et/ou

**que** l'au moins une première structure en relief (13) est réalisée en tant que réseau en croix et/ou en tant que réseau hexagonal ou en tant que réseau 2D plus complexe.

3. Élément fonctionnel (2) selon la revendication 1,

**caractérisé en ce**

**que** pour les valeurs de la période de réseau ^ de l'au moins une première structure en relief (13) dans la direction x et/ou direction y ^ < 300 nm, de préférence A ≤ 280 nm, de préférence ^ ≤ 260 nm, s'applique, et/ou

**que** les valeurs de la période de réseau ^ de l'au moins une première structure en relief (13) dans la direction x et/ou direction y sont sélectionnées dans une plage de 150 nm à 260 nm, de préférence de 180 nm à 250 nm, et/ou

**que** pour les valeurs de la profondeur de relief t, l'au moins une première structure en relief (13) dans la direction x et/ou direction y t < 0,7 ^, de préférence t < 0,6 ^, s'applique, et/ou

**que** pour les valeurs de la profondeur de relief t, l'au moins une première structure en relief 13 dans la direction x et/ou direction y t > 0,2 ^, de préférence t ≥ 0,3 ^, s'applique.

4. Élément fonctionnel (2) selon l'une quelconque des revendications précédentes, **caractérisé en ce**

**que** la forme de profil de l'au moins une première structure en relief (13) est modifiée de manière continue ou progressive, et/ou

**que** la forme de profil de l'au moins une première structure en relief (13) est conçue de manière asymétrique dans la direction x et/ou direction y, et/ou

**que** la largeur des bosses et des creux de l'au moins une première structure en relief (13) par rapport à une distance de t/2 de la surface de base est d'au moins 60 % de la période de réseau, de préférence d'au moins 70 % de la période de réseau et/ou de maximum 40 % de la période de réseau, de préférence de maximum 30 % de la période de réseau, et/ou

**qu'**une couche polymère est disposée au-dessus et/ou en dessous de l'au moins une première structure en relief (13), de préférence en un polymère lequel présente un indice de réfraction dans la plage de 1,45 à 1,55, et en particulier dans lequel la couche polymère est appliquée sur toute la surface ou par endroits sur l'au moins une première structure en relief (13).

5. Élément fonctionnel (2) selon l'une quelconque des revendications précédentes, **caractérisé en ce**

**que** l'au moins une première région (21) présente une réflexion de la lumière rayonnée inférieure d'au moins 15 % dans au moins 90 % de la plage de longueurs d'onde de 400 nm à 500 nm par rapport à la réflexion dans au moins 90 % de la plage de longueurs d'onde de 525 nm à 700 nm et idéalement que l'au moins une première région (21) présente une réflexion de la lumière rayonnée inférieure d'au moins 20 % dans au moins 90 % de la plage de longueurs d'onde de 400 nm à 500 nm par rapport à la réflexion dans au moins 90 % de la plage de longueurs d'onde de 525 nm à 700 nm, et/ou

**que** l'au moins une première région (21) présente une réflexion de la lumière rayonnée dans au moins 90 % de la plage de longueurs d'onde de 525 nm à 700 nm supérieure à 30 %, de préférence supérieure à 40 %, de préférence supérieure à 50 %.

6. Élément fonctionnel (2) selon l'une quelconque des revendications précédentes, **caractérisé en ce**

**qu'**un colorant et/ou une substance luminescente est disposé(e) dans l'au moins une première région (21), de préférence par endroits ou sur toute la surface, de préférence est disposé(e) à moins de 1 μm, de manière davantage préférée à moins de 750 nm, encore plus préférentiellement à moins de 500 nm, idéalement à moins de 300 nm d'une des surfaces de l'au moins une couche métallique, et/ou

**que** le colorant et/ou la substance luminescente sont disposés dans la couche diélectrique de préférence polymère.

7. Élément fonctionnel (2) selon l'une quelconque des revendications précédentes, **caractérisé en ce**

**que** l'élément fonctionnel (2) présente au moins une troisième région (23), dans lequel au moins une troisième structure en relief (16) est réalisée dans l'au moins une troisième région (23), en particulier dans lequel l'au moins une troisième structure en relief (16) présente une période de réseau ^ inférieure à 500 nm et supérieure à 300 nm et une profondeur de relief t supérieure à 150 nm, et/ou

**que** l'au moins une première région (21) est configurée de telle sorte qu'elle est disposée de manière répartie au moins en deux, de préférence au moins trois, de préférence au moins cinq zones, en particulier dans lequel les zones sont disposées éloignées les unes des autres dans la direction x et/ou direction y au moins en partie de plus de 300 μm, de préférence d'au moins 1000 μm.

8. Élément fonctionnel (2) selon l'une quelconque des revendications précédentes,
**caractérisé en ce**
**que** les première, deuxième ou troisième régions (21, 22, 23) sont disposées en tant que pluralité de pixels, dans lequel les pixels sont de forme ronde, carrée, hexagonale, en forme de motif ou bien sous une autre forme continue et/ou présentent une forme allongée, en particulier une forme linéaire, en particulier dans lequel une pluralité de microlentilles sont disposées en forme de grille au-dessus de l'au moins une première région (21), en particulier dans lequel une couche de couleur translucide (14) est disposée au moins par endroits en dessous de la pluralité de microlentilles, en particulier dans lequel la grille des microlentilles présente plusieurs sous-grilles de microlentilles, de préférence dans lequel, à l'intérieur d'une sous-grille de microlentilles, les microlentilles sont disposées en tant que lentilles cylindriques dans une disposition unidimensionnelle des microlentilles ou les microlentilles sont disposées avec une forme respectivement sphérique ou approximativement asphérique ou asphérique dans une disposition bidimensionnelle des microlentilles.

9. Élément fonctionnel (2) selon l'une quelconque des revendications précédentes,
**caractérisé en ce**

**que** l'au moins une première région (21) est disposée dans une première couche d'électrodes, en particulier dans lequel une couche commutable (30), de préférence une couche électrochrome ou une couche de cristaux liquides ou une couche PDLC, est disposée au-dessus de la première couche d'électrodes, et une deuxième couche d'électrodes au-dessus de la première couche d'électrodes et/ou de la couche commutable (30),
en particulier dans lequel la couche commutable (30) présente un colorant et/ou est colorée, en particulier dans lequel le degré de pigmentation et/ou le pourcentage volumique du colorant de la couche commutable (30) est inférieur à 15 %, de préférence inférieur à 10 %, de manière davantage préférée inférieur à 5 %.

10. Élément fonctionnel (2) selon l'une quelconque des revendications précédentes,
**caractérisé en ce**

**qu'**une couche de contraste (18) de préférence diélectrique est disposée par endroits, vu à partir d'un observateur, au-dessus de la couche de capteur (17) de préférence polymère, et/ou
dans lequel l'élément fonctionnel (2) présente en outre une couche (19) transparente filtrante, en particulier une à pores ouverts, laquelle est disposée, vu à partir d'un observateur, au-dessus de la couche de capteur (17) de préférence polymère, et/ou
dans lequel le colorant et/ou la substance luminescente présente un comportement d'absorption réagissant de façon variable aux influences extérieures, en particulier dans lequel les colorants variables réagissant aux influences extérieures et/ou les substances luminescentes sont des matériaux chromogènes, lesquels modifient leur couleur ou leur transparence en fonction de la température, de l'incidence de la lumière, de la tension électrique et/ou du courant ainsi que de la pression.

11. Élément fonctionnel (2) selon l'une quelconque des revendications précédentes,
**caractérisé en ce**
**qu'**au moins une couche de couleur translucide est disposée, en particulier sur toute la surface ou partiellement, au moins par endroits ou sur toute la surface dans la direction du regard d'un observateur, en particulier perpendiculairement au plan tendu par l'élément fonctionnel (2), en dessous de l'au moins une première région (21) et/ou deuxième région (22) et/ou troisième région (23).

12. Élément fonctionnel (2) selon la revendication 11,
**caractérisé en ce**

**que** l'au moins une couche de couleur translucide est directement adjacente à la couche métallique (12) ou est espacée de la couche métallique (12) par une couche intermédiaire diélectrique, et/ou
**que** l'au moins une couche de couleur translucide, en particulier en réflexion directe sur une plage d'angle d'inclinaison de préférence d'au moins 0° à 30° par rapport à la normale et/ou sur une plage d'angle d'inclinaison de préférence d'au moins 30° à 60° par rapport à la normale, en particulier dans l'espace de couleur CIELAB, présente un écart de couleur total dE de 50 à 270, de préférence de 100 à 270, de manière davantage préférée de 130 à 270, par rapport à l'au moins une première et/ou par rapport à la deuxième et/ou par rapport la troisième région (21, 22, 23) et/ou

**que** l'au moins une couche de couleur translucide, en particulier en réflexion directe sur une plage d'angle d'inclinaison de préférence d'au moins 0° à 30° par rapport à la normale et/ou sur une plage d'angle d'inclinaison de préférence d'au moins 30° à 60° par rapport à la normale, présente une couleur plus foncée, en particulier avec une valeur de luminosité L plus faible, et l'au moins une première et/ou deuxième et/ou troisième région (21, 22, 23) une couleur plus claire, en particulier avec une valeur de luminosité L plus élevée, et/ou

**que** l'au moins une couche de couleur translucide, en particulier en réflexion directe sur une plage d'angle d'inclinaison de préférence d'au moins 0° à 30° par rapport à la normale et/ou sur une plage d'angle d'inclinaison de préférence d'au moins 30° à 60° par rapport à la normale, présente une couleur plus claire, en particulier avec une valeur de luminosité L plus élevée, et l'au moins une première et/ou deuxième et/ou troisième région (21, 22, 23) une couleur plus foncée, en particulier avec une valeur de luminosité L plus faible.

13. Élément fonctionnel (2) selon l'une quelconque des revendications précédentes,
   **caractérisé en ce**

   **que** l'au moins une première région (21) et/ou l'au moins une deuxième région (22), en particulier en réflexion directe sur une plage d'angle d'inclinaison de préférence d'au moins 0° à 30° par rapport à la normale et/ou sur une plage d'angle d'inclinaison de préférence d'au moins 30° à 60° par rapport à la normale, en particulier dans l'espace de couleur CIELAB, présentent un écart de couleur total dE de 50 à 270, de préférence de 100 à 270, de manière davantage préférée de 130 à 270, par rapport à l'au moins une troisième région (23), et/ou

   **que** l'au moins une première région (21) et/ou l'au moins une deuxième région (22), en particulier en réflexion directe sur une plage d'angle d'inclinaison de préférence d'au moins 0° à 30° par rapport à la normale et/ou sur une plage d'angle d'inclinaison de préférence d'au moins 30° à 60° par rapport à la normale, présente une couleur plus claire, en particulier avec une valeur de luminosité L plus élevée, de préférence par rapport à l'au moins une troisième région (23).

14. Élément fonctionnel (2) selon l'une quelconque des revendications précédentes,
   **caractérisé en ce**

   **que** l'au moins une première région (21) est disposée dans des sous-régions de telle sorte que les sous-régions produisent une pluralité de micro-images ou d'icônes de moiré disposées en forme de grille, en particulier dans lequel les micro-images ou icônes de moiré sont disposées en alignement par rapport à la pluralité de microlentilles disposées en forme de grille, et/ou

   **que** la grille des micro-images ou icônes de moiré présente plusieurs sous-grilles, dans lequel, à l'intérieur d'une sous-grille, les micro-images ou icônes de moiré sont disposées dans une disposition unidimensionnelle des micro-images ou icônes de moiré ou sont disposées dans une disposition bidimensionnelle des micro-images ou icônes de moiré, et/ou

   **que** les micro-images ou icônes de moiré sont réalisées à l'intérieur d'une sous-grille de sorte qu'un effet optique associé à la sous-grille est produit par sous-grille, de préférence dans lequel plusieurs sous-grilles génèrent des effets optiques différents qui entraînent ensemble dans la grille des micro-images ou icônes de moiré un effet optique combiné ou entraînent des effets optiques distincts présents côte à côte, et/ou

   **que** les micro-images ou icônes de moiré présentent pour différents effets optiques par sous-grille en particulier réalisées de manière différente et/ou un nombre différent d'au moins une première région (21) et/ou d'au moins une deuxième région (22) et/ou d'au moins une troisième région (23) et/ou d'au moins une couche de couleur translucide devant et/ou derrière les au moins une première région (21) et/ou au moins une deuxième région (22) et/ou au moins une troisième région (23).

15. Procédé de fabrication d'un élément fonctionnel (2) selon la revendication 1 à 14 ou en particulier de modification d'une surface par un élément fonctionnel (2) selon la revendication 1 à 14, dans lequel au moins une première structure en relief (13) est disposée dans au moins une première région (21) de l'élément fonctionnel et une couche métallique (12) est disposée au moins dans au moins une sous-région de l'au moins une première structure en relief (13) et facultativement une couche diélectrique de préférence polymère est disposée sur le côté de la couche métallique (12) qui est orienté vers l'observateur,

   de sorte que l'au moins une première structure en relief (13) présente une variation périodique dans la direction x et y de bosses et de creux,
   et les bosses se succèdent avec une période de réseau ^, laquelle est inférieure à une longueur d'onde de la lumière visible pour l'œil humain,

et de sorte que les minima des creux définissent une surface de base et que l'au moins une première structure en relief (13) présente une profondeur de relief t,

dans lequel dans l'au moins une première région (21) une première impression de couleur se produit à un premier angle d'incidence et une deuxième impression de couleur à un deuxième angle d'incidence,

dans lequel le premier angle d'incidence est choisi dans une plage de 0° à 30°,

dans lequel un effet optique différent de la première et deuxième impression de couleur se produit dans au moins une première région (21) à un troisième angle d'incidence,

dans lequel le troisième angle d'incidence présente une valeur de 60° ou plus,

et dans lequel, pour un angle d'incidence dans la plage de 0° à 30°, l'au moins une première région (21) présente une réflexion de la lumière rayonnée inférieure d'au moins 10 % dans au moins 75 % de la plage de longueurs d'onde de 400 nm à 500 nm par rapport à la réflexion dans au moins 75 % de la plage de longueurs d'onde de 525 nm à 700 nm, et/ou

dans lequel, sur au moins une sous-région de la couche métallique (12), une couche de capteur (17) de préférence polymère est disposée sur le côté de la couche métallique (12) qui est orienté vers l'observateur, dans lequel un colorant et/ou une substance luminescente est disposé(e) dans la couche de capteur (17).

**16.** Procédé selon la revendication 15,
**caractérisé en ce**

qu'une couche polymère est disposée au-dessus du côté de l'au moins une première structure en relief (13) orienté vers un observateur, en particulier dans lequel la couche polymère est disposée sur toute la surface ou par endroits sur l'au moins une première structure en relief (13), et/ou

qu'un colorant et/ou une substance luminescente est disposé(e) dans l'au moins une première région (21), de préférence par endroits ou sur toute la surface, de préférence est disposé(e) à moins de 1 $\mu$m, de manière davantage préférée à moins de 750 nm, encore plus préférentiellement à moins de 500 nm, idéalement à moins de 300 nm, d'une des surfaces de l'au moins une couche métallique (12), et/ou

qu'une couche diélectrique est imprimée ou vaporisée au-dessus et/ou en dessous de l'au moins une couche métallique (12), et dans lequel en particulier le colorant et/ou la substance luminescente sont disposés dans la couche diélectrique de préférence polymère, et/ou

qu'au moins une couche de couleur translucide est disposée au moins par endroits ou sur toute la surface, dans lequel l'au moins une couche de couleur translucide est disposée, en particulier sur toute la surface ou partiellement, en particulier dans la direction du regard d'un observateur perpendiculairement au plan tendu par l'élément fonctionnel, en dessous de l'au moins une première région et/ou deuxième région et/ou troisième région.

**17.** Produit (1), en particulier un document de sécurité ou une surface décorée, comprenant un élément fonctionnel (2) selon l'une quelconque des revendications 1 à 14,

dans lequel le produit (1) est en particulier un billet de banque, un document d'identité, une étiquette de sécurisation de produit ou de décoration, une carte d'identité, une ou carte de crédit, une carte bancaire, une étiquette à fil d'un produit commercial ou un certificat, en particulier un certificat logiciel, un emballage, un composant pour appareils fixes et/ou mobiles, un composant moulé par injection, un composant en aluminium structuré directement, un véhicule automobile, une baguette décorative, un filtre de couleur, un capteur, un composant optique ou une commande d'éclairage.

Fig. 1

EP 4 509 327 B1

Fig. 2

EP 4 509 327 B1

Fig. 3a

Fig. 3b

EP 4 509 327 B1

Fig. 4a

Fig. 4b

Fig. 4c

EP 4 509 327 B1

Fig. 4d

EP 4 509 327 B1

Fig. 5a

Fig. 5b

Fig. 6b

Fig. 6a

56

Fig. 7a

Fig. 7b

EP 4 509 327 B1

Fig. 8a

Fig. 8b

Fig. 8c

EP 4 509 327 B1

Fig. 9

Fig. 10

Fig. 11a

Fig. 11b

EP 4 509 327 B1

Fig. 11c

EP 4 509 327 B1

Fig. 12

Fig. 13

EP 4 509 327 B1

Fig. 14

Fig. 15a

Fig. 15b

Fig. 15c

EP 4 509 327 B1

Fig. 15d

Fig. 15e

Fig. 16

Fig. 17

Fig. 18

EP 4 509 327 B1

Fig. 19

Fig. 20

EP 4 509 327 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014072358 A1
- DE 102007061979 A1
- WO 2019077419 A1
- US 8144399 B2

**In der Beschreibung aufgeführte Nicht-Patentliteratur**

- *J. Mater. Chem. C*, 2013, vol. 1, 2811-2816